(19) 

Europäisches
Patentamt

European
Patent Office

Office européen
des brevets

(11) **EP 4 391 596 A1**

(12) **EUROPEAN PATENT APPLICATION**
published in accordance with Art. 153(4) EPC

(43) Date of publication:
**26.06.2024 Bulletin 2024/26**

(21) Application number: **22874697.0**

(22) Date of filing: **19.09.2022**

(51) International Patent Classification (IPC):
**H04W 4/02** *(2018.01)*

(52) Cooperative Patent Classification (CPC):
**H04W 4/02; H04W 64/00**

(86) International application number:
**PCT/CN2022/119719**

(87) International publication number:
**WO 2023/051310 (06.04.2023 Gazette 2023/14)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **28.09.2021 CN 202111144795**

(71) Applicant: **Huawei Technologies Co., Ltd.
Shenzhen, Guangdong 518129 (CN)**

(72) Inventor: **HUANG, Su
Shenzhen, Guangdong 518129 (CN)**

(74) Representative: **Huawei European IPR
Huawei Technologies Duesseldorf GmbH
Riesstraße 25
80992 München (DE)**

(54) **POSITIONING METHOD AND APPARATUS**

(57) This application discloses a positioning method and an apparatus, and relates to the positioning field, so that a device in a moving state can implement high-precision positioning. The positioning method includes: receiving a first receive-transmit time difference and a displacement vector of a second device, and determining a location of a first device based on the first receive-transmit time difference, the displacement vector of the second device, and a second receive-transmit time difference. The method may be applied to the first device. The first device may determine a transmission distance of a reference signal between the two devices based on the first receive-transmit time difference and the second receive-transmit time difference, and may determine a relative displacement between the two devices based on the displacement vector of the second device. In other words, the first device may perform positioning resolving based on the transmission distance of the reference signal between the two devices and the relative displacement between the two devices. In this way, a parameter that affects positioning precision, that is, the relative displacement between the devices participating in positioning, may be added to positioning resolving, so that a first device in a moving state can be accurately positioned.

FIG. 13

EP 4 391 596 A1

## Description

This application claims priority to Chinese Patent Application No. 202111144795.X, filed with China National Intellectual Property Administration on September 28, 2021 and entitled "POSITIONING METHOD AND APPARATUS", which is incorporated herein by reference in its entirety.

## TECHNICAL FIELD

This application relates to the positioning field, and in particular, to a positioning method and an apparatus.

## BACKGROUND

With rapid development of communication technologies, high-precision positioning is gradually determined as an important research project. Positioning scenarios of a current communication system include: enhanced mobile broadband (enhanced mobile broadband, eMBB) outdoor, eMBB indoor, ultra-reliable low-latency communication (ultra-reliable low-latency communication, URLLC), massive machine type communications (massive machine type communications, mMTC)/internet of things (internet of things, IOT), vehicle-to-everything (vehicular to x, V2X), satellite positioning, and the like. In addition, the communication system is currently required to have features of scalability, high security, high availability, and precision assurance in high-speed applications. As positioning requirements and positioning scenarios are increasingly wide, a requirement for positioning accuracy is increasingly high.

Currently, when user equipment (user equipment, UE) is positioned, a multi-round-trip time (multi-round-trip time, Multi-RTT) technology may be used to implement positioning. When the multi-RTT technology is used for positioning, a location management function (location management function, LMF) network element may obtain a receive-transmit time difference (Rx-Tx time difference) measured by the UE and an access network device (for example, a base station or a satellite) separately. Then, the LMF network element may determine a distance between the UE and the access network device based on the receive-transmit time differences separately measured by the UE and the access network device, to determine a location of the UE. The positioning technology is applicable to a case in which a device (including the UE and the access network device) participating in positioning is in a static state.

However, in scenarios such as V2X and satellite positioning, when UE in these scenarios is positioned by using the foregoing positioning technology, when the device participating in positioning is in a moving state, positioning precision can be reduced, and a requirement for high-precision positioning cannot be met.

## SUMMARY

This application provides a positioning method and an apparatus, so that a device in a moving state can implement high-precision positioning.

To achieve the foregoing objective, this application uses the following technical solutions.

According to a first aspect, this application provides a positioning method. The method may be applied to a first device, and the first device may be, for example, a terminal device. The method includes: receiving a first receive-transmit time difference and a displacement vector of a second device, and determining a location of the first device based on the first receive-transmit time difference, the displacement vector of the second device, and a second receive-transmit time difference. The first receive-transmit time difference is a time difference between receiving time of a first reference signal and sending time of a second reference signal, the first reference signal is a reference signal of the first device received by the second device, the second reference signal is a reference signal sent by the second device, and the displacement vector of the second device is a displacement of the second device in a time period corresponding to the first receive-transmit time difference. The second receive-transmit time difference is a time difference between receiving time of a third reference signal and sending time of a fourth reference signal, the third reference signal is a reference signal of the second device received by the first device, and the fourth reference signal is a reference signal sent by the first device.

With reference to the positioning method in the first aspect, the second aspect, or the fifth aspect, when determining the location of the first device, the first device may perform positioning resolving based on the first receive-transmit time difference, the second receive-transmit time difference, and the displacement vector of the second device. A transmission distance of the reference signal between the first device and the second device may be determined based on the first receive-transmit time difference and the second receive-transmit time difference, and a relative displacement between the first device and the second device may be determined based on the displacement vector of the second device. In other words, the first device may perform positioning resolving based on the transmission distance of the reference signal between the first device and the second device and the relative displacement between the two devices. In this way, a parameter that affects positioning precision, that is, the relative displacement between the devices participating in positioning, may be added to positioning resolving, so that a first device in a moving state can be accurately positioned.

It should be noted that the first reference signal is a reference signal of the first device received by the second device may be understood as that the first reference signal is a reference signal that is received by the second device and that is from the first device, or the first reference signal is a reference signal that is of the first device and that is reflected by another device and that is received by the second device.

That the first device receives a first receive-transmit time difference and a displacement vector of a second device may include: The first device receives the first receive-transmit time difference and the displacement vector of the second device from the second device, or the first device receives the first receive-transmit time difference and the displacement vector of the second device from a third device.

The first receive-transmit time difference and the displacement vector of the second device may be carried in one piece of information, or may be carried in two pieces of information. This is not limited herein. In some possible designs, the determining a location of the first device based on the first receive-transmit time difference, the displacement vector of the second device, and a second receive-transmit time difference may include: determining the location of the first device based on the first receive-transmit time difference, the displacement vector of the second device, the second receive-transmit time difference, and a displacement vector of the first device. In this way, an implementation of determining the relative displacement between the first device and the second device may be provided. For example, the first device may determine the relative displacement between the first device and the second device based on the displacement vector of the second device and the displacement vector of the first device, so that the first device may perform positioning resolving based on the transmission distance of the reference signal between the first device and the second device and the relative displacement between the two devices, so that the first device in the moving state can be accurately positioned.

In some possible designs, the location of the first device is in a first area. A shape of the first area is an ellipsoid or an ellipse, two focal points of the first area are head and tail endpoints of a first vector, a length of a major axis of the first area is a distance corresponding to a sum of the second receive-transmit time difference and the first receive-transmit time difference, and the first vector is a sum of the displacement vector of the first device and the displacement vector of the second device. In other words, the first device is located on an ellipsoid or an ellipsoid that is determined based on the transmission distance of the reference signal between the first device and the second device and the relative displacement between the first device and the second device. In this way, an implementation of determining the location of the first device may be provided. For example, the first device may establish, based on the transmission distance of the reference signal between the first device and the second device and the relative displacement between the two devices, an expression of the first area whose shape is the ellipsoid or the ellipsoid, so that the first device may perform positioning resolving based on the transmission distance of the reference signal between the first device and the second device and the relative displacement between the two devices, so that the first device in the moving state can be accurately positioned.

In two-dimensional space, the shape of the first area may be the ellipse, or may be an ellipse circumference. In three-dimensional space, the shape of the first area may be the ellipsoid, or may be an ellipsoid curved surface. In addition, the ellipsoid is a generalization of the ellipse in three-dimensional space. In some possible designs, a concept of the ellipsoid may include an ellipsoid in three-dimensional space and an ellipse in two-dimensional space. In some cases, the first area may be a part of the ellipsoid or the ellipse. For example, an area whose shape is an ellipsoid or an ellipse may be first determined, and then an improper part in the area is removed by using a radio signal transmission feature (for example, a signal coverage direction), and a remaining part is used as the first area. This is uniformly described herein, and details are not described below again.

In some possible designs, the first vector is the sum of the displacement vector of the first device and the displacement vector of the second device. Assuming that head and tail endpoint coordinates of the first vector are respectively (x0, y0) and (-x0, -y0), the location of the first device is in the first area, and the first area may be determined according to the following formula (1):

$$\frac{x'^2}{a^2} + \frac{y'^2}{b^2} = 1 \quad (1)$$

$$a = \frac{1}{2}L, \quad c = \sqrt{x_0^2 + y_0^2}, \quad \text{and}$$

$b = \sqrt{a^2 - c^2}$. L is a distance corresponding to the sum of the second receive-transmit time difference and the first receive-transmit time difference, a represents a semi-major axis of the first area, and b represents a semi-minor axis of the first area. In addition, a relationship between x' and y' in the formula (1) and x and y (x and y are variables and dependent variables in the expression of the first area) may be determined according to the following formula (2):

$$\begin{cases} x' = x \cos\varphi + y \sin\varphi \\ y' = -x \sin\varphi + y \cos\varphi \\ \varphi = \arctan\frac{y_0}{x_0} \end{cases} \quad (2)$$

In some other possible designs, the first vector is the sum of the displacement vector of the first device and the displacement vector of the second device. Assuming that head and tail endpoint coordinates of the first vector are respectively (x0, y0) and (-x0, -y0), the location of the first device is in the first area, and the first area may be determined according to the following for-

mula (3):

$$\frac{(xx_0+yy_0)^2}{(x_0^2+y_0^2)a^2} + \frac{(-xy_0+yx_0)^2}{(x_0^2+y_0^2)b^2} = 1 \quad (3)$$

$\quad a = \frac{1}{2}L, \ c = \sqrt{x_0^2 + y_0^2}$ , and $b = \sqrt{a^2 - c^2}$ . L is a distance corresponding to the sum of the second receive-transmit time difference and the first receive-transmit time difference, a represents a semi-major axis of the first area, and b represents a semi-minor axis of the first area. x and y are variables and dependent variables in the expression of the first area.

Optionally, if there are N second devices, and N is an integer greater than 1, each second device corresponds to one second area, and the location of the first device is at an intersection point of the N second areas. A shape of an $i^{th}$ second area corresponding to an $i^{th}$ second device in the N second devices is an ellipsoid or an ellipse, two focal points of the $i^{th}$ second area are head and tail endpoints of a second vector, a length of a major axis of the $i^{th}$ second area is a distance corresponding to a sum of the second receive-transmit time difference and a first receive-transmit time difference of the $i^{th}$ second device, and the second vector is a sum of the displacement vector of the first device and a displacement vector of the $i^{th}$ second device, where i is a positive integer, and i≤N. In this way, when there are a plurality of second devices, an implementation of determining the location of the first device may be provided. For example, the first device may establish, based on transmission distances of the reference signal between the first device and the plurality of second devices and relative displacements between the first device and the plurality of second devices, expressions of a plurality of second areas whose shapes are ellipsoids or ellipses, where the location of the first device is at an intersection point of the plurality of second areas, so that the first device may perform positioning resolving based on the transmission distances of the reference signal between the first device and the plurality of second devices and the relative displacements between the first device and the plurality of second devices, thereby improving positioning accuracy of the first device.

Optionally, the location of the first device is determined based on the first area and an angle of arrival (angle of arrival, AOA) of the first reference signal; and/or the location of the first device is determined based on the first area and an angle of arrival of the third reference signal. In this way, when the location of the first device is determined, positioning resolving may be further performed based on the transmission distance of the reference signal between the first device and the second device, the relative displacement between the two devices, and the angle of arrival of the first reference signal, so that positioning precision can be further improved, and a positioning resolving process can be simplified. In addition/Alternatively, when the location of the first device is determined, positioning resolving may be further performed based on the transmission distance of the reference signal between the first device and the second device, the relative displacement between the two devices, and the angle of arrival of the third reference signal, so that positioning precision can be further improved, and a positioning resolving process can be simplified.

The angle of arrival of the third reference signal is denoted as AoA1. Optionally, the location (x, y) of the first device may be determined by combining the formula (1), the formula (2), and a formula (4) or by combining the formula (3) and the formula (4). The formula (4) is as follows:

$$\frac{-y_0-y}{-x_0-x} = \tan AoA1 \quad (4)$$

The angle of arrival of the first reference signal is denoted as AoA2. Optionally, the location (x, y) of the first device may be determined by combining the formula (1), the formula (2), and a formula (5) or by combining the formula (3) and the formula (5). The formula (5) is as follows:

$$\frac{y-y_0}{x-x_0} = \tan AoA2 \quad (5)$$

The angle of arrival of the third reference signal is denoted as AoA1, and the angle of arrival of the first reference signal is denoted as AoA2. Optionally, the location (x, y) of the first device may be determined by combining the formula (1), the formula (2), and a formula (6) or by combining the formula (3) and the formula (6). The formula (6) is as follows:

$$\frac{y}{x} = \tan\frac{AoA2+AoA1+\pi}{2} \quad (6)$$

A zenith angle of arrival (zenith angle of arrival, ZOA) is also an angle of arrival, that is, the angle of arrival of the first reference signal may include an AOA and a ZOA, and the angle of arrival of the third reference signal may include an AOA and a ZOA. This is uniformly described herein, and details are not described below again.

Optionally, the location of the first device is determined based on the angle of arrival of the first reference signal and the angle of arrival of the third reference signal. In this way, when the location of the first device is determined, positioning resolving may be further performed based on the transmission distance of the reference signal between the first device and the second device, the relative displacement between the two devices, the angle of arrival of the first reference signal, and the angle of arrival of the third reference signal, so that positioning precision can be further improved, and a positioning resolving process can be simplified.

In some possible designs, the first receive-transmit time difference is a value obtained by performing a modulo operation of the difference between the receiving time of the first reference signal and the sending time of the second reference signal mod a first value. The second receive-transmit time difference is a value obtained by performing a modulo operation of the receiving time of the third reference signal and the sending time of the fourth reference signal mod the first value. In other words, after the modulo operation is performed, quantities of bits of the first receive-transmit time difference and the second receive-transmit time difference are reduced. In this way, a quantity of bits of signaling carrying the first receive-transmit time difference can be reduced, signaling overheads in a communication process can be reduced, and transmission efficiency can be improved.

The first value is a value configured by a network device for the terminal device, or a value reported by the terminal device to the network device, or a value agreed on in advance (for example, agreed on in a protocol). This is not limited in this application.

According to a second aspect, this application provides a positioning method. The method may be applied to a third device. The third device may be, for example, a location management device (for example, an LMF network element). The method includes: receiving a first receive-transmit time difference of a second device and a displacement vector of the second device, and sending the first receive-transmit time difference and the displacement vector of the second device to a first device. The first receive-transmit time difference is a time difference between receiving time of a first reference signal and sending time of a second reference signal, the first reference signal is a reference signal of the first device received by the second device, the second reference signal is a reference signal sent by the second device, and the displacement vector of the second device is a displacement of the second device in a time period corresponding to the first receive-transmit time difference.

It should be noted that, for a technical effect of the communication method in the second aspect, refer to the technical effect of the communication method in the first aspect. Details are not described herein again.

According to a third aspect, this application provides a positioning method. The method may be applied to a third device. The third device may be, for example, a location management device (for example, an LMF network element). The method includes: receiving a second receive-transmit time difference of a first device, receiving a first receive-transmit time difference of a second device and a displacement vector of the second device, and determining a location of the first device based on the first receive-transmit time difference, the displacement vector of the second device, and the second receive-transmit time difference. The first receive-transmit time difference is a time difference between receiving time of a first reference signal and sending time of a second reference signal, the first reference signal is a reference signal of the first device received by the second device, the second reference signal is a reference signal sent by the second device, and the displacement vector of the second device is a displacement of the second device in a time period corresponding to the first receive-transmit time difference. The second receive-transmit time difference is a time difference between receiving time of a third reference signal and sending time of a fourth reference signal, the third reference signal is a reference signal of the second device received by the first device, and the fourth reference signal is a reference signal sent by the first device.

With reference to the positioning method in the third aspect, the fourth aspect, or the fifth aspect, when determining the location of the first device, the third device may perform positioning resolving based on the first receive-transmit time difference, the second receive-transmit time difference, and the displacement vector of the second device. A transmission distance of the reference signal between the first device and the second device may be determined based on the first receive-transmit time difference and the second receive-transmit time difference, and a relative displacement between the first device and the second device may be determined based on the displacement vector of the second device. In other words, the third device may perform positioning resolving based on the transmission distance of the reference signal between the first device and the second device and the relative displacement between the two devices. In this way, a parameter that affects positioning precision, that is, the relative displacement between the devices participating in positioning, may be added to positioning resolving, so that a first device in a moving state can be accurately positioned.

In some possible designs, the determining a location of the first device based on the first receive-transmit time difference, the displacement vector of the second device, and the second receive-transmit time difference may include: determining the location of the first device based on the first receive-transmit time difference, the displacement vector of the second device, the second receive-transmit time difference, and a displacement vector of the first device. In this way, an implementation of determining the relative displacement between the first device and the second device may be provided. For example, the third device may determine the relative displacement between the first device and the second device based on the displacement vector of the second device and the displacement vector of the first device, so that the third device may perform positioning resolving based on the transmission distance of the reference signal between the first device and the second device and the relative displacement between the two devices, so that the first device in the moving state can be accurately positioned.

In some possible designs, the location of the first device is in a first area. A shape of the first area is an ellipsoid or an ellipse, two focal points of the first area are head and tail endpoints of a first vector, a length of a major axis of the first area is a distance corresponding to a sum of the second receive-transmit time difference and the first receive-transmit time difference, and the first vector is a sum of the displacement vector of the first device and the displacement vector of the second device. In other words, the first device is located on an ellipsoid or an ellipsoid that is determined based on the transmission distance of the reference signal between the first device and the second device and the relative displacement between the two devices. In this way, an implementation of determining the location of the first device may be provided. For example, the third device may establish, based on the transmission distance of the reference signal between the first device and the second device and the relative displacement between the two devices, an expression of the first area whose shape is the ellipsoid or the ellipsoid, so that the third device may perform positioning resolving based on the transmission distance of the reference signal between the first device and the second device and the relative displacement between the two devices, thereby improving positioning accuracy of the first device.

In some possible designs, the first vector is the sum of the displacement vector of the first device and the displacement vector of the second device. Assuming that head and tail endpoint coordinates of the first vector are respectively (x0, y0) and (-x0, -y0), the location of the first device is in the first area, and the first area may be determined according to the following formula (1):

$$\frac{x'^2}{a^2} + \frac{y'^2}{b^2} = 1 \quad (1)$$

$a = \frac{1}{2}L, \quad c = \sqrt{x_0^2 + y_0^2}$ , and $b = \sqrt{a^2 - c^2}$ . L is a distance corresponding to the sum of the second receive-transmit time difference and the first receive-transmit time difference, a represents a semi-major axis of the first area, and b represents a semi-minor axis of the first area. In addition, a relationship between x' and y' in the formula (1) and x and y (x and y are variables and dependent variables in the expression of the first area) may be determined according to the following formula (2):

$$\begin{cases} x' = x \cos \varphi + y \sin \varphi \\ y' = -x \sin \varphi + y \cos \varphi \\ \varphi = \arctan \frac{y_0}{x_0} \end{cases} \quad (2)$$

In some other possible designs, the first vector is the sum of the displacement vector of the first device and the displacement vector of the second device. Assuming that head and tail endpoint coordinates of the first vector are respectively (x0, y0) and (-x0, -y0), the location of the first device is in the first area, and the first area may be determined according to the following formula (3):

$$\frac{(xx_0+yy_0)^2}{(x_0^2+y_0^2)a^2} + \frac{(-xy_0+yx_0)^2}{(x_0^2+y_0^2)b^2} = 1 \quad (3)$$

$a = \frac{1}{2}L, \quad c = \sqrt{x_0^2 + y_0^2}$ , and $b = \sqrt{a^2 - c^2}$ . L is a distance corresponding to the sum of the second receive-transmit time difference and the first receive-transmit time difference, a represents a semi-major axis of the first area, and b represents a semi-minor axis of the first area. x and y are variables and dependent variables in the expression of the first area.

Optionally, if there are N second devices, and N is an integer greater than 1, each second device corresponds to one second area, and the location of the first device is at an intersection point of the N second areas. A shape of an i$^{th}$ second area corresponding to an i$^{th}$ second device in the N second devices is an ellipsoid or an ellipse, two focal points of the i$^{th}$ second area are head and tail endpoints of a second vector, a length of a major axis of the i$^{th}$ second area is a distance corresponding to a sum of the second receive-transmit time difference and a first receive-transmit time difference of the i$^{th}$ second device, and the second vector is a sum of the displacement vector of the first device and a displacement vector of the i$^{th}$ second device, where i is a positive integer, and i≤N. In this way, when there are a plurality of second devices, an implementation of determining the location of the first device may be provided. For example, the third device may establish, based on transmission distances of the reference signal between the first device and the plurality of second devices and relative displacements between the first device and the plurality of second devices, expressions of a plurality of second areas whose shapes are ellipsoids or ellipses, where the location of the first device is at an intersection point of the plurality of second areas, so that the third device may perform positioning resolving based on the transmission distances of the reference signal between the first device and the plurality of second devices and the relative displacements between the first device and the plurality of second devices, thereby improving positioning accuracy of the first device.

Optionally, the location of the first device is determined based on the first area and an angle of arrival of the first reference signal; and/or the location of the first device is determined based on the first area and an angle of arrival of the third reference signal. In this way, when the location of the first device is determined, positioning resolving may be further performed based on the transmission distance of the reference signal between the first device and the second device, the relative displacement between the two devices, and the angle of arrival of the third reference signal, so that positioning precision can be further improved, and a positioning resolving process can be simplified. In addition/Alternatively, when the location of the first device is determined, positioning resolving may be further performed based on the transmission distance of the reference signal between the first device and the second device, the relative displacement between the two devices, and the angle of arrival of the first reference signal, so that positioning precision can be further improved, and a positioning resolving process can be simplified.

Optionally, the location of the first device is determined based on the angle of arrival of the first reference signal and the angle of arrival of the third reference signal.

The angle of arrival of the third reference signal is denoted as AoA1. Optionally, the location (x, y) of the first device may be determined by combining the formula (1), the formula (2), and a formula (4) or by combining the formula (3) and the formula (4). The formula (4) is as follows:

$$\frac{-y_0 - y}{-x_0 - x} = \tan AoA1 \quad (4)$$

The angle of arrival of the first reference signal is denoted as AoA2. Optionally, the location (x, y) of the first device may be determined by combining the formula (1), the formula (2), and a formula (5) or by combining the formula (3) and the formula (5). The formula (5) is as follows:

$$\frac{y - y_0}{x - x_0} = \tan AoA2 \quad (5)$$

The angle of arrival of the third reference signal is denoted as AoA1, and the angle of arrival of the first reference signal is denoted as AoA2. Optionally, the location (x, y) of the first device may be determined by combining the formula (1), the formula (2), and a formula (6) or by combining the formula (3) and the formula (6). The formula (6) is as follows:

$$\frac{y}{x} = \tan \frac{AoA2 + AoA1 + \pi}{2} \quad (6)$$

In some possible designs, the first receive-transmit time difference is a value obtained by performing a modulo operation of the difference between the receiving time of the first reference signal and the sending time of the second reference signal mod a first value. The second receive-transmit time difference is a value obtained by performing a modulo operation of the receiving time of the third reference signal and the sending time of the fourth reference signal mod the first value. In other words, after the modulo operation is performed, quantities of bits of the first receive-transmit time difference and the second receive-transmit time difference are reduced. In this way, a quantity of bits of signaling carrying the first receive-transmit time difference and the second receive-transmit time difference can be reduced, signaling overheads in a communication process can be reduced, and transmission efficiency can be improved.

The first value is a value configured by a network device for the terminal device, or a value reported by the terminal device to the network device, or a value agreed on in advance (for example, agreed on in a protocol). This is not limited in this application.

According to a fourth aspect, this application provides a positioning method. The method may be applied to a first device, and the first device may be, for example, a terminal device. The method includes: determining a second receive-transmit time difference, and sending the second receive-transmit time difference. The second receive-transmit time difference is a time difference between receiving time of a third reference signal and sending time of a fourth reference signal, the third reference signal is a reference signal of a second device received by the first device, and the fourth reference signal is a reference signal sent by the first device.

When sending the second receive-transmit time difference, the first device may send the second receive-transmit time difference to a third device. The third device may be, for example, a location management device (for example, an LMF network element).

In some possible designs, the positioning method in the fourth aspect may further include: determining a displacement vector of the first device, and sending the displacement vector of the first device. The displacement vector of the first device is a displacement of the first device in a time period corresponding to the second receive-transmit time difference. When sending the displacement vector of the first device, the first device may send the displacement vector of the first device to a third device. The third device may be, for example, a location management device (for example, an LMF network element).

The second receive-transmit time difference and the displacement vector of the first device may be carried in one piece of information, or may be carried in two pieces of information. This is not limited herein. It should be noted that, for a technical effect of the communication method in the fourth aspect, refer to the technical effect of the communication method in the third aspect. Details are not described herein again.

According to a fifth aspect, this application provides a positioning method. The method may be applied to a second device, and the second device may be, for example, a terminal device or an access network device. The method includes: determining a first receive-transmit time difference and a displacement vector of the second device, and sending the first receive-transmit time difference and the displacement vector of the second device. The first receive-transmit time difference is a time difference between receiving time of a first reference signal and sending time of a second reference signal, the first reference signal is a reference signal of a first device received by the second device, the second reference signal is a reference signal sent by the second device, and the displacement vector of the second device is a displacement of the second device in a time period corresponding to the first receive-transmit time difference.

When sending the first receive-transmit time difference and the displacement vector of the second device, the second device may send the first receive-transmit time difference and the displacement vector of the second device to the first device, or may send the first receive-transmit time difference and the displacement vector of the second device to a third device. The third device may be, for example, a location management device (for example, an LMF network element). This is not limited in this application.

It should be noted that, for a technical effect of the communication method in the fifth aspect, refer to the technical effect of the communication method in the first aspect or the third aspect. Details are not described herein again.

With reference to the first aspect and the fifth aspect, when the first device is a terminal device (denoted as UE1) and the second device is a terminal device (denoted as UE2), in the first aspect, the receiving a first receive-transmit time difference and a displacement vector of a second device may include: The UE1 receives a first receive-transmit time difference and a displacement vector of the UE2 from the UE2. In the fifth aspect, the sending the first receive-transmit time difference and the displacement vector of the second device may include: The UE2 sends a first receive-transmit time difference and a displacement vector of the UE2 to the UE1.

With reference to the first aspect, the second aspect, and the fifth aspect, when the first device is a terminal device (denoted as UE1), the second device is a terminal device or an access network device (denoted as UE2/access network device), and the third device is an LMF network element, in the first aspect, the receiving a first receive-transmit time difference and a displacement vector of a second device may include: The UE1 receives a first receive-transmit time difference and a displacement vector of the UE2/access network device from the LMF network element. In the fifth aspect, the sending the first receive-transmit time difference and the displacement vector of the second device may include: The UE2/access network device sends a first receive-transmit time difference to the LMF network element, and sends a displacement vector of the UE2/access network device to the LMF network element.

With reference to the first aspect, the second aspect, and the fifth aspect, when the first device is a terminal device (denoted as UE1), the second device is a satellite, and the third device is an LMF network element, in the first aspect, the receiving a first receive-transmit time difference and a displacement vector of a second device may include: The UE1 receives a first receive-transmit time difference and a displacement vector of the satellite from the LMF network element. In the fifth aspect, the sending the first receive-transmit time difference and the displacement vector of the second device may include: The satellite sends a first receive-transmit time difference and a displacement vector of the satellite to the LMF network element.

With reference to the third aspect, the fourth aspect, and the fifth aspect, when the first device is a terminal device (denoted as UE1), the second device is a terminal device (denoted as UE2), and the third device is an LMF network element, in the third aspect, the receiving a second receive-transmit time difference of a first device may include: The LMF network element receives a second receive-transmit time difference from the UE1; and the receiving a first receive-transmit time difference of a second device and a displacement vector of the second device may include: The LMF network element receives a first receive-transmit time difference and a displacement vector of the UE2 from the UE2. In the fourth aspect, the sending the second receive-transmit time difference may include: The UE1 sends a second receive-transmit time difference to the LMF network element. In the fifth aspect, the sending the first receive-transmit time difference and the displacement vector of the second device may include: The UE2 sends a first receive-transmit time difference and a displacement vector of the UE2 to the LMF network element.

With reference to the third aspect, the fourth aspect, and the fifth aspect, when the first device is a terminal device (denoted as UE1), the second device is a terminal device (denoted as UE2/access network device), and the third device is an LMF network element, in the third aspect, the receiving a second receive-transmit time difference of a first device may include: The LMF network element receives a second receive-transmit time difference from the UE1; and the receiving a first receive-transmit time difference of a second device and a displacement vector of the second device may include: The LMF network element receives a first receive-transmit time difference and a displacement vector of the UE2/access network device from the UE2/access network device. In the fourth aspect, the sending the second receive-transmit time difference may include: The UE1 sends a second receive-transmit time difference to the LMF network element. In the fifth aspect, the sending the first receive-transmit time difference and the displacement vector of the second device may include: The UE2/access network device sends a first receive-transmit time difference to the LMF network element, and sends a displacement vector of the UE2/access network device.

According to a sixth aspect, a communication apparatus is provided. The communication apparatus includes a processing module and a transceiver module. The transceiver module is configured to receive a first receive-transmit time difference and a displacement vector of a second device. The processing module is configured to determine a location of a first device based on the first receive-transmit time difference, the displacement vector of the second device, and a second receive-transmit time difference. The first receive-transmit time difference is a time difference between receiving time of a first reference signal and sending time of a second reference signal, the first reference signal is a reference signal of the first device received by the second device, the second reference signal is a reference signal sent by the second device, and the displacement vector of the second device is a displacement of the second device in a time period corresponding to the first receive-transmit time difference. The second receive-transmit time difference is a time difference between receiving time of a third reference signal and sending time of a fourth reference signal, the third reference signal is a reference signal of the second device received by the first device, and the fourth reference signal is a reference signal sent by the first device.

The transceiver module is further configured to receive the first receive-transmit time difference and the displacement vector of the second device from the second device. Alternatively, the transceiver module is further configured to receive the first receive-transmit time difference and the displacement vector of the second device from a third device

The first receive-transmit time difference and the displacement vector of the second device may be carried in one piece of information, or may be carried in two pieces of information. This is not limited herein.

In some possible designs, the processing module is further configured to determine the location of the first device based on the first receive-transmit time difference, the displacement vector of the second device, the second receive-transmit time difference, and a displacement vector of the first device.

In some possible designs, the location of the first device is in a first area. A shape of the first area is an ellipsoid or an ellipse, two focal points of the first area are head and tail endpoints of a first vector, a length of a major axis of the first area is a distance corresponding to a sum of the second receive-transmit time difference and the first receive-transmit time difference, and the first vector is a sum of the displacement vector of the first device and the displacement vector of the second device.

In two-dimensional space, the shape of the first area may be the ellipse, or may be an ellipse circumference. In three-dimensional space, the shape of the first area may be the ellipsoid, or may be an ellipsoid curved surface. In addition, the ellipsoid is a generalization of the ellipse in three-dimensional space. In some possible designs, a concept of the ellipsoid may include an ellipsoid in three-dimensional space and an ellipse in two-dimensional space. In some cases, the first area may be a part of the ellipsoid or the ellipse. For example, an area whose shape is an ellipsoid or an ellipse may be first determined, and then an improper part in the area is removed by using a radio signal transmission feature (for example, a signal coverage direction), and a remaining part is used as the first area.

In some possible designs, the first vector is the sum of the displacement vector of the first device and the displacement vector of the second device. Assuming that head and tail endpoint coordinates of the first vector are respectively (x0, y0) and (-x0, -y0), the location of the first device is in the first area, and the first area may be determined according to the following formula (1):

$$\frac{x'^2}{a^2} + \frac{y'^2}{b^2} = 1 \quad (1)$$

$$a = \frac{1}{2}L, \quad c = \sqrt{x_0^2 + y_0^2}$$
, and $b = \sqrt{a^2 - c^2}$ . L is a distance corresponding to the sum of the second receive-transmit time difference and the first receive-transmit time difference, a represents a semi-major axis of the first area, and b represents a semi-minor axis of the first area. In addition, a relationship between $x'$ and $y'$ in the formula (1) and x and y (x and y are variables and dependent variables in the expression of the first area) may be determined according to the following formula (2):

$$\begin{cases} x' = x\cos\varphi + y\sin\varphi \\ y' = -x\sin\varphi + y\cos\varphi \\ \varphi = arctan\frac{y_0}{x_0} \end{cases} \quad (2)$$

In some other possible designs, the first vector is the sum of the displacement vector of the first device and the displacement vector of the second device. Assuming that head and tail endpoint coordinates of the first vector are respectively (x0, y0) and (-x0, -y0), the location of the first device is in the first area, and the first area may be determined according to the following formula (3):

$$\frac{(xx_0+yy_0)^2}{(x_0^2+y_0^2)a^2} + \frac{(-xy_0+yx_0)^2}{(x_0^2+y_0^2)b^2} = 1 \qquad (3)$$

$a = \frac{1}{2}L, \quad c = \sqrt{x_0^2 + y_0^2}$, and $b = \sqrt{a^2 - c^2}$. L is a distance corresponding to the sum of the second receive-transmit time difference and the first receive-transmit time difference, a represents a semi-major axis of the first area, and b represents a semi-minor axis of the first area. x and y are variables and dependent variables in the expression of the first area.

Optionally, if there are N second devices, and N is an integer greater than 1, each second device corresponds to one second area, and the location of the first device is at an intersection point of the N second areas. A shape of an $i^{th}$ second area corresponding to an $i^{th}$ second device in the N second devices is an ellipsoid or an ellipse, two focal points of the $i^{th}$ second area are head and tail endpoints of a second vector, a length of a major axis of the $i^{th}$ second area is a distance corresponding to a sum of the second receive-transmit time difference and a first receive-transmit time difference of the $i^{th}$ second device, and the second vector is a sum of the displacement vector of the first device and a displacement vector of the $i^{th}$ second device, where i is a positive integer, and i≤N.

Optionally, the location of the first device is determined based on the first area and an angle of arrival of the first reference signal; and/or the location of the first device is determined based on the first area and an angle of arrival of the third reference signal.

The angle of arrival of the third reference signal is denoted as AoA1. Optionally, the location (x, y) of the first device may be determined by combining the formula (1), the formula (2), and a formula (4) or by combining the formula (3) and the formula (4). The formula (4) is as follows:

$$\frac{-y_0-y}{-x_0-x} = \tan AoA1 \qquad (4)$$

The angle of arrival of the first reference signal is denoted as AoA2. Optionally, the location (x, y) of the first device may be determined by combining the formula (1), the formula (2), and a formula (5) or by combining the formula (3) and the formula (5). The formula (5) is as follows:

$$\frac{y-y_0}{x-x_0} = \tan AoA2 \qquad (5)$$

The angle of arrival of the third reference signal is denoted as AoA1, and the angle of arrival of the first reference signal is denoted as AoA2. Optionally, the location (x, y) of the first device may be determined by combining the formula (1), the formula (2), and a formula (6) or by combining the formula (3) and the formula (6). The formula (6) is as follows:

$$\frac{y}{x} = \tan\frac{AoA2+AoA1+\pi}{2} \qquad (6)$$

Optionally, the location of the first device is determined based on the angle of arrival of the first reference signal and the angle of arrival of the third reference signal.

In some possible designs, the first receive-transmit time difference is a value obtained by performing a modulo operation of the difference between the receiving time of the first reference signal and the sending time of the second reference signal mod a first value. The second receive-transmit time difference is a value obtained by performing a modulo operation of the receiving time of the third reference signal and the sending time of the fourth reference signal mod the first value.

The first value is a value configured by a network device for the terminal device, or a value reported by the terminal device to the network device, or a value agreed on in advance (for example, agreed on in a protocol). This is not limited in this application.

Optionally, the transceiver module may include a receiving module and a sending module. The receiving module is configured to implement a receiving function of the communication apparatus in the sixth aspect, and the sending module is configured to implement a sending function of the communication apparatus in the sixth aspect.

Optionally, the communication apparatus in the sixth aspect may further include a storage module. The storage module stores a program or instructions. When the processing module executes the program or the instructions, the communication apparatus is enabled to perform the positioning method in the first aspect.

It should be noted that the communication apparatus in the sixth aspect may be a first device. The first device may be, for example, a terminal device, or may be a chip (system) or another part or component disposed in the terminal device, or may be an apparatus including the terminal device. This is not limited in this application.

In addition, for a technical effect of the communication apparatus in the sixth aspect, refer to the technical effect of the positioning method in the first aspect. Details are not described herein again.

According to a seventh aspect, a communication apparatus is provided. The communication apparatus includes a receiving module and a sending module. The receiving module is configured to receive a first receive-transmit time difference of a second device and a displacement vector of the second device. The sending module is configured to send the first receive-transmit time difference and the displacement vector of the second device to a first device. The first receive-transmit time difference is a time difference between receiving time of a first reference signal and sending time of a second reference signal, the first reference signal is a reference signal of the first device received by the second device, the second reference signal is a reference signal sent by the second device, and the displacement vector of the second device is a displacement of the second device in a time period corresponding to the first receive-transmit time difference.

Optionally, the receiving module and the sending module may be implemented by one module, for example, a transceiver module. In other words, the transceiver module may be configured to implement a receiving function and a sending function of the communication apparatus in the seventh aspect.

Optionally, the communication apparatus in the seventh aspect may further include a processing module and a storage module. The storage module stores a program or instructions. When the processing module executes the program or the instructions, the communication apparatus is enabled to perform the positioning method in the second aspect.

It should be noted that the communication apparatus in the seventh aspect may be a third device. For example, the third device may be a location management device (for example, an LMF network element), or may be a chip (system) or another part or component disposed in a network device, or may be an apparatus including the network device. This is not limited in this application.

In addition, for a technical effect of the communication apparatus in the seventh aspect, refer to the technical effect of the positioning method in the second aspect. Details are not described herein again.

According to an eighth aspect, a communication apparatus is provided. The communication apparatus includes a processing module and a transceiver module. The transceiver module is configured to receive a second receive-transmit time difference of a first device. The transceiver module is further configured to receive a first receive-transmit time difference of a second device and a displacement vector of the second device. The processing module is configured to determine a location of the first device based on the first receive-transmit time difference, the displacement vector of the second device, and a second receive-transmit time difference. The first receive-transmit time difference is a time difference between receiving time of a first reference signal and sending time of a second reference signal, the first reference signal is a reference signal of the first device received by the second device, the second reference signal is a reference signal sent by the second device, and the displacement vector of the second device is a displacement of the second device in a time period corresponding to the first receive-transmit time difference. The second receive-transmit time difference is a time difference between receiving time of a third reference signal and sending time of a fourth reference signal, the third reference signal is a reference signal of the second device received by the first device, and the fourth reference signal is a reference signal sent by the first device.

In some possible designs, the processing module is further configured to determine the location of the first device based on the first receive-transmit time difference, the displacement vector of the second device, the second receive-transmit time difference, and a displacement vector of the first device.

In some possible designs, the location of the first device is in a first area. A shape of the first area is an ellipsoid or an ellipse, two focal points of the first area are head and tail endpoints of a first vector, a length of a major axis of the first area is a distance corresponding to a sum of the second receive-transmit time difference and the first receive-transmit time difference, and the first vector is a sum of the displacement vector of the first device and the displacement vector of the second device.

In some possible designs, the first vector is the sum of the displacement vector of the first device and the displacement vector of the second device. Assuming that head and tail endpoint coordinates of the first vector are respectively (x0, y0) and (-x0, -y0), the location of the first device is in the first area, and the first area may be determined according to the following formula (1):

$$\frac{x'^2}{a^2} + \frac{y'^2}{b^2} = 1 \quad (1)$$

$\quad a = \frac{1}{2}L, \quad c = \sqrt{x_0^2 + y_0^2}$ , and $b = \sqrt{a^2 - c^2}$ . L is a distance corresponding to the sum of the second receive-transmit time difference and the first receive-transmit time difference, a represents a semi-major axis of the first area, and b represents a semi-minor axis of the first area. In addition, a relationship between $x'$ and $y'$ in the formula (1) and x and y (x and y are variables and dependent variables in the expression of the first area) may be determined according to the following formula (2):

$$\begin{cases} x' = x \cos \varphi + y \sin \varphi \\ y' = -x \sin \varphi + y \cos \varphi \\ \varphi = arctan \frac{y_0}{x_0} \end{cases} \quad (2)$$

In some other possible designs, the first vector is the sum of the displacement vector of the first device and the displacement vector of the second device. Assuming that head and tail endpoint coordinates of the first vector are respectively (x0, y0) and (-x0, -y0), the location of the first device is in the first area, and the first area may be determined according to the following for-

mula (3):

$$\frac{(xx_0+yy_0)^2}{(x_0^2+y_0^2)a^2} + \frac{(-xy_0+yx_0)^2}{(x_0^2+y_0^2)b^2} = 1 \quad (3)$$

$a = \frac{1}{2}L, \quad c = \sqrt{x_0^2 + y_0^2}$, and $b = \sqrt{a^2 - c^2}$. L is a distance corresponding to the sum of the second receive-transmit time difference and the first receive-transmit time difference, a represents a semi-major axis of the first area, and b represents a semi-minor axis of the first area. x and y are variables and dependent variables in the expression of the first area.

Optionally, if there are N second devices, and N is an integer greater than 1, each second device corresponds to one second area, and the location of the first device is at an intersection point of the N second areas. A shape of an $i^{th}$ second area corresponding to an $i^{th}$ second device in the N second devices is an ellipsoid or an ellipse, two focal points of the $i^{th}$ second area are head and tail endpoints of a second vector, a length of a major axis of the $i^{th}$ second area is a distance corresponding to a sum of the second receive-transmit time difference and a first receive-transmit time difference of the $i^{th}$ second device, and the second vector is a sum of the displacement vector of the first device and a displacement vector of the $i^{th}$ second device, where i is a positive integer, and i≤N.

Optionally, the location of the first device is determined based on the first area and an angle of arrival of the first reference signal; and/or the location of the first device is determined based on the first area and an angle of arrival of the third reference signal.

Optionally, the location of the first device is determined based on the angle of arrival of the first reference signal and the angle of arrival of the third reference signal.

The angle of arrival of the third reference signal is denoted as AoA1. Optionally, the location (x, y) of the first device may be determined by combining the formula (1), the formula (2), and a formula (4) or by combining the formula (3) and the formula (4). The formula (4) is as follows:

$$\frac{-y_0-y}{-x_0-x} = \tan AoA1 \quad (4)$$

The angle of arrival of the first reference signal is denoted as AoA2. Optionally, the location (x, y) of the first device may be determined by combining the formula (1), the formula (2), and a formula (5) or by combining the formula (3) and the formula (5). The formula (5) is as follows:

$$\frac{y-y_0}{x-x_0} = \tan AoA2 \quad (5)$$

The angle of arrival of the third reference signal is denoted as AoA1, and the angle of arrival of the first reference signal is denoted as AoA2. Optionally, the location (x, y) of the first device may be determined by combining the formula (1), the formula (2), and a formula (6) or by combining the formula (3) and the formula (6). The formula (6) is as follows:

$$\frac{y}{x} = \tan \frac{AoA2+AoA1+\pi}{2} \quad (6)$$

In some possible designs, the first receive-transmit time difference is a value obtained by performing a modulo operation of the difference between the receiving time of the first reference signal and the sending time of the second reference signal mod a first value. The second receive-transmit time difference is a value obtained by performing a modulo operation of the receiving time of the third reference signal and the sending time of the fourth reference signal mod the first value.

The first value is a value configured by a network device for the terminal device, or a value reported by the terminal device to the network device, or a value agreed on in advance (for example, agreed on in a protocol). This is not limited in this application.

Optionally, the transceiver module may include a receiving module and a sending module. The receiving module is configured to implement a receiving function of the communication apparatus in the eighth aspect, and the sending module is configured to implement a sending function of the communication apparatus in the eighth aspect.

Optionally, the communication apparatus in the eighth aspect may further include a storage module. The storage module stores a program or instructions. When the processing module executes the program or the instructions, the communication apparatus is enabled to perform the positioning method in the third aspect.

It should be noted that the communication apparatus in the eighth aspect may be a third device. For example, the third device may be a location management device (for example, an LMF network element), or may be a chip (system) or another part or component disposed in a network device, or may be an apparatus including the network device. This is not limited in this application.

In addition, for a technical effect of the communication apparatus in the eighth aspect, refer to the technical effect of the positioning method in the third aspect. Details are not described herein again.

According to a ninth aspect, a communication apparatus is provided. The communication apparatus includes a processing module and a transceiver module. The processing module is configured to determine a second receive-transmit time difference. The transceiver module is configured to send the second receive-transmit time difference. The second receive-transmit time difference is a time difference between receiving time of a third reference signal and sending time of a fourth reference signal, the third reference signal is a reference signal of the second device received by a first device, and the fourth reference signal is a reference signal sent by the first device.

The transceiver module may be configured to send the second receive-transmit time difference to a third device. The third device may be, for example, a location management device (for example, an LMF network element).

In some possible designs, the processing module is further configured to determine a displacement vector of the first device. The transceiver module is further configured to send the displacement vector of the first device. The displacement vector of the first device is a displacement of the first device in a time period corresponding to the second receive-transmit time difference. The transceiver module is further configured to send the displacement vector of the first device to a third device. The third device may be, for example, a location management device (for example, an LMF network element).

The second receive-transmit time difference and the displacement vector of the first device may be carried in one piece of information, or may be carried in two pieces of information. This is not limited herein.

Optionally, the transceiver module may include a receiving module and a sending module. The receiving module is configured to implement a receiving function of the communication apparatus in the ninth aspect, and the sending module is configured to implement a sending function of the communication apparatus in the ninth aspect.

Optionally, the communication apparatus in the ninth aspect may further include a storage module. The storage module stores a program or instructions. When the processing module executes the program or the instructions, the communication apparatus is enabled to perform the positioning method in the fourth aspect.

It should be noted that the communication apparatus in the ninth aspect may be a first device. The first device may be, for example, a terminal device, or may be a chip (system) or another part or component disposed in the terminal device, or may be an apparatus including the terminal device. This is not limited in this application.

In addition, for a technical effect of the communication apparatus in the ninth aspect, refer to the technical effect of the positioning method in the fourth aspect. Details are not described herein again.

According to a tenth aspect, a communication apparatus is provided. The communication apparatus includes a processing module and a transceiver module. The processing module is configured to determine a first receive-transmit time difference and a displacement vector of a second device. The transceiver module is configured to send the first receive-transmit time difference and the displacement vector of the second device. The first receive-transmit time difference is a time difference between receiving time of a first reference signal and sending time of a second reference signal, the first reference signal is a reference signal of a first device received by the second device, the second reference signal is a reference signal sent by the second device, and the displacement vector of the second device is a displacement of the second device in a time period corresponding to the first receive-transmit time difference.

When the transceiver module may be configured to send the first receive-transmit time difference and the displacement vector of the second device to the first device, or may be configured to send the first receive-transmit time difference and the displacement vector of the second device to a third device. The third device may be, for example, a location management device (for example, an LMF network element). This is not limited in this application.

Optionally, the transceiver module may include a receiving module and a sending module. The receiving module is configured to implement a receiving function of the communication apparatus in the tenth aspect, and the sending module is configured to implement a sending function of the communication apparatus in the tenth aspect.

Optionally, the communication apparatus in the tenth aspect may further include a storage module. The storage module stores a program or instructions. When the processing module executes the program or the instructions, the communication apparatus is enabled to perform the positioning method in the fifth aspect.

It should be noted that the communication apparatus in the tenth aspect may be a second device. The second device may be, for example, a terminal device or an access network device, or may be a chip (system) or another part or component disposed in the terminal device, or may be an apparatus including the terminal device. This is not limited in this application.

In addition, for a technical effect of the communication apparatus in the tenth aspect, refer to the technical effect of the positioning method in the fifth aspect. Details are not described herein again.

According to an eleventh aspect, a communication apparatus is provided. The communication apparatus is configured to perform the positioning method in any one of the implementations of the first aspect to the fifth aspect.

In this application, the communication apparatus in the eleventh aspect may be a first device, a second device, or a third device. The first device may be, for example, a terminal device, the second device may be, for example, a terminal device or an access network device, and the third device may be, for example, a location management device (for example, an LMF network element). Alternatively, the communication apparatus may be a chip (system) or another part or component disposed in the first device, the second device, or the third device, or may be an apparatus including the first device, the second device, or the third device. This is not limited in this application. The first device is configured to perform the positioning method in any one of the possible implementations of the first aspect and the fourth aspect, the second device is configured to perform the positioning method in any one of the possible implementations of the fifth aspect, and the third device is configured to perform the positioning method in any one of the possible implementations of the second aspect and the third aspect.

It should be understood that the communication apparatus in the eleventh aspect includes a corresponding module, unit, or means (means) for implementing the positioning method in any one of the first aspect to the fifth aspect. The module, unit, or means may be implemented by hardware, or may be implemented by software, or may be implemented by hardware executing corresponding software. The hardware or software includes one or more modules or units configured to perform functions related to the foregoing positioning method.

In addition, for a technical effect of the communication apparatus in the eleventh aspect, refer to the technical effect of the positioning method in any one of the first aspect to the fifth aspect. Details are not described herein again.

According to a twelfth aspect, a communication apparatus is provided. The communication apparatus includes a processor. The processor is configured to perform the positioning method in any one of the possible implementations of the first aspect to the fifth aspect.

In a possible design solution, the communication apparatus in the twelfth aspect may further include a transceiver. The transceiver may be a transceiver circuit or an interface circuit. The transceiver may be used by the communication apparatus in the twelfth aspect to communicate with another communication apparatus.

In a possible design solution, the communication apparatus in the twelfth aspect may further include a memory. The memory and the processor may be integrated together, or may be disposed separately. The memory may be configured to store a computer program and/or data related to the positioning method in any one of the first aspect to the fifth aspect.

In this application, the communication apparatus in the twelfth aspect may be a first device, a second device, or a third device. The first device may be, for example, a terminal device, the second device may be, for example, a terminal device or an access network device, and the third device may be, for example, a location management device (for example, an LMF network element). Alternatively, the communication apparatus may be a chip (system) or another part or component disposed in the first device, the second device, or the third device, or may be an apparatus including the first device, the second device, or the third device. This is not limited in this application. The first device is configured to perform the positioning method in any one of the possible implementations of the first aspect and the fourth aspect, the second device is configured to perform the positioning method in any one of the possible implementations of the fifth aspect, and the third device is configured to perform the positioning method in any one of the possible implementations of the second aspect and the third aspect.

In addition, for a technical effect of the communication apparatus in the twelfth aspect, refer to the technical effect of the positioning method in any one of the implementations of the first aspect to the fifth aspect. Details are not described herein again.

According to a thirteenth aspect, a communication apparatus is provided. The communication apparatus includes a processor. The processor is coupled to a memory, and the processor is configured to execute a computer program stored in the memory, to enable the communication apparatus to perform the positioning method in any one of the possible implementations of the first aspect to the fifth aspect.

In a possible design solution, the communication apparatus in the thirteenth aspect may further include a transceiver. The transceiver may be a transceiver circuit or an interface circuit. The transceiver may be used by the communication apparatus in the thirteenth aspect to communicate with another communication apparatus.

In this application, the communication apparatus in the thirteenth aspect may be a first device, a second device, or a third device. The first device may be, for example, a terminal device, the second device may be, for example, a terminal device or an access network device, and the third device may be, for example, a location management device (for example, an LMF network element). Alternatively, the communication apparatus may be a chip (system) or another part or component disposed in the first device, the second device, or the third device, or may be an apparatus including the first device, the second device, or the third device. This is not limited in this application. The first device is configured to perform the positioning method in any one of the possible implementations of the first aspect and the fourth aspect, the second device is configured to perform the positioning method in any one of the possible implementations of the fifth aspect, and the third device is configured to perform the positioning method in any one of the possible implementations of the second aspect and the third aspect.

In addition, for a technical effect of the communication apparatus in the thirteenth aspect, refer to the technical effect of the positioning method in any one of the implementations of the first aspect to the fifth aspect. Details are not described herein again.

According to a fourteenth aspect, a communication apparatus is provided. The communication apparatus includes a processor and an interface circuit. The interface circuit is configured to receive code instructions and transmit the code instructions to the processor. The processor is configured to run the foregoing code instructions to perform the positioning method in any one of the implementations of the first aspect to the fifth aspect.

In a possible design solution, the communication apparatus in the fourteenth aspect may further include a memory. The memory and the processor may be integrated together, or may be disposed separately. The memory may be configured to store a computer program and/or data related to the positioning method in any one of the first aspect to the fifth aspect.

In this application, the communication apparatus in the fourteenth aspect may be a first device, a second device, or a third device. The first device may be, for example, a terminal device, the second device may be, for example, a terminal device or an access network device, and the third device may be, for example, a location management device (for example, an LMF network element). Alternatively, the communication apparatus may be a chip (system) or another part or component disposed in the first device, the second device, or the third device, or may be an apparatus including the first device, the second device, or the third device. This is not limited in this application. The first device is configured to perform the positioning method in any one of the possible implementations of the first aspect and the fourth aspect, the second device is configured to perform the positioning method in any one of the possible implementations of the fifth aspect, and the third device is configured to perform the positioning method in any one of the possible implementations of the second aspect and the third aspect.

In addition, for a technical effect of the communication apparatus in the fourteenth aspect, refer to the technical effect of the positioning method in any one of the implementations of the first aspect to the fifth aspect. Details are not described herein again.

According to a fifteenth aspect, a communication apparatus is provided. The communication apparatus includes a processor and a storage medium. The storage medium stores instructions, and when the instructions are run by the processor, the positioning method in any one of the possible implementations of the first aspect to the fifth aspect is enabled to be implemented.

In this application, the communication apparatus in the fifteenth aspect may be a first device, a second device, or a third device. The first device may be, for example, a terminal device, the second device may be, for example, a terminal device or an access network device, and the third device may be, for example, a location management device (for example, an LMF network element). Alternatively, the communication apparatus may be a chip (system) or another part or component disposed in the first device, the second device, or the third device, or may be an apparatus including the first device, the second device, or the third device. This is not limited in this application. The first device is configured to perform the positioning method in any one of the possible implementations of the first aspect and the fourth aspect, the second device is configured to perform the positioning method in any one of the possible implementations of the fifth aspect, and the third device is configured to perform the positioning method in any one of the possible implementations of the second aspect and the third aspect.

In addition, for a technical effect of the communication apparatus in the fifteenth aspect, refer to the technical effect of the positioning method in any one of the implementations of the first aspect to the fifth aspect. Details are not described herein again.

According to a sixteenth aspect, a processor is provided. The processor is configured to perform the positioning method in any one of the possible implementations of the first aspect to the fifth aspect.

According to a seventeenth aspect, a communication system is provided. The communication system includes a first device and a second device. The first device may be, for example, a terminal device, and the second device may be, for example, a terminal device or an access network device. The first device is configured to perform the positioning method in any one the possible implementations of the first aspect and the fourth aspect, and the second device is configured to perform the positioning method in any one of the possible implementations of the fifth aspect.

Optionally, the communication system may further include a third device. The third device may be, for example, a location management device (for example, an LMF network element). The third device is configured to perform the positioning method in any one of the possible implementations of the second aspect and the third aspect.

According to an eighteenth aspect, a computer-readable storage medium is provided. The computer-readable storage medium includes a computer program or instructions, and when the computer program or the instructions is/are run by a processor, the positioning method in any one of the possible implementations of the first aspect to the fifth aspect is enabled to be implemented.

According to a nineteenth aspect, a computer program product is provided. The computer program product includes instructions, and when the instructions are run by a processor, the positioning method in any one of the possible implementations of the first aspect to the fifth aspect is enabled to be implemented.

According to a twentieth aspect, a chip is provided. The chip includes a processing logic circuit and an interface circuit. There may be one or more processing logic circuits, and there may be a plurality of interface circuits.

The interface circuit is configured to receive code instructions and transmit the code instructions to the processing logic circuit. The processing logic circuit is configured to run the foregoing code instructions to perform the positioning method in any one of the implementations of the first aspect to the fifth aspect.

Optionally, the chip may include a memory. The memory may be integrated with the processing logic circuit, or may be disposed separately. The memory may be configured to store a computer program and/or data related to the positioning method in any one of the first aspect to the fifth aspect.

In this application, the chip in the twentieth aspect may be a first device, a second device, or a third device in a communication system. The first device may be, for example, a terminal device, the second device may be, for example, a terminal device or an access network device, and the third device may be, for example, a location management device (for example, an LMF network element). When being located in the first device, the chip is configured to perform the positioning method in any one of the possible implementations of the first aspect and the fourth aspect. When being located in the second device, the chip is configured to perform the positioning method in any one of the possible implementations of the fifth aspect. When being located in the third device, the chip is configured to perform the positioning method in any one of the possible implementations of the second aspect and the third aspect.

According to a twenty-first aspect, a communication system is provided, including a first device and a second device. The first device is configured to receive a first receive-transmit time difference and a displacement vector of the second device. The first receive-transmit time difference is a time difference between receiving time of a first reference signal and sending time of a second reference signal, the first reference signal is a reference signal of the first device received by the second device, the second reference signal is a reference signal sent by the second device, and the displacement vector of the second device is a displacement of the second device in a time period corresponding to the first receive-transmit time difference. The first device is further configured to determine a location of the first device based on the first receive-transmit time difference, the displacement vector of the second device, and a second receive-transmit time difference. The second receive-transmit time difference is a time difference between receiving time of a third reference signal and sending time of a fourth reference signal, the third reference signal is a reference signal of the second device received by the first device, and the fourth reference signal is a reference signal sent by the first device.

In some possible embodiments, the second device is configured to determine the first receive-transmit time difference and the displacement vector of the second device. The second device is further configured to send the first receive-transmit time difference and the displacement vector of the second device.

In some possible embodiments, the communication system in the twenty-first aspect further includes a third device. The third device is configured to receive the first receive-transmit time difference of the second device and the displacement vector of the second device. The first receive-transmit time difference is the time difference between the receiving time of the first reference signal and the sending time of the second reference signal, the first reference signal is the reference signal of the first device received by the second device, the fourth reference signal is the reference signal sent by the second device, and the displacement vector of the second device is the displacement of the second device in the time period corresponding to the first receive-transmit time difference. The third device is further configured to send the first receive-transmit time difference and the displacement vector of the second device to the first device.

In some possible embodiments, the first device is further configured to determine the location of the first device based on the first receive-transmit time difference, the displacement vector of the second device, the second receive-transmit time difference, and a displacement vector of the first device, and the displacement vector of the first device is a displacement of the first device in a time period corresponding to the second receive-transmit time difference.

In some possible embodiments, the location of the first device is in a first area. A shape of the first area is an ellipsoid or an ellipse, two focal points of the first area are head and tail endpoints of a first vector, a length of a major axis of the first area is a distance corresponding to a sum of the second receive-transmit time difference and the first receive-transmit time difference, and the first vector is a sum of the displacement vector of the first device and the displacement vector of the second device.

In some possible designs, the first vector is the sum of the displacement vector of the first device and the displacement vector of the second device. Assuming that head and tail endpoint coordinates of the first vector are respectively (x0, y0) and (-x0, -y0), the location of the first device is in the first area, and the first area may be determined according to the following formula (1):

$$\frac{x'^2}{a^2} + \frac{y'^2}{b^2} = 1 \quad (1)$$

$$a = \frac{1}{2}L, \quad c = \sqrt{x_0^2 + y_0^2}, \quad \text{and}$$

$b = \sqrt{a^2 - c^2}$. L is a distance corresponding to the sum of the second receive-transmit time difference and the first receive-transmit time difference, a represents a semi-major axis of the first area, and b represents a semi-minor axis of the first area. In addition, a relationship between $x'$ and $y'$ in the formula (1) and x and y (x and y are variables and dependent variables in the expression of the first area) may be determined according to the following formula (2):

$$\begin{cases} x' = x\cos\varphi + y\sin\varphi \\ y' = -x\sin\varphi + y\cos\varphi \quad (2) \\ \quad \varphi = \arctan\frac{y_0}{x_0} \end{cases}$$

In some other possible designs, the first vector is the sum of the displacement vector of the first device and the displacement vector of the second device. Assuming that head and tail endpoint coordinates of the first vector are respectively (x0, y0) and (-x0, -y0), the location of the first device is in the first area, and the first area may be determined according to the following formula (3):

$$\frac{(xx_0 + yy_0)^2}{(x_0^2 + y_0^2)a^2} + \frac{(-xy_0 + yx_0)^2}{(x_0^2 + y_0^2)b^2} = 1 \quad (3)$$

$a = \frac{1}{2}L, \quad c = \sqrt{x_0^2 + y_0^2}$ , and $b = \sqrt{a^2 - c^2}$ . L is a distance corresponding to the sum of the second receive-transmit time difference and the first receive-transmit time difference, a represents a semi-major axis of the first area, and b represents a semi-minor axis of the first area. x and y are variables and dependent variables in the expression of the first area.

Optionally, if there are N second devices, and N is an integer greater than 1, each second device corresponds to one second area, and the location of the first device is at an intersection point of the N second areas. A shape of an i$^{th}$ second area corresponding to an i$^{th}$ second device in the N second devices is an ellipsoid or an ellipse, two focal points of the i$^{th}$ second area are head and tail endpoints of a second vector, a length of a major axis of the i$^{th}$ second area is a distance corresponding to a sum of the second receive-transmit time difference and a first receive-transmit time difference of the i$^{th}$ second device, and the second vector is a sum of the displacement vector of the first device and a displacement vector of the i$^{th}$ second device, where i is a positive integer, and i≤N.

Optionally, the location of the first device is determined based on the first area and an angle of arrival of the first reference signal; and/or the location of the first device is determined based on the first area and an angle of arrival of the third reference signal.

The angle of arrival of the third reference signal is denoted as AoA1. Optionally, the location (x, y) of the first device may be determined by combining the formula (1), the formula (2), and a formula (4) or by combining the formula (3) and the formula (4). The formula (4) is as follows:

$$\frac{-y_0 - y}{-x_0 - x} = \tan AoA1 \quad (4)$$

The angle of arrival of the first reference signal is denoted as AoA2. Optionally, the location (x, y) of the first device may be determined by combining the formula (1), the formula (2), and a formula (5) or by combining the formula (3) and the formula (5). The formula (5) is as follows:

$$\frac{y - y_0}{x - x_0} = \tan AoA2 \quad (5)$$

The angle of arrival of the third reference signal is denoted as AoA1, and the angle of arrival of the first reference signal is denoted as AoA2. Optionally, the location (x, y) of the first device may be determined by combining the formula (1), the formula (2), and a formula (6) or by combining the formula (3) and the formula (6). The formula (6) is as follows:

$$\frac{y}{x} = \tan\frac{AoA2 + AoA1 + \pi}{2} \quad (6)$$

In some possible embodiments, the first receive-transmit time difference is a value obtained by performing a modulo operation of the difference between the receiving time of the first reference signal and the sending time of the second reference signal mod a first value. The second receive-transmit time difference is a value obtained by performing a modulo operation of the receiving time of the third reference signal and the sending time of the fourth reference signal mod the first value.

According to a twenty-second aspect, a communication system is provided, including a first device and a second device. The third device is configured to receive a second receive-transmit time difference of the first device, where the second receive-transmit time difference is a time difference between receiving time of a third reference signal and sending time of a fourth reference signal, the third reference signal is a reference signal of the second device received by the first device, and the fourth reference signal is a reference signal sent by the first device. The third device is further configured to receive a first receive-transmit time difference of the second device and a displacement vector of the second device, where the first receive-transmit time difference is a time difference between receiving time of a first reference signal and sending time of a second reference signal, the first reference signal is a reference signal of the first device received by the second device, the fourth reference signal is a reference signal sent by the second device, and the displacement vector of the second device is a displacement of the second device in a time period corresponding to the first receive-transmit time difference. The third device is further configured to determine a location of the first device based on the first receive-transmit time difference, the displacement vector of the second device, and the second receive-transmit time difference.

In some possible embodiments, the second device is configured to determine the first receive-transmit time difference and the displacement vector of the second device. The second device is further configured to send the first receive-transmit time difference and the displacement vector of the second device.

In some possible embodiments, the first device is configured to determine the second receive-transmit time difference, and the first device is further configured to send the second receive-transmit time difference to the third device.

In some possible embodiments, the third device is further configured to determine the location of the first device based on the first receive-transmit time difference, the displacement vector of the second device, the second receive-transmit time difference, and a displacement vector of the first device, and the displacement vector of the first device is a displacement of the first device in a time period corresponding to the second receive-transmit time difference.

In some possible embodiments, the first device is further configured to determine the displacement vector of the first device, and the displacement vector of the first device is the displacement of the first device in the time period corresponding to the second receive-transmit time difference. The first device is further configured to send the second receive-transmit time difference to the third device.

In some possible embodiments, the location of the first device is in a first area. A shape of the first area is an ellipsoid or an ellipse, two focal points of the first area are head and tail endpoints of a first vector, a length of a major axis of the first area is a distance corresponding to a sum of the second receive-transmit time difference and the first receive-transmit time difference, and the first vector is a sum of the displacement vector of the first device and the displacement vector of the second device.

In some possible designs, the first vector is the sum of the displacement vector of the first device and the displacement vector of the second device. Assuming that head and tail endpoint coordinates of the first vector are respectively (x0, y0) and (-x0, -y0), the location of the first device is in the first area, and the first area may be determined according to the following formula (1):

$$\frac{x'^2}{a^2} + \frac{y'^2}{b^2} = 1 \quad (1)$$

$$a = \frac{1}{2}L, \quad c = \sqrt{x_0^2 + y_0^2} \quad , \quad \text{and}$$

$b = \sqrt{a^2 - c^2}$ . L is a distance corresponding to the sum of the second receive-transmit time difference and the first receive-transmit time difference, a represents a semi-major axis of the first area, and b represents a semi-minor axis of the first area. In addition, a relationship between $x'$ and $y'$ in the formula (1) and x and y (x and y are variables and dependent variables in the expression of the first area) may be determined according to the following formula (2):

$$\begin{cases} x' = x \cos \varphi + y \sin \varphi \\ y' = -x \sin \varphi + y \cos \varphi \\ \varphi = arctan \frac{y_0}{x_0} \end{cases} \quad (2)$$

In some other possible designs, the first vector is the sum of the displacement vector of the first device and the displacement vector of the second device. Assuming that head and tail endpoint coordinates of the first vector are respectively (x0, y0) and (-x0, -y0), the location of the first device is in the first area, and the first area may be determined according to the following formula (3):

$$\frac{(xx_0+yy_0)^2}{(x_0^2+y_0^2)a^2} + \frac{(-xy_0+yx_0)^2}{(x_0^2+y_0^2)b^2} = 1 \quad (3)$$

$$a = \frac{1}{2}L, \quad c = \sqrt{x_0^2 + y_0^2} \quad , \quad \text{and}$$

$b = \sqrt{a^2 - c^2}$ . L is a distance corresponding to the sum of the second receive-transmit time difference and the first receive-transmit time difference, a represents a semi-major axis of the first area, and b represents a semi-minor axis of the first area. x and y are variables and dependent variables in the expression of the first area.

Optionally, if there are N second devices, and N is an integer greater than 1, each second device corresponds to one second area, and the location of the first device is at an intersection point of the N second areas. A shape of an $i^{th}$ second area corresponding to an $i^{th}$ second device in the N second devices is an ellipsoid or an ellipse, two focal points of the $i^{th}$ second area are head and tail endpoints of a second vector, a length of a major axis of the $i^{th}$ second area is a distance corresponding to a sum of the second receive-transmit time difference and a first receive-transmit time difference of the $i^{th}$ second device, and the second vector is a sum of the displacement vector of the first device and a displacement vector of the $i^{th}$ second device, where i is a positive integer, and i≤N.

Optionally, the location of the first device is determined based on the first area and an angle of arrival of the first reference signal; and/or the location of the first device is determined based on the first area and an angle of arrival of the third reference signal.

The angle of arrival of the third reference signal is denoted as AoA1. Optionally, the location (x, y) of the first device may be determined by combining the formula (1), the formula (2), and a formula (4) or by combining the formula (3) and the formula (4). The formula (4) is as follows:

$$\frac{-y_0-y}{-x_0-x} = \tan \text{AoA1} \quad (4)$$

The angle of arrival of the first reference signal is denoted as AoA2. Optionally, the location (x, y) of the first device may be determined by combining the formula (1), the formula (2), and a formula (5) or by combining the formula (3) and the formula (5). The formula (5) is as follows:

$$\frac{y-y_0}{x-x_0} = \tan \text{AoA2} \quad (5)$$

The angle of arrival of the third reference signal is denoted as AoA1, and the angle of arrival of the first reference signal is denoted as AoA2. Optionally, the location (x, y) of the first device may be determined by combining the formula (1), the formula (2), and a formula (6) or by combining the formula (3) and the formula (6). The formula (6) is as follows:

$$\frac{y}{x} = \tan \frac{\text{AoA2}+\text{AoA1}+\pi}{2} \quad (6)$$

In some possible embodiments, the first receive-transmit time difference is a value obtained by performing a modulo operation of the difference between the receiving time of the first reference signal and the sending time of the second reference signal mod a first value. The second receive-transmit time difference is a value obtained by performing a modulo operation of the receiving time of the third reference signal and the sending time of the fourth reference signal mod the first value.

For technical effects brought by any implementation in the sixth aspect to the twenty-second aspect, refer to the technical effects brought by corresponding implementations in the first aspect to the fifth aspect. Details are not described herein again.

Based on the implementations provided in the foregoing aspects, this application may be further combined to provide more implementations.

**BRIEF DESCRIPTION OF DRAWINGS**

FIG. 1 is a schematic diagram of measuring reference signals by a terminal device and an access network device according to an embodiment of this application;

FIG. 2 is a schematic diagram of determining a location of a terminal device by three access network devices according to an embodiment of this application;

FIG. 3 is a schematic diagram of measurement of two-vehicle positioning in a V2X scenario according to an embodiment of this application;

FIG. 4 is a schematic diagram of measurement of terminal device positioning in an NTN scenario according to an embodiment of this application;

FIG. 5 is a schematic diagram of a communication system according to an embodiment of this application;

FIG. 6 is a schematic diagram of an architecture of a communication system to which a positioning method in an embodiment of this application is applied in a 5G system;

FIG. 7 is a schematic diagram of another architecture of a communication system to which a positioning method in an embodiment of this application is applied in a 5G system;

FIG. 8 is a schematic diagram of a connection between a terminal device and an NG-RAN in FIG. 5;

FIG. 9 is a schematic diagram of a connection between a RAN and a core network according to an embodiment of this application;

FIG. 10 is a schematic diagram of a connection between a terminal device, an NG-RAN, and a core network in FIG. 5;

FIG. 11 is another schematic diagram of a connection between a terminal device, an NG-RAN, and a core network in FIG. 5;

FIG. 12 is a schematic diagram of a structure of a communication apparatus according to an embodiment of this application;

FIG. 13 is a schematic flowchart of a positioning method according to an embodiment of this application;

FIG. 14 is a schematic diagram of a scenario in which UE1 is positioned according to an embodiment of this application;

FIG. 15 is a schematic diagram of a first area in a coordinate system according to an embodiment of this application;

FIG. 16 is a schematic diagram of marking an angle of arrival AoA3 in a coordinate system shown in FIG. 15;

FIG. 17 is a schematic diagram of a plurality of second areas in a coordinate system according to an embodiment of this application;

FIG. 18 is a schematic flowchart of another positioning method according to an embodiment of this application;

FIG. 19 is a schematic flowchart of another positioning method according to an embodiment of this application;

FIG. 20 is a schematic flowchart of another positioning method according to an embodiment of this application;

FIG. 21 is a schematic flowchart of another positioning method according to an embodiment of this application;

FIG. 22 is a schematic flowchart of another positioning method according to an embodiment of this application;

FIG. 23 is a schematic flowchart of another positioning method according to an embodiment of this application;

FIG. 24 is a schematic diagram of a structure of a communication apparatus according to an embodiment of this application; and

FIG. 25 is a schematic diagram of another structure of a communication apparatus according to an embodiment of this application.

## DESCRIPTION OF EMBODIMENTS

For ease of understanding the solutions in embodiments of this application, brief descriptions of conventional technologies are first provided.

1. Multi-RTT positioning technology

The Multi-RTT positioning technology is a multi-station positioning technology, and at least two stations are required in a positioning process. The station herein may be an access network device. In a process of positioning a terminal device by using the Multi-RTT positioning technology, a location of the terminal device can be determined only when a plurality of stations measure the terminal device or the terminal device measures the plurality of stations.

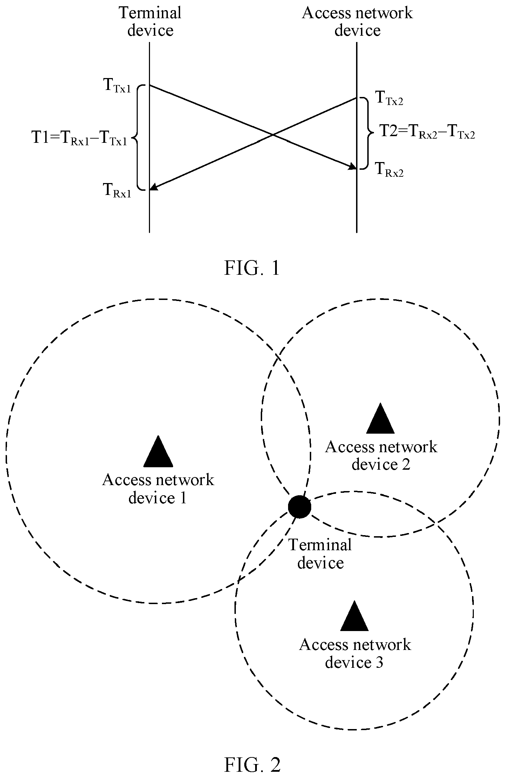

For example, one access network device and one terminal device are used as examples. The access network device needs to measure a reference signal (reference signal, RS) sent by the terminal device, and the terminal device also needs to measure a reference signal sent by the access network device. FIG. 1 is a schematic diagram of measuring reference signals by a terminal device and an access network device. Time at which the terminal device sends the reference signal is denoted as TTx1, and time at which the terminal device receives the reference signal is denoted as TRx1. Time at which the access network device sends the reference signal is denoted as TTx2, and time at which the access network device receives the reference signal is denoted as TRx2. A reference signal receive-transmit time difference measured by the terminal device is T1=TRx1-TTx1, and a reference signal receive-transmit time difference measured by the access network device is T2=TRx2-TTx2. Both the access network device and the terminal device report the measured reference signal receive-transmit time difference to an LMF network element. The LMF network element may measure time RTT=T 1+T2 for round-trip propagation of the reference signal between the terminal device and the access network device, so that a distance between the access network device and the terminal device may be calculated based on a relationship between a distance, the time, and a light speed.

For example, the distance between the access network device and the terminal device may be calculated according to the following formula:

$$d = \frac{1}{2} RTT \times c$$

RTT=T1+T2, c is the light speed, and d is the distance between the access network device and the terminal device.

During positioning calculation, a circle can be determined based on a measured RTT value by using a location of each access network device as a circle center, and a radius of the circle is a distance corresponding to the RTT. Two circles can be determined by using two RTT, and an intersection point of the two circles is the location of the terminal device. If there are more access network devices that can determine more circles, the location of the terminal may be more accurate. As shown in FIG. 2, three base stations correspond to three circles, and an intersection point of the three circles is the location of the terminal device.

It can be learned that, if the foregoing positioning technology is applied to a scenario in which a device participating in positioning is in a moving state, for example, a V2X scenario or a satellite positioning scenario, because a terminal device (for example, a car) or an access network device (for example, a satellite) in the scenario is usually in a moving state, a relative location between devices participating in positioning changes. Consequently, a reference signal receive-transmit time difference measured by the terminal device or the access network device does not correspond to an actual distance between the devices, and positioning precision in the scenario is reduced, a requirement for high-precision positioning cannot be met. In other words, a disadvantage of the foregoing positioning technology is that the relative distance between the devices participating in positioning remains unchanged. If the access network device is a static base station, the terminal device is required to be in a static state to accurately position the terminal device.

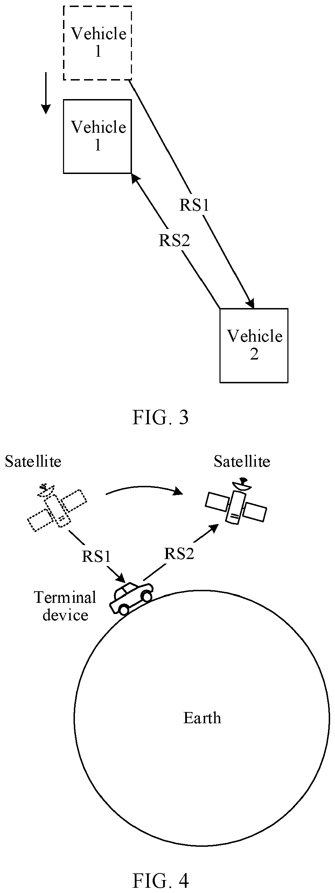

For example, as shown in FIG. 3, in a V2X scenario, for ranging and positioning between two vehicles, one vehicle (a vehicle 1) sends an RS1 to another vehicle (a vehicle 2), and then the vehicle 2 sends an RS2 to the vehicle 1. However, because there is a high-speed relative movement between the two vehicles, when the vehicle 1 receives the RS2, the vehicle 1 is no longer at a location at which the RS1 is sent. For example, it is assumed that the vehicle 1 and the vehicle 2 move oppositely, a speed of opposite directions is 240 kilometers per hour (kilometer per hour, km/h), which is about 75 meters per second (meter per second, m/s), and a sending time difference between the RS2 and the RS1 is 10 milliseconds (millisecond, ms). In this case, when the vehicle 1 receives the RS2, a location of the vehicle 2 has moved 75 centimeters (centimeters, cm). Consequently, a reference signal receive-transmit time difference does not correspond to an actual distance between the two vehicles, and positioning accuracy is reduced.

As shown in FIG. 4, in a non-terrestrial communication network (non-terrestrial network, NTN) communication system scenario, a satellite first sends an RS1 to a terminal device, and then the terminal device sends an RS2. For a low-orbit satellite, it is assumed that a satellite height is 600 km, a moving speed is 7.56 km/s, and a propagation delay is at least 2 ms to 4 ms (a specific value depends on a tilt angle of the satellite). In this case, even if the terminal device immediately sends the RS2 after receiving the RS1, a difference between a moment at which the RS2 arrives at the satellite and a moment at which the satellite sends the RS1 is 4 ms to 8 ms. In this period, the satellite may be shifted by 30 m to 60 m due to movement. As a result, a reference signal receive-transmit time difference does not correspond to an actual distance between the satellite and the terminal device, and positioning accuracy is reduced.

To resolve the foregoing problem, embodiments of this application provide technical solutions. The technical solutions include a communication system, a positioning method and a communication apparatus that are applied to the communication system, and the like. The following describes the technical solutions provided in this application with reference to the accompanying drawings.

The technical solutions provided in this application may be applied to various communication systems, for example, a long term evolution (long term evolution, LTE) system, an LTE frequency division duplex (frequency division duplex, FDD) system, an LTE time division duplex (time division duplex, TDD) system, a universal mobile telecommunication system (universal mobile telecommunication system, UMTS), a worldwide interoperability for microwave access (worldwide interoperability for microwave access, WiMAX) communication system, a 5th generation (5th generation, 5G) system or a new radio (new radio, NR) system, an NR (New Radio) vehicle-to-everything (vehicle-to-everything, V2X) system, and an NTN communication system. The 5G system in this application includes a 5G system in non-standalone (non-standalone, NSA) networking or a 5G system in standalone (standalone, SA) networking. The technical solutions provided in this application are also applied to a future communication system, for example, a 6th generation mobile communication system. Alternatively, the communication system may be a public land mobile communication network (public land mobile network, PLMN) network, a device-to-device (device-to-device, D2D) communication system, a machine-to-machine (machine-to-machine, M2M) communication system, an internet of things (Internet of Things, IoT) communication system, or another communication system. This is not limited herein.

The technical solutions provided in this application may be applied to various communication scenarios, for example, may be applied to one or more of the following communication scenarios: eMBB, URLLC, MTC, mMTC, device to device (device to device, D2D), V2X, vehicle to vehicle (vehicle to vehicle, V2V), IoT, and satellite positioning.

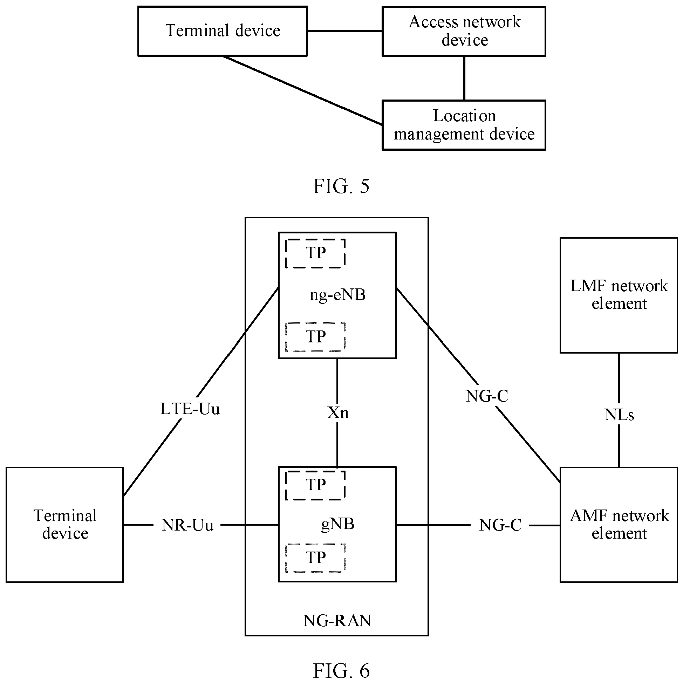

FIG. 5 is a schematic diagram of a communication system according to an embodiment of this application. As shown in FIG. 5, the communication system includes a terminal device, one or more access network devices (one access network device is used as an example for illustration in FIG. 5), and a location management device. The terminal device, the access network device, and the location management device may directly communicate with each other, or may communicate with each other through forwarding by another device. This is not specifically limited in embodiments of this application. Although not shown in the figure, the communication system may further include other network elements such as a mobility management network element, for example, an access and mobility management function (access and mobility management function, AMF) network element. This is not specifically limited in embodiments of this application.

The first device in the positioning method provided in this application may be the terminal device in FIG. 5, the second device in the positioning method provided in this application may be the terminal device or the access network device in FIG. 5, and the third device in the positioning method provided in this application may be the location management device in FIG. 5.

Optionally, the location management device in this embodiment of this application may be an LMF network element or a location management component (location management component, LMC) network element, or may be a local location management function (local location management function, LLMF) network element located in a network device.

Optionally, a network element or an entity corresponding to the access network device in FIG. 5 may be a next-generation radio access network (next-generation radio access network, NG-RAN) device in a 5G system. A network element or an entity corresponding to the location management device may be an AMF network element in a 5G system. This is not specifically limited in embodiments of this application. The access network device may also be referred to as an access network element.

For example, FIG. 6 is a schematic diagram of an architecture of a communication system to which a positioning method in an embodiment of this application is applied in a 5G system. As shown in FIG. 6, in the communication system, a terminal device is separately connected to an NG-RAN through an LTE-Uu interface and/or an NR-Uu interface by using a next-generation evolved NodeB (next-generation evolved NodeB, ng-eNB) and a next generation NodeB (generation NodeB, gNB). The NG-RAN is connected to a core network through an AMF network element through an NG-C interface. The NG-RAN may include one or more ng-eNBs (one ng-eNB is used as an example for illustration in FIG. 6). Alternatively, the NG-RAN may include one or more gNBs (one gNB is used as an example for illustration in FIG. 6). Alternatively, the NG-RAN may include one or more ng-eNBs and one or more gNBs. The ng-eNB is an LTE base station connected to the 5G core network, and the gNB is a 5G base station connected to the 5G core network. The core network may include an AMF network element and an LMF network element. The AMF network element is configured to implement a function such as access management, and the LMF network element is configured to implement a function such as positioning or positioning assistance. The AMF network element is connected to the LMF network element through an NLs interface.

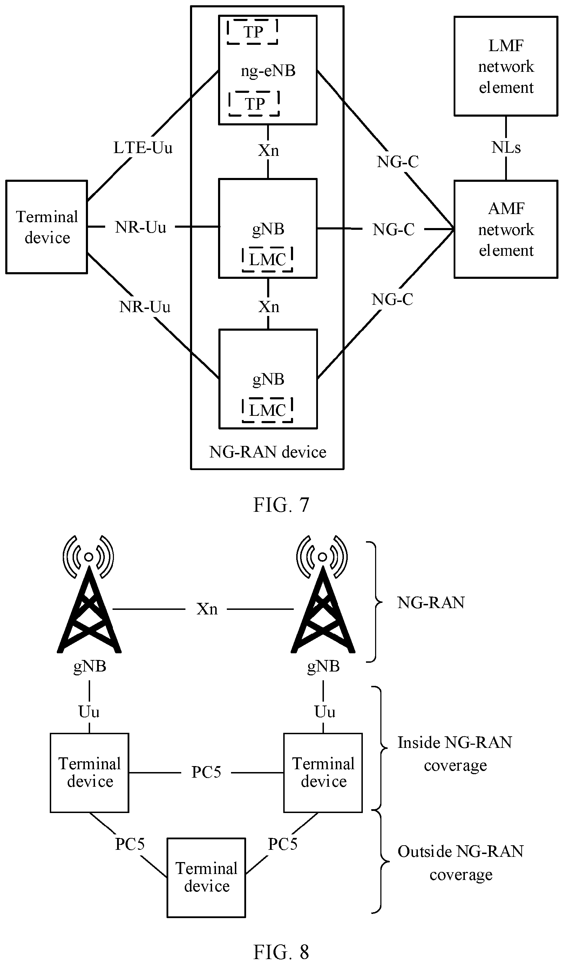

For example, FIG. 7 is a schematic diagram of another architecture of a communication system to which a positioning method in an embodiment of this application is applied in a 5G system. A difference between the architectures of the communication systems in FIG. 7 and FIG. 6 lies in that a location management function apparatus or component (for example, an LMF network element) in FIG. 6 is deployed in a core network, but a location management function apparatus or component (for example, an LMC network element) in FIG. 7 may be deployed in an NG-RAN device. As shown in FIG. 7, a gNB includes an LMC network element. The LMC network element is a partial functional component of the LMF network element and can be integrated into the gNB of the NG-RAN device.

For example, FIG. 8 is a schematic diagram of a connection between the terminal device and the NG-RAN in FIG. 5. As shown in FIG. 8, the terminal device may be connected to a gNB in an NG-RAN through a Uu interface, different gNBs may be connected through an Xn interface, and different terminal devices may be connected through a PC5 interface. The connection between the terminal device and the NG-RAN through the Uu interface may be understood as inside NG-RAN coverage (inside NG-RAN coverage), and the connection between the different terminal devices through the PC5 interface may be understood as outside NG-RAN coverage (outside NG-RAN coverage). In FIG. 8, the first device in the positioning method provided in this application may be the terminal device in FIG. 8, and the second device in the positioning method provided in this application may be the terminal device or the access network device in FIG. 8.

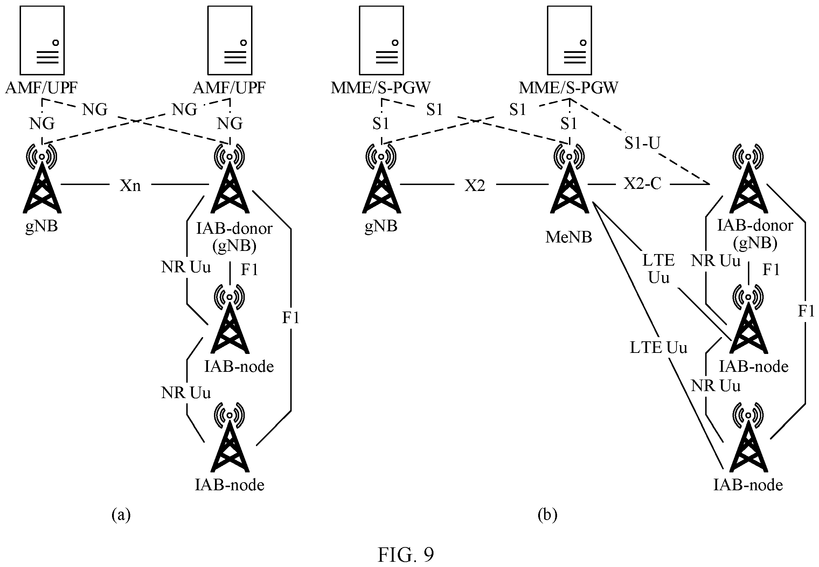

For example, FIG. 9 is a schematic diagram of a connection between a RAN and a core network according to an embodiment of this application. In (a) in FIG. 9, an AMF/UPF may be connected to a gNB in an NG-RAN through an NG interface, and different gNBs may be connected through an Xn interface. In (b) in FIG. 9, a mobility management entity (mobility management entity, MME)/serving primary gateway (serving primary gateway, S-PGW) may be connected to a gNB in an evolved universal terrestrial radio access network (evolved universal terrestrial radio access network, E-UTRAN) through an S1 interface. The MME/S-PGW may be further connected to an MeNB through an S1 interface. The MME/S-PGW may be further connected to an IAB-donor (IAB-donor) through an S1-U interface, the gNB may be connected to the MeNB through an X2 interface, the MeNB may be connected to an IAB-donor through an X2-C interface, and the MeNB may be connected to an IAB-node through an LET Uu interface. In (a) in FIG. 9 and (b) in FIG. 9, the gNB may be used as the integrated access and backhaul (integrated access and backhaul, IAB)-donor or the IAB-node (IAB-node). The IAB-donor and the IAB-node may be connected through an F1 interface or an NR Uu interface, and different IAB-nodes may be connected through the NR Uu interface. In FIG. 9, the first device in the positioning method provided in this application may be the terminal device in FIG. 9, and the second device in the positioning method provided in this application may be the terminal device or the access network device in FIG. 9.

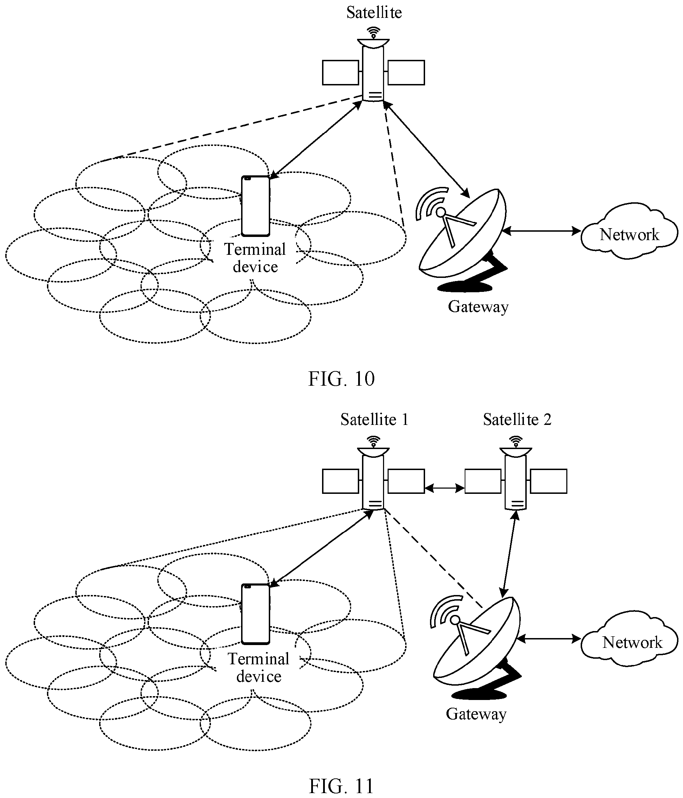

For example, FIG. 10 is a schematic diagram of a connection between the terminal device, the NG-RAN, and the core network in FIG. 5. As shown in FIG. 10, a network (which may also be referred to as a data network) includes the NG-RAN and the core network. The network is connected to a satellite through a gateway (for example, a satellite ground station), and the satellite is connected to the terminal device. The satellite may forward information from the terminal device to the NG-RAN and the core network through the gateway, or may forward information from the NG-RAN and the core network to the terminal device. FIG. 10 may also be understood as a non-terrestrial network typical scenario based on transparent payload (non-terrestrial network typical scenario based on transparent payload). In FIG. 10, the first device in the positioning method provided in this application may be the terminal device in FIG. 10, the second device in the positioning method provided in this application may be the satellite in FIG. 10, and the third device in the positioning method provided in this application may be an LMF network element (not shown in FIG. 10) in the core network of the network in FIG. 10.

For example, FIG. 11 is another schematic diagram of a connection between the terminal device, the NG-RAN, and the core network in FIG. 5. As shown in FIG. 11, a network (which may also be referred to as a data network) includes the NG-RAN and the core network. The network is connected to a satellite 2 through a gateway (for example, a satellite ground station), the satellite 2 is connected to a satellite 1 through an inter-satellite link (inter-satellite link, ISL), and the satellite 1 is connected to the terminal device. The satellite 1 and the satellite 2 may forward information from the NG-RAN and the core network to the terminal device, or forward information from the terminal device to the NG-RAN and the core network. If no ISL is established between the satellite 1 and the satellite 2 in FIG. 11, the satellite 1 may also communicate with the gateway. In this case, connections between the terminal device, the satellite 1, the gateway, and the network are the same as those in FIG. 10. FIG. 11 may also be understood as a non-terrestrial network typical scenario based on regenerative payload (non-terrestrial network typical scenario based on regenerative payload). In FIG. 11, the first device in the positioning method provided in this application may be the terminal device in FIG. 11, the second device in the positioning method provided in this application may be the satellite in FIG. 11, and the third device in the positioning method provided in this application may be an LMF network element (not shown in FIG. 11) in the core network of the network in FIG. 11.

It should be understood that the devices or function nodes included in the communication system shown in FIG. 5 to FIG. 11 are merely described as examples, and do not constitute a limitation on embodiments of this application. Actually, the communication systems in FIG. 5 to FIG. 11 may further include another network element, device, or function node that has an interaction relationship with the device or function node shown in the figure. This is not specifically limited herein. When the positioning method provided in this application is implemented, the communication system in FIG. 5 to FIG. 11 may also be referred to as a positioning system.

It should be understood that the interfaces in FIG. 5 to FIG. 11 are merely feasible examples. With evolution of communication technologies, names or functions of the interfaces in FIG. 5 to FIG. 11 may change. This is not limited herein.

By way of example, and not limitation, in embodiments of this application, the terminal device (terminal device) may be referred to as UE, a mobile station (mobile station, MS), a mobile terminal device (mobile terminal, MT), or the like. The terminal device may be a handheld terminal, an industrial application terminal, a home terminal, a vehicle terminal, or the like. Alternatively, the terminal device may be a mobile phone, a tablet computer, a computer with a wireless transceiver function, a virtual reality terminal device, an augmented reality terminal device, a wireless terminal in industrial control, a wireless terminal in unmanned driving, a wireless terminal in remote surgery, a wireless terminal in a smart grid, a wireless terminal in transportation security, a wireless terminal in a smart city, a wireless terminal in a smart home, a wireless terminal in a manned device, a machine type communication (machine type communication, MTC) terminal, an unmanned aerial vehicle, a robot, or the like. The manned device may be a vehicle, a train, a high-speed railway, a motor vehicle, a ship, an airplane, or the like.

By way of example, and not limitation, in embodiments of this application, the wearable device may also be referred to as a wearable intelligent device, and is a general name of a wearable device developed by intelligently designing daily wear through a wearable technology, such as glasses, gloves, watches, clothing, and shoes. The wearable device is a portable device that can be directly worn on the body or integrated into clothes or an accessory of a user. The wearable device is not only a hardware device, but also implements a powerful function through software support, data exchange, and cloud interaction. In a broad sense, the wearable intelligent device includes a full-function, large-size, and complete or partial functions that can be implemented without depending on a smartphone, for example, a smartwatch or smart glasses, and focuses on only a type of application function and needs to be used with another device such as a smartphone, for example, various smart bands and smart jewelry that perform physical sign monitoring.

In addition, the terminal device in embodiments of this application may alternatively be user equipment in an IoT system. An IoT is an important part of future development of information technologies. A main technical feature of the IoT is connecting a thing to a network through a communication technology, to implement an intelligent network for interconnection between a person and a machine or between one thing and another. In embodiments of this application, the IoT technology may implement massive connections, deep coverage, and terminal power saving through for example, a narrow band (narrow band, NB) technology.

In addition, in embodiments of this application, the terminal device may further include a sensor, for example, an intelligent printer, a train detector, or a gas station. Main functions of the terminal device include: collecting data (for some terminal devices), receiving control information and downlink data of an access network device, sending electromagnetic waves, and transmitting uplink data to the access network device.

Optionally, the access network device in embodiments of this application may be any communication device configured to communicate with the terminal device and having a radio transceiver function. The access network device includes but is not limited to an evolved NodeB (evolved NodeB, eNB), a baseband unit (baseband unit, BBU), an access point (access point, AP) in a wireless fidelity (wireless fidelity, Wi-Fi) system, a wireless relay node, a wireless backhaul node, a transmission point (transmission point, TP), a transmission reception point (transmission reception point, TRP), or the like. The access network device may alternatively be a gNB, a TRP, or a TP in a 5G system, or one antenna panel or a group of antenna panels (including a plurality of antenna panels) of a base station in a 5G system. In addition, the access network device may alternatively be a network node that constitutes a gNB or a TP, for example, a BBU or a distributed unit (distributed unit, DU).

In some deployments, a gNB may include a central unit (central unit, CU) and a DU. In addition, the gNB may further include an active antenna unit (active antenna unit, AAU). The CU implements some functions of the gNB, and the DU implements some functions of the gNB. For example, the CU is responsible for processing a non-real-time protocol and service, and implements functions of a radio resource control (radio resource control, RRC) layer and a packet data convergence protocol (packet data convergence protocol, PDCP) layer. The DU is responsible for processing a physical layer protocol and a real-time service, and implements functions of a radio link control (radio link control, RLC) layer, a media access control (media access control, MAC) layer, and a physical (physical, PHY) layer. The AAU implements some physical layer processing functions, radio frequency processing, and a function related to an active antenna. Information at the RRC layer is eventually converted into information at the PHY layer, or is converted from information at the PHY layer. Therefore, in this architecture, higher layer signaling such as RRC layer signaling may also be considered as being sent by the DU or sent by the DU and the AAU. It may be understood that the access network device may be a device including one or more of a CU node, a DU node, and an AAU node.

Optionally, in embodiments of this application, communication between the access network device and the terminal device may be performed by using a licensed spectrum, communication may be performed by using an unlicensed spectrum, or communication may be performed by using both a licensed spectrum and an unlicensed spectrum. The access network device and the terminal device may communicate with each other by using a spectrum below 6 gigahertz (gigahertz, GHz), or may communicate with each other by using a spectrum above 6 GHz, or may communicate with each other by using both a spectrum below 6 GHz and a spectrum above 6 GHz. Spectrum resources used between the access network device and the terminal device 101 are not limited in embodiments of this application.

Optionally, the terminal device, the access network device, or the location management device in embodiments of this application may be deployed on land, including indoors, outdoors, handheld, or vehicle-mounted, or may be deployed on water, or may be deployed on an airplane, a balloon, or a satellite in the air. An application scenario of the terminal device, the access network device, or the location management device is not limited in embodiments of this application.

Optionally, in embodiments of this application, the terminal device, the access network device, or the location management device may include a hardware layer, an operating system layer that runs on the hardware layer, and an application layer that runs on the operating system layer. The hardware layer includes hardware such as a central processing unit (central processing unit, CPU), a memory management unit (memory management unit, MMU), and a memory (also referred to as a main memory). The operating system may be any one or more types of computer operating systems that implement service processing through a process (process), for example, a Linux operating system, a Unix operating system, an Android operating system, an iOS operating system, or a Windows operating system. The application layer includes applications such as a browser, an address book, word processing software, and instant messaging software. In addition, embodiments of this application do not particularly limit a specific structure of an execution body of the method provided in embodiments of this application, as long as communication can be performed according to the method provided in embodiments of this application by running a program that records code of the method provided in embodiments of this application. For example, the execution body of the positioning method provided in embodiments of this application may be the terminal device, the access network device, or the location management device, or a functional module that is in the terminal device, the access network device, or the location management device and capable of invoking the program and executing the program.

In other words, related functions of the terminal device, the access network device, or the location management device in embodiments of this application may be implemented by one device, or may be implemented by a plurality of devices together, or may be implemented by one or more functional modules in one device. This is not specifically limited in embodiments of this application. It may be understood that the foregoing function may be a network element in a hardware device, may be a software function running on dedicated hardware, a combination of hardware and software, or a virtualized function instantiated on a platform (for example, a cloud platform).

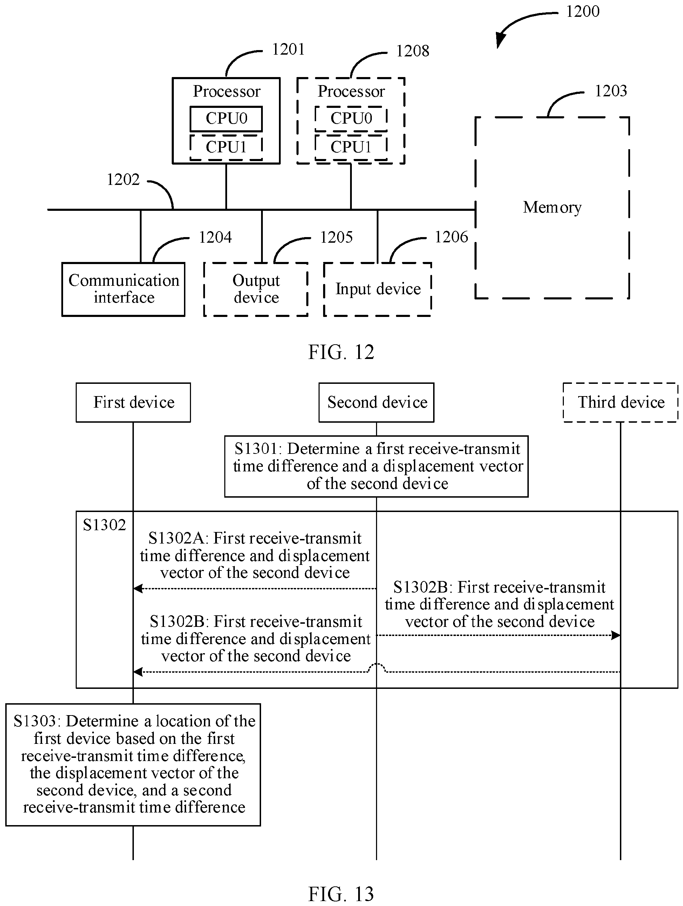

For example, related functions of the terminal device, the access network device, or the location management device in embodiments of this application may be implemented by a communication apparatus 1200 in FIG. 12. FIG. 12 is a schematic diagram of a structure of a communication apparatus 1200 according to an embodiment of this application. The communication apparatus 1200 includes one or more processors 1201, a communication line 1202, and at least one communication interface (in FIG. 12, only an example in which the communication interface 1204 and one processor 1201 are included is used for descriptions), and optionally, may further include a memory 1203.

The processor 1201 may be a CPU, a microprocessor, an application-specific integrated circuit (application-specific integrated circuit, ASIC), or one or more integrated circuits configured to control program execution in the solution of this application.

The communication line 1202 may include a path for connecting different components.

The communication interface 1204 may be a transceiver module configured to communicate with another device or communication network, for example, an Ethernet, an access network (radio access network, RAN), or a wireless local area network (wireless local area networks, WLAN). For example, the transceiver module may be an apparatus such as a transceiver or a transceiver. Optionally, the communication interface 1204 may alternatively be a transceiver circuit located in the processor 1201, and is configured to implement signal input and signal output of the processor. The communication interface 1204 may be a transceiver, and may include a receiver and a transmitter. The receiver is configured to implement a sending function of the communication apparatus 1200, and the receiver is configured to implement a receiving function of the communication apparatus 1200.

The memory 1203 may be an apparatus having a storage function. The memory 1203 may be a read-only memory (read-only memory, ROM), another type of static storage device that can store static information and instructions, a random access memory (random access memory, RAM), or another type of dynamic storage device that can store information and instructions, or may be an electrically erasable programmable read-only memory (electrically erasable programmable read-only memory, EEPROM), a compact disc read-only memory (compact disc read-only memory, CD-ROM) or other compact disc storage, optical disc storage (including a compact disc, a laser disc, an optical disc, a digital versatile disc, a Blu-ray disc, and the like), a magnetic disk storage medium or another magnetic storage device, or any other medium that can be configured to carry or store expected program code in a form of an instruction structure or a data structure and that can be accessed by a computer, but is not limited thereto. The memory may exist independently and is connected to the processor through the communication line 1202. The memory may alternatively be integrated with the processor.

The memory 1203 is configured to store computer-executable instructions for performing the solutions in this application, and execution of the computer-executable instructions is controlled by the processor 1201. The processor 1201 is configured to execute the computer-executable instructions stored in the memory 1203, to implement the positioning method provided in embodiments of this application.

Alternatively, in embodiments of this application, the processor 1201 may perform a processing related function in the positioning method provided in the following embodiment of this application, and the communication interface 1204 is responsible for communicating with another device or a communication network. This is not specifically limited in embodiments of this application.

The computer-executable instructions in embodiments of this application may also be referred to as application program code. This is not specifically limited in embodiments of this application.

During specific implementation, in an embodiment, the processor 1201 may include one or more CPUs such as a CPU 0 and a CPU 1 in FIG. 12.

During specific implementation, in an embodiment, the communication apparatus 1200 may include a plurality of processors, for example, the processor 1201 and a processor 1208 in FIG. 12. Each of the processors may be a single-core (single-CPU) processor, or may be a multicore (multi-CPU) processor. The processor herein may be one or more devices, circuits, and/or processing cores configured to process data (for example, computer program instructions).

During specific implementation, in an embodiment, the communication apparatus 1200 may further include an output device 1205 and an input device 1206. The output device 1205 communicates with the processor 1201, and may display information in a plurality of manners.

The communication apparatus 1200 may be a general-purpose apparatus or a dedicated apparatus. For example, the communication apparatus 1200 may be a desktop computer, a portable computer, a network server, a personal digital assistant (personal digital assistant, PDA), a mobile phone, a tablet computer, a wireless terminal device, an embedded device, or a device having a structure similar to that in FIG. 12. A type of the communication apparatus 1200 is not limited in this embodiment of this application. When the positioning method provided in this application is implemented, the communication apparatus may also be referred to as a communication apparatus.

The communication system provided in embodiments of this application is described above. The following describes a positioning method provided in embodiments of this application with reference to the accompanying drawings.

The positioning method provided in embodiments of this application may be applied to the communication system shown in FIG. 5 to FIG. 11, and may be performed by a first device, a second device, or a third device. According to the positioning method provided in embodiments of this application, positioning resolving can be performed based on a transmission distance of a reference signal between the first device and the second device and a relative displacement between the two devices. In this way, a parameter that affects positioning precision, that is, the relative displacement between the devices participating in positioning, may be added to positioning resolving, so that a first device in a moving state can be accurately positioned, and the device in the moving state implements high-precision positioning.

Based on different execution bodies for resolving a location of the first device, the positioning method provided in embodiments of this application may be classified into two types: In a first type, the first device performs positioning resolving on the location of the first device; and in a second type, the third device performs positioning resolving on the location of the first device. The following separately describes the two types of positioning methods.

In the first type, the first device performs positioning resolving on the location of the first device.

FIG. 13 is a schematic flowchart of a positioning method according to an embodiment of this application. The positioning method may be performed by a first device, a second device, or a third device. The third device is optional (for an optional case, refer to the following related descriptions of S1302), and is shown in a dashed box in FIG. 13. The positioning method shown in FIG. 13 may include S1301 to S1303. The following sequentially describes the steps.

S1301: A second device determines a first receive-transmit time difference and a displacement vector of the second device.

The first receive-transmit time difference is a time difference between receiving time of a first reference signal and sending time of a second reference signal. The first reference signal is a reference signal of the first device received by the second device, and the second reference signal is a reference signal sent by the second device. The displacement vector of the second device is a displacement of the second device in a time period corresponding to the first receive-transmit time difference. The first receive-transmit time difference and the displacement vector of the second device may be carried in one piece of information, or may be carried in two pieces of information. This is not limited herein.

The first reference signal and the second reference signal may be reference signals used for positioning. For example, the first reference signal and the second reference signal may be sidelink (sidelink, SL) RSs, for example, an SL channel state information reference signal (channel state information reference signal, CSI-RS) or an SL positioning reference signal (positioning reference signal, PRS). Alternatively, the first reference signal and the second reference signal may be uplink (uplink, UL) RSs, for example, a UL sounding reference signal (sounding reference signal, SRS). Alternatively, the first reference signal and the second reference signal may be downlink (downlink, DL) RSs, for example, a DL PRS. For example, when both the first device and the second device are terminal devices, the first reference signal and the second reference signal may be SL RSs. When the first device is a terminal device and the second device is an access network device, the first reference signal may be a UL RS, and the second reference signal is a DL RS. It may be understood that types of the first reference signal and the second reference signal are not limited in this embodiment of this application. In an actual application process, the types of the first reference signal and the second reference signal may be determined based on a requirement. For example, in a V2X scenario, the first reference signal and the second reference signal may be SL RSs. In a vehicle-to-infrastructure (vehicle-to-infrastructure, V2I) scenario, the first reference signal and the second reference signal may be UL PRSs or DL PRSs.

Optionally, the receiving time of the first reference signal may be a subframe start moment of the reference signal of the first device received by the second device, and the sending time of the second reference signal may be a subframe start moment of the reference signal sent by the second device. Alternatively, in other words, the receiving time of the first reference signal may be a subframe boundary (subframe boundary) of the reference signal of the first device received by the second device, and the sending time of the second reference signal may be a subframe boundary of the reference signal sent by the second device. In this embodiment of this application, the subframe boundary may be understood as start time of $1^{st}$ symbol in the subframe or end time of a last symbol in the subframe.

The following describes, with reference to an example, a process in which the second device determines the first receive-transmit time difference and the displacement vector of the second device.

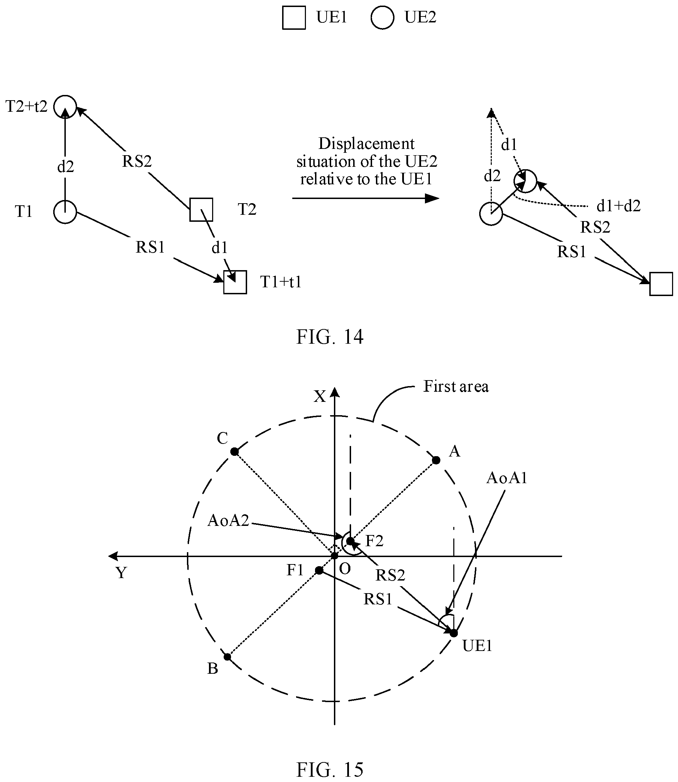

For example, FIG. 14 is a schematic diagram of a scenario in which UE1 is positioned according to an embodiment of this application. In FIG. 14, the UE1 is a first device, and the UE2 is a second device. The UE2 sends an RS1 at a moment T1, and the UE1 receives the RS1 of the UE2 at a moment T1+t1. The UE1 sends an RS2 at a moment T2, and the UE2 receives the RS2 of the UE1 at a moment T2+t2. d1 is a displacement vector of the UE1 from the moment T2 to the moment T1+t1, and d2 is a displacement vector of the UE2 from the moment T1 to the moment T2+t2. Content in FIG. 14 is uniformly described herein, and details are not described below again.

As shown in FIG. 14, from a perspective of the UE2, the UE2 sends a second reference signal (denoted as the RS1 in FIG. 14) to the UE1 at the moment T1, and the UE2 receives a first reference signal (denoted as the RS2 in FIG. 14) of the UE1 at the moment T2+t2, so that the UE2 may determine that the first receive-transmit time difference is T2+12-T1. The moment T1 may be a subframe start moment at which the UE2 sends the RS1 to the UE1, and the moment T2+t2 may be a subframe start moment at which the UE2 receives the RS2 of the UE1. For example, if the subframe start moment at which the UE2 receives the RS2 of the UE1 is 8 (hour):59 (minute):38 (second):009 (millisecond):060 (microsecond), that is, the moment T2+t2 is 8:59:38:009:060, and the subframe start moment at which the UE2 sends the RS1 to the UE1 is 8 (hour):59 (minute):38 (second):000 (millisecond):030 (microsecond), that is, the moment T1 is 8:59:38:000:030, the UE2 may determine that the first receive-transmit time difference is T2+t2-T1=8:59:38:009:060-8:59:38:000:030=9.03 ms.

In FIG. 14, a time period corresponding to the first receive-transmit time difference is from the moment T1 to the moment T2+t2. The UE2 may further determine a displacement between the moment T1 and the moment T2+t2 based on movement information (for example, a moving speed) of the UE2. For example, the UE2 may measure the displacement between the moment T1 and the moment T2+t2 by using an acceleration sensor, to obtain the displacement vector of the second device.

A start point of the displacement vector of the second device may be a location at a moment when the second device sends the second reference signal, and an end point of the displacement vector of the second device may be a location at a moment when the second device receives the first reference signal. Alternatively, a start point of the displacement vector of the second device may be a location at a moment when the second device receives the first reference signal, and an end point of the displacement vector of the second device may be a location at a moment when the second device sends the second reference signal. This is not limited in this application. For example, in FIG. 14, the start point of the displacement vector of the UE2 may be a location of the UE2 at the moment T1, and the end point of the displacement vector of the UE2 may be a location of the UE2 at the moment T2+t2, that is, the displacement vector of the second device is a vector d2=(x2, y2, z2) in FIG. 14. Alternatively, the start point of the displacement vector of the UE2 may be a location of the UE2 at the moment T2+t2, and the end point of the displacement vector of the UE2 may be a location of the UE2 at the moment T1. For ease of understanding, unless otherwise specified, in this embodiment of this application, the start point of the displacement vector of the second device is the location at the moment when the second device sends the second reference signal, and the end point of the displacement vector of the second device is the location at the moment when the second device receives the first reference signal.

It should be noted that a coordinate system corresponding to the displacement vector of the second device is not limited in this application. The coordinate system corresponding to the displacement vector of the second device may be a global coordinate system. For example, the global coordinate system may be that a due north direction is defined as an x-axis direction, a due west direction is defined as a y-axis direction, and a right above direction is defined as a z-axis direction. Alternatively, the coordinate system corresponding to the displacement vector of the second device may be a local coordinate system. For example, the local coordinate system may be that a forward direction of the device is defined as an x-axis direction, a left direction of the forward direction of the device is defined as a y-axis direction, and a right above direction is defined as a z-axis direction. For ease of understanding, unless otherwise specified, in this embodiment of this application, an example in which the coordinate system corresponding to the displacement vector of the second device is the global coordinate system is used to describe a positioning process of the first device.

Optionally, in S1301, the second device may further measure an angle of arrival of the first reference signal, and send the measured angle of arrival of the first reference signal to the first device. The first receive-transmit time difference, the displacement vector of the second device, and the angle of arrival of the first reference signal may all be carried in one piece of information, or may be separately carried in different pieces of information. This is not limited herein.

For example, in FIG. 14, the UE2 may measure an angle of arrival of the RS2, and then the UE2 may send the angle of arrival of the RS2 to the UE1. A ZOA is also one type of the angle of arrival. In other words, the angle of arrival of the first reference signal may be an AOA or a ZOA of the first reference signal. This is not limited in this application. In this way, when the location of the first device is determined, positioning resolving may be further performed based on a transmission distance of the reference signal between the first device and the second device, a relative displacement between the two devices, and the angle of arrival of the first reference signal, so that positioning precision can be further improved, and a positioning resolving process can be simplified. For a specific implementation, refer to related descriptions in the following process 1 to process 3. Details are not described herein again.

Certainly, for ease of understanding, unless otherwise specified, the angle of arrival of the first reference signal in this embodiment of this application may be understood as the AOA of the first reference signal.

S1302: The second device sends the first receive-transmit time difference and the displacement vector of the second device. Correspondingly, the first device receives the first receive-transmit time difference of the second device and the displacement vector of the second device.

Optionally, as shown in FIG. 13, S1302 may include S1302A: The second device sends the first receive-transmit time difference and the displacement vector of the second device to the first device. The first device receives the first receive-transmit time difference and the displacement vector of the second device from the second device.

Optionally, when the communication system to which the positioning method shown in FIG. 13 is applied further includes a third device, and the positioning method shown in FIG. 13 is further performed by the third device, as shown in FIG. 13, S1302 may include S1302B: The second device sends the first receive-transmit time difference and the displacement vector of the second device to the third device, and the third device receives the first receive-transmit time difference and the displacement vector of the second device from the second device; or the third device sends the first receive-transmit time difference and the displacement vector of the second device to the first device, and the first device receives the first receive-transmit time difference and the displacement vector of the second device from the third device.

In other words, the first receive-transmit time difference and the displacement vector of the second device that are sent by the second device may be sent to the first device (for example, S1302A), or may be sent to the first device by using the third device in a forwarding manner (for example, S1302B). A manner of sending the first receive-transmit time difference and the displacement vector of the second device is not limited in this application.

S1303: The first device determines the location of the first device based on the first receive-transmit time difference, the displacement vector of the second device, and a second receive-transmit time difference.

The second receive-transmit time difference is a time difference between receiving time of a third reference signal and sending time of a fourth reference signal, the third reference signal is a reference signal of the second device received by the first device, and the fourth reference signal is a reference signal sent by the first device.

Both the third reference signal and the fourth reference signal may be reference signals used for positioning. For example, the third reference signal and the fourth reference signal may be SL RSs, for example, an SL CSI-RS or an SL PRS. Alternatively, the third reference signal and the fourth reference signal may be UL RSs, for example, a UL SRS. Alternatively, the third reference signal and the fourth reference signal may be DL RSs, for example, a DL PRS. For example, when both the first device and the second device are terminal devices, the third reference signal and the fourth reference signal may be SL RSs. When the first device is a terminal device and the second device is an access network device, the third reference signal may be a DL RS, and the fourth reference signal is a UL RS. It may be understood that types of the third reference signal and the fourth reference signal are not limited in this embodiment of this application. In an actual application process, the types of the third reference signal and the fourth reference signal may be determined based on a requirement. For example, in a V2X scenario, the third reference signal and the fourth reference signal may be SL RSs. In a V2I scenario, the third reference signal and the fourth reference signal may be UL PRSs or DL PRSs.

Optionally, the receiving time of the third reference signal may be a subframe start moment of the reference signal of the second device received by the first device, and the sending time of the fourth reference signal may be a subframe start moment of the reference signal sent by the first device. Alternatively, in other words, the receiving time of the third reference signal may be a subframe boundary of the reference signal of the second device received by the first device, and the sending time of the fourth reference signal may be a subframe boundary of the reference signal sent by the first device.

When performing S1303, the first device may first determine the second receive-transmit time difference, and then determine the location of the first device based on the first receive-transmit time difference, the displacement vector of the second device, and the second receive-transmit time difference. The following first describes, with reference to an example, a process in which the first device determines the second receive-transmit time difference in the second receive-transmit time difference.

For example, as shown in FIG. 14, the UE1 is a first device, and the UE2 is a second device. From a perspective of the UE1, the UE1 receives a third reference signal (denoted as RS1 in FIG. 14) of the UE2 at a moment T1+t1, and the UE1 sends a fourth reference signal (denoted as RS2 in FIG. 14) to the UE2 at a moment T2, so that the UE1 may determine that the second receive-transmit time difference is T1+t1-T2. The moment T1+t1 may be a subframe start moment at which the UE1 receives the RS1 of the UE2, and the moment T2 may be a subframe start moment at which the UE1 sends the RS2 to the UE2. For example, if the subframe start moment at which the UE1 receives the RS1 of the UE2 is 8 (hour):59 (minute):38 (second):000 (millisecond):010 (microsecond), that is, the moment T1+t1 is 8:59:38:000:010, and the subframe start moment at which the UE1 sends the RS2 to the UE2 is 8 (hour):59 (minute):38 (second):009 (millisecond):000 (microsecond), that is, the moment T2 is 8:59:38:009:000, the UE1 may determine that the second receive-transmit time difference is T1+t1-T2=8:59:38:000:010-8:59:38:009:000=-8.99 ms.

Optionally, the first device may further determine a displacement vector of the first device, where the displacement vector of the first device is a displacement of the first device in a time period corresponding to the second receive-transmit time difference. In this way, an implementation of determining the relative displacement between the first device and the second device may be provided. For example, the first device may determine the relative displacement between the first device and the second device based on the displacement vector of the second device and the displacement vector of the first device, so that the first device may perform positioning resolving based on the transmission distance of the reference signal between the first device and the second device and the relative displacement between the two devices, so that a first device in a moving state can be accurately positioned. For more detailed descriptions, refer to the following process 1 to process 3. Details are not described herein again.

For example, in FIG. 14, a time period corresponding to the second receive-transmit time difference is from the moment T1+t1 to the moment T2. The UE1 may further determine, based on movement information of the UE1, a displacement between the moment T1+t1 and the moment T2. For example, the UE1 may measure the displacement between the moment T1+t1 and the moment T2 by using an acceleration sensor, to obtain the displacement vector of the first device.

Similar to the displacement vector of the second device, a start point of the displacement vector of the first device may be a location at a moment when the first device sends the fourth reference signal, and an end point of the displacement vector of the first device may be a location at a moment when the first device receives the third reference signal. Alternatively, a start point of the displacement vector of the first device may be a location at a moment when the first device receives the third reference signal, and an end point of the displacement vector of the first device may be a location at a moment when the first device sends the fourth reference signal. This is not limited in this application. For example, in FIG. 14, the start point of the displacement vector of the UE1 may be a location of the UE1 at the moment T2, and the end point of the displacement vector of the UE1 may be a location of the UE1 at the moment T1+t1, that is, the displacement vector of the first device is a vector d1 in FIG. 14. Alternatively, the start point of the displacement vector of the UE1 may be a location of the UE1 at the moment T1+t1, and the end point of the displacement vector of the UE1 may be a location of the UE1 at the moment T2. For ease of understanding, unless otherwise specified, in this embodiment of this application, the start point of the displacement vector of the first device is the location at the moment when the first device sends the fourth reference signal, and the end point of the displacement vector of the first device is the location at the moment when the first device receives the third reference signal.

To correctly indicate the relative displacement between the two devices by a sum of the displacement vector of the first device and the displacement vector of the second device, in this embodiment of this application, between receiving and sending of a reference signal, a start point of a displacement vector of a device is a location at a moment when a reference signal is received, and an end point of the displacement vector of the device is a location at a moment when a reference signal is sent; or a start point of a displacement vector of a device is a location at a moment when a reference signal is sent, and an end point of the displacement vector of the device is a location at a moment when a reference signal is received. The first device and the second device are used as an example. When a start point of a displacement vector of the first device is a location at a moment when the first device sends a fourth reference signal, and an end point of the displacement vector of the first device is a location at a moment when the first device receives a third reference signal, a start point of a displacement vector of the second device is a location at a moment when the second device sends a second reference signal, and an end point of the displacement vector of the second device is a location at a moment when the second device receives a first reference signal. Correspondingly, when the start point of the displacement vector of the first device is the location at the moment when the first device receives the third reference signal, and the end point of the displacement vector of the first device is the location at the moment when the first device sends the fourth reference signal, the start point of the displacement vector of the second device is the location at the moment when the second device receives the first reference signal, and the end point of the displacement vector of the second device is the location at the moment when the second device sends the second reference signal.

Certainly, optionally, between receiving and sending the reference signal, if the start point of the displacement vector of the device is a location at an earliest moment in a process of receiving and sending the reference signal, and the end point of the displacement vector of the device is a location at a latest moment in a process of receiving and sending the reference signal, the relative displacement between the first device and the second device may also be a difference between the displacement vector of the first device and the displacement vector of the second device.

It should be noted that a coordinate system corresponding to the displacement vector of the first device is not limited in this application either, and the coordinate system corresponding to the displacement vector of the first device may be a global coordinate system or a local coordinate system. For ease of understanding, unless otherwise specified, in this embodiment of this application, an example in which the coordinate system corresponding to the displacement vector of the first device is the global coordinate system is used to describe a positioning process of the first device.

Optionally, in other words, in S1303, the first device may further measure an angle of arrival of the third reference signal. For example, in FIG. 14, the UE1 may measure an angle of arrival of the RS1. A ZOA is also one type of the angle of arrival. In other words, the angle of arrival of the third reference signal may be an AOA or a ZOA of the third reference signal. This is not limited in this application. In this way, when the location of the first device is determined, positioning resolving may be further performed based on a transmission distance of the reference signal between the first device and the second device, a relative displacement between the two devices, and the angle of arrival of the third reference signal, so that positioning precision can be further improved, and a positioning resolving process can be simplified. For a specific implementation, refer to related descriptions in the following process 1 to process 3. Details are not described herein again.

Certainly, for ease of understanding, unless otherwise specified, the angle of arrival of the third reference signal in this embodiment of this application may be understood as the AOA of the third reference signal.

In S1303, after determining the second receive-transmit time difference, a manner in which the first device determines the location of the first device based on the first receive-transmit time difference, the displacement vector of the second device, and the second receive-transmit time difference may be the following process 1 to process 3. Details are described in sequence below.

In the process 1, the first device determines the relative displacement between the first device and the second device based on the displacement vector of the second device.

Optionally, if the first device is in a static state, the first device may determine the displacement vector of the second device as the relative displacement between the first device and the second device. In this case, the second device may be in a moving state or a static state. This is not limited herein.

Optionally, the determining the location of the first device based on the first receive-transmit time difference, the displacement vector of the second device, and a second receive-transmit time difference may include: determining the location of the first device based on the first receive-transmit time difference, the displacement vector of the second device, the second receive-transmit time difference, and a displacement vector of the first device. The first device may determine the relative displacement between the first device and the second device based on the displacement vector of the first device and the displacement vector of the second device. For example, the first device may determine a sum of the displacement vector of the first device and the displacement vector of the second device as the relative displacement between the first device and the second device. Then, the first device may determine the location of the first device based on the relative displacement between the first device and the second device, the first receive-transmit time difference, and the second receive-transmit time difference (refer to the following process 2 and process 3).

For example, in two-dimensional space, as shown in FIG. 14, a displacement vector of the UE1 is d1, and a displacement vector of the UE2 is d2. In this case, it may be determined that a relative displacement between the UE1 and the UE2 is d1+d2. Assuming that d1=(x1, y1) and d2=(x2, y2), the relative displacement between the UE1 and the UE2 is d1+d2=(x1+x2, y1+y2). If the UE1 is used as a reference object, a displacement situation of the UE2 relative to the UE1 may be determined from a perspective of the UE1 according to a geometric relationship between vectors, as shown in FIG. 14.

In the process 2, the first device determines, based on the first receive-transmit time difference and the second receive-transmit time difference, a time transmission distance of the reference signal between the first device and the second device.

A sum of the first receive-transmit time difference and the second receive-transmit time difference represents time for round-trip propagation of the reference signal between the two devices. A propagation distance of the reference signal between the first device and the second device may be calculated according to a relationship between a distance, the time, and a light speed. For example, if the time transmission distance of the reference signal between the first device and the second device is denoted as L, L=(first receive-transmit time difference+second receive-transmit time difference)×c, where c is the light speed.

For example, as shown in FIG. 14, assuming that the first receive-transmit time difference is T2+t2-T1=9.03 ms, and the second receive-transmit time difference is T1+t1-T2=-8.99 ms, the sum of the first receive-transmit time difference and the second receive-transmit time difference is T2+t2-T1+T1+t1-T2=t1+t2=9.03 ms-8.99 ms=40 microseconds (microsecond, μs). Further assuming that c=3×108 m/s, the propagation distance of the reference signal between the first device and the second device is L=40 μs×c=12000 m, that is, a sum of an RS1 propagation distance and an RS2 propagation distance is 12000 m.

Optionally, the first receive-transmit time difference may be a value obtained by performing a modulo operation of the difference between the receiving time of the first reference signal and the sending time of the second reference signal mod a first value, and the second receive-transmit time difference may be a value obtained by performing a modulo operation of the receiving time of the third reference signal and the sending time of the fourth reference signal mod the first value. In other words, if the receiving time of the first reference signal is denoted as RX1, the sending time of the second reference signal is denoted as TX1, the receiving time of the third reference signal is denoted as RX2, and the sending time of the fourth reference signal is denoted as TX2, in S1301, the second device may perform a modulo operation on the first value by using (RX1-TX1) to obtain a modulo-operated first receive-transmit time difference. Correspondingly, the first device may perform a modulo operation on the first value by using (RX2-TX2) to obtain a modulo-operated second receive-transmit time difference. In addition, the first device may determine, based on the modulo-operated first receive-transmit time difference and the modulo-operated second receive-transmit time difference, a time transmission distance of the reference signal between the first device and the second device.

The first value is a value configured by a network device for the terminal device, or a value reported by the terminal device to the network device, or a value agreed on in advance (for example, agreed on in a protocol). This is not limited in this application. A size of the first value may be 2 ms, 1 ms, 0.5 ms, or the like. In this embodiment of this application, an example in which the size of the first data is 1 ms is used to describe a positioning process of the first device, but this does not mean that the first data is limited to 1 ms. When the first value is 1 ms, the modulo-operated first receive-transmit time difference or the modulo-operated second receive-transmit time difference may be constrained within an interval whose length is 1 ms. Left and right endpoints of the interval may be different according to a modulo rule. For example, a value of the modulo-operated first receive-transmit time difference may be constrained within [0 ms, 1 ms), or may be constrained within [-0.5 ms, 0.5 ms).

This is not limited in this application, in actual application, the value may be adjusted based on a requirement. For ease of descriptions, unless otherwise specified, in this embodiment of this application, an example in which the value of the modulo-operated first receive-transmit time difference may be limited to [0 ms, 1 ms) is used to describe a positioning process of the first device.

For example, as shown in FIG. 14, assuming that the first value is 1 ms, RX1 is 8:59:38:000:010, and TX1 is 8:59:38:009:000, (RX1-TX1) =8:59:38:000:010-8:59:38:009:000=-8.99 ms, a modulo operation is performed on 1 ms by using -8.99 ms, and a value obtained through the modulo operation is 0.01 ms (10 $\mu$s), so that the modulo-operated first receive-transmit time difference is 0.01 ms (10 $\mu$s). Assuming that RX2 is 8:59:38:009:060, and TX2 is 8:59:38:000:030, (RX1-TX1)=8:59:38:009:060-8:59:38:000:030=9.03 ms, a modulo operation is performed on 1 ms by using 9.03 ms, and a value obtained through the modulo operation is 0.03 ms (30 $\mu$s), so that the modulo-operated second receive-transmit time difference is 0.03 ms (30 $\mu$s). A sum of the first receive-transmit time difference and the second receive-transmit time difference is 40 $\mu$s, and a sum of the first receive-transmit time difference without the modulo operation and the second receive-transmit time difference without the modulo operation is 9.03 ms-8.99 ms=40 $\mu$s. Therefore, the sum of the modulo-operated first receive-transmit time difference and the modulo-operated second receive-transmit time difference is the same as the sum of the first receive-transmit time difference without the modulo operation and the second receive-transmit time difference without the modulo operation. In this way, quantities of bits of the modulo-operated first receive-transmit time difference and the modulo-operated second receive-transmit time difference are reduced. In this way, a quantity of bits of signaling carrying the first receive-transmit time difference and the second receive-transmit time difference can be reduced, signaling overheads in a communication process can be reduced, and transmission efficiency can be improved.

The first value may meet the following requirement: The first value is a positive number, and a product of the first value and the light speed does not exceed a maximum distance between the two devices. For example, it is assumed that a maximum distance between two devices on the earth is 3×105 m, and a first value×c<3×105 m, so that the first value does not exceed 1 ms.

In the process 3, the first device determines the location of the first device based on the time transmission distance of the reference signal between the first device and the second device and the relative displacement between the first device and the second device.

With reference to FIG. 14 and based on a geometric relationship between the propagation distance of the reference signal between the first device and the second device and the relative displacement between the first device and the second device, it may be learned that the location of the first device is in a first area. A shape of the first area is an ellipsoid or an ellipse, and two focal points of the first area are head and tail endpoints of a first vector. In addition, the first vector is a sum of the displacement vector of the first device and the displacement vector of the second device, and a length of a major axis of the first area is a distance corresponding to a sum of the second receive-transmit time difference and the first receive-transmit time difference. In other words, the first vector is the relative displacement between the first device and the second device, and the length of the major axis of the first area is the transmission distance of the reference signal between the first device and the second device. In other words, the first device is located on an ellipsoid or an ellipsoid that is determined based on the transmission distance of the reference signal between the first device and the second device and the relative displacement between the first device and the second device. In this way, an implementation of determining the location of the first device may be provided. For example, the first device may establish, based on the transmission distance of the reference signal between the first device and the second device and the relative displacement between the two devices, an expression of the first area whose shape is the ellipsoid or the ellipsoid, so that the first device may perform positioning resolving based on the transmission distance of the reference signal between the first device and the second device and the relative displacement between the two devices, so that the first device in the moving state can be accurately positioned.

The location of the first device is on a boundary of the first area. For example, when the shape of the first area is an ellipsoid, the location of the first device is on an ellipsoid surface. When the shape of the first area is an ellipse, the location of the first device is on an ellipse circumference.

For example, the process 3 may include: The first device may determine the first area based on the transmission distance of the reference signal between the first device and the second device and the relative displacement between the first device and the second device; and then determine the location of the first device based on the first area.

For ease of descriptions, in this embodiment of this application, the sum of the displacement vector of the first device and the displacement vector of the second device is denoted as the first vector. This is uniformly described herein, and details are not described below again. In addition, it should be noted that, in two-dimensional space, the shape of the first area may be the ellipse, or may be an ellipse circumference. In three-dimensional space, the shape of the first area may be the ellipsoid, or may be an ellipsoid curved surface. In addition, the ellipsoid is a generalization of the ellipse in three-dimensional space. In some possible designs, a concept of the ellipsoid may include an ellipsoid in three-dimensional space and an ellipse in two-dimensional space. In some cases, the first area may be a part of the ellipsoid or the ellipse. For example, an area whose shape is an ellipsoid or an ellipse may be first determined, and then an improper part in the area is removed by using a radio signal transmission feature (for example, a signal coverage direction), and a remaining part is used as the first area. For ease of understanding, unless otherwise specified, in this embodiment of this application, an example in which the shape of the first area is the ellipse is used to describe how to determine the location of the first device. In other words, the first device, the second device, and moving tracks of the two devices are located on a same horizontal plane, and z-axis components (height components) of the displacement vectors of the first device and the second device are 0. It should be further noted that a person skilled in the art may easily extend this embodiment to three-dimensional space to determine the location of the first device. Therefore, the shape of the first area is not limited to the ellipse or the ellipsoid in this embodiment of this application.

In the foregoing process 3, an implementation in which the first device determines the first area based on the transmission distance of the reference signal between the first device and the second device and the relative displacement between the first device and the second device may be as follows:

Assuming that a central point of the first area is an origin of the coordinate system, and the two focal points of the first area are (x0, y0) and (-x0, -y0), an expression of the first area may be established in the coordinate system according to the following formula (1):

$$\frac{x'^2}{a^2} + \frac{y'^2}{b^2} = 1 \quad (1)$$

In the expression (1),

$$a = \frac{1}{2}L, \quad c = \sqrt{x_0^2 + y_0^2}, \text{ and } b = \sqrt{a^2 - c^2}.$$

a represents a semi-major axis of the first area, L is the time transmission distance of the reference signal between the first device and the second device, and b represents a semi-minor axis of the first area.

In the expression (1), a relationship between x' and y' and x and y (x and y are variables and dependent variables in the expression of the first area) may be determined according to the following formula (2):

$$\begin{cases} x' = x \cos \varphi + y \sin \varphi \\ y' = -x \sin \varphi + y \cos \varphi \\ \varphi = \arctan \frac{y_0}{x_0} \end{cases} \quad (2)$$

Therefore, (1) and (2) are combined, and it may be obtained that another expression of the first area is the following formula (3):

$$\frac{(xx_0 + yy_0)^2}{(x_0^2 + y_0^2)a^2} + \frac{(-xy_0 + yx_0)^2}{(x_0^2 + y_0^2)b^2} = 1 \quad (3)$$

It may be understood that, in actual application, the first area may be represented by using the foregoing formula (1) and formula (2), or the first area may be represented by using the foregoing formula (3). This is not limited in this application.

For example, assuming that the first device and the second device move according to the scenario shown in FIG. 14, the first device may determine, according to the foregoing formula (1), formula (2), or formula (3), the first area shown in FIG. 15. A length of a major axis AB of the first area is a distance corresponding to a sum of RS 1 and RS2, F 1 and F2 are two focal points of the first area, and F1F2 is a first vector, and OC is a semi-minor axis (that is, b in the foregoing formula) of the first area. The first device is located at a location in the first area. In this case, from a perspective of the first device, the first device temporarily cannot determine which point in the first area is the location of the first device, and further needs to determine the location of the first device based on the first area.

In the process 3, an implementation in which the first device determines the location of the first device based on the first area may include the following manner 1 to manner 3:

Manner 1: When the first device further measures the angle of arrival of the third reference signal, the first device determines, based on the first area and the angle of arrival of the third reference signal, the location of the first device in the first area. Alternatively, in other words, the location of the first device is determined based on the first area and the angle of arrival of the third reference signal.

For example, as shown in FIG. 15, if the angle of arrival of the third reference signal is denoted as AoA1, AoA1 may meet the following formula (4):

$$\frac{-y_0 - y}{-x_0 - x} = \tan AoA1 \quad (4)$$

The formula (1), the formula (2), and the formula (4), or the formula (3) and the formula (4) may be combined to resolve (x, y), that is, to determine the location of the first device. In some cases, when the formula (1), the formula (2), and the formula (4), or the formula (3) and the formula (4) are combined to resolve (x, y), there may be a plurality of solutions. In this case, a quadrant of AoA1 may be used to exclude a redundant solution, to obtain a correct location of the first device.

Manner 2: When the second device further sends the measured angle of arrival of the first reference signal to the first device, the first device determines, based on the first area and the angle of arrival of the first reference signal, the location of the first device in the first area. Alternatively, in other words, the location of the first device is determined based on the first area and the angle of arrival of the first reference signal.

For example, as shown in FIG. 15, if the angle of arrival of the first reference signal is denoted as AoA2, AoA2 may meet the following formula (5):

$$\frac{y - y_0}{x - x_0} = \tan AoA2 \quad (5)$$

The formula (1), the formula (2), and the formula (5), or the formula (3) and the formula (5) may be combined to resolve (x, y), that is, to determine the location of the first device. In some cases, when the formula (1), the formula (2), and the formula (5), or the formula (3) and the formula (5) are combined to resolve (x, y), there may be a plurality of solutions. In this case, a quadrant of AoA2 may be used to exclude a redundant solution, to obtain a correct location of the first device.

Manner 3: When the second device further sends the measured angle of arrival of the first reference signal to the first device, and the first device further measures the angle of arrival of the third reference signal, the first device determines, based on the first area, the angle of arrival of the first reference signal, and the angle of arrival of the third reference signal, the location of the first device in the first area. Alternatively, in other words, the location of the first device is determined based on the first area, the angle of arrival of the first reference signal, and the angle of arrival of the third reference signal.

In the manner 3, optionally, the first device may determine a location of one first device by using the foregoing manner 1 and manner 2, and then use an average value of two locations as the location of the first device. For example, it is assumed that the location of the first device determined by using the manner 1 is (x1, y1), and the location of the first device determined by using the manner 2 is (x2, y2). In this case, a finally determined location of the first device is ((x1+x2)/2, (y1+y2)/2).

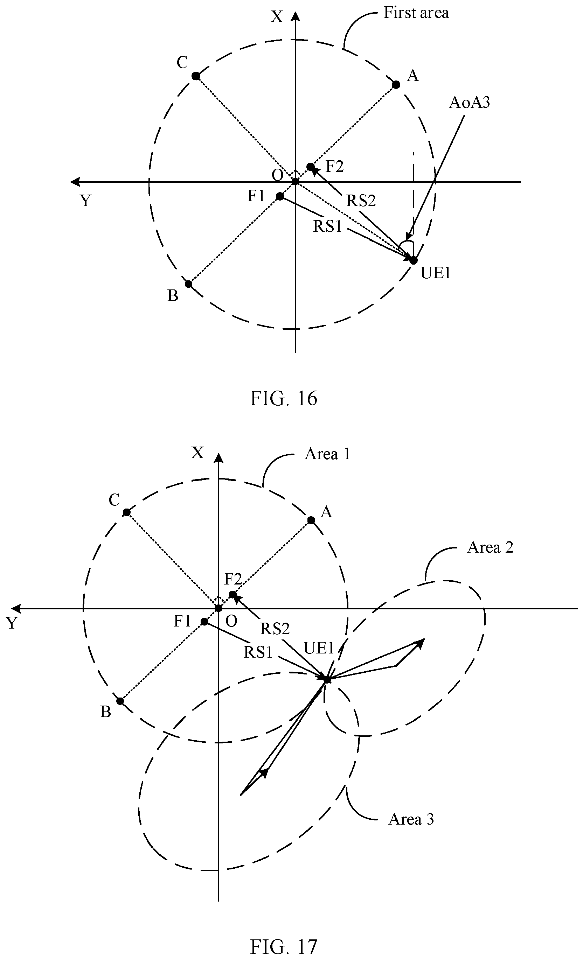

Alternatively, optionally, FIG. 16 is a schematic diagram of marking an angle of arrival AoA3 in the coordinate system shown in FIG. 15. As shown in FIG. 16, the angle of arrival of the third reference signal is denoted as AoA1, and the angle of arrival of the first reference signal is denoted as AoA2. In this case, AoA1 and AoA2 may meet the following formula (6):

$$\frac{y}{x} = \tan \frac{AoA2 + AoA1 + \pi}{2} \quad (6)$$

The formula (1), the formula (2), and the formula (6), or the formula (3) and the formula (6) may be combined to resolve (x, y), that is, to determine the location of the first device. In some cases, when the formula (1), the formula (2), and the formula (6), or the formula (3) and the formula (6) are combined to resolve (x, y), there may be a plurality of solutions. In this case, a quadrant

$$\frac{AoA2 + AoA1 + \pi}{2}$$

of (denoted as AoA3) may be used to exclude a redundant solution, to obtain a correct location of the first device.

It may be understood that, as shown in FIG. 16,

$$\frac{AoA2 + AoA1 + \pi}{2}$$

if is denoted as AoA3, AoA3 represents an angle relationship between the UE1 and the origin of the coordinate system.

For example, in the foregoing manner 1 to manner 3, using a quadrant of AoA (including the foregoing AoA1, AoA2, and AoA3) to exclude a redundant solution may be implemented by using the following determining manner:

if the AoA is between 0 and $\pi/2$, correspondingly, -y0-y>0 and -x0-x>0;
if the AoA is between $\pi/2$ and $\pi$, correspondingly, -y0-y>0 and -x0-x<0;
if the AoA is between $\pi$ and 3*$\pi$/2, correspondingly, -y0-y<0 and -x0-x<0; and
if the AoA is between 3*$\pi$/2 and 2*$\pi$, correspondingly, -y0-y<0 and -x0-x>0.

Manner 4: If there are a plurality of second devices, that is, the first device may receive first receive-transmit time differences and displacement vectors of the second device of the plurality of second devices, for each second device, a corresponding first area may be determined for each second device by using the foregoing "determining the first area based on the transmission distance of the reference signal between the first device and the second device and the relative displacement between the first device and the second device" (for ease of differentiation, the area is denoted as a second area). In other words, a plurality of second areas may be obtained. The first device may determine an intersection point of the plurality of second areas as the location of the first device.

Alternatively, in other words, if there are N second devices, and N is an integer greater than 1, each second device corresponds to one second area, and the location of the first device is at an intersection point of the N second areas. A shape of an $i^{th}$ second area corresponding to an $i^{th}$ second device in the N second devices is an ellipsoid or an ellipse, two focal points of the $i^{th}$ second area are head and tail endpoints of a second vector, a length of a major axis of the $i^{th}$ second area is a distance corresponding to a sum of the second receive-transmit time difference and a first receive-transmit time difference of the $i^{th}$ second device, and the second vector is a sum of the displacement vector of the first device and a displacement vector of the ith second device, where i is a positive integer, and i≤N. In this way, when there are a plurality of second devices, an implementation of determining the location of the first device may be provided. For example, the first device may establish, based on transmission distances of the reference signal between the first device and the plurality of second devices and relative displacements between the first device and the plurality of second devices, expressions of a plurality of second areas whose shapes are ellipsoids or ellipses, where the location of the first device is at an intersection point of the plurality of second areas, so that the first device may perform positioning resolving based on the transmission distances of the reference signal between the first device and the plurality of second devices and the relative displacements between the first device and the plurality of second devices, thereby improving positioning accuracy of the first device.

For example, as shown in FIG. 17, it is assumed that there are three second devices. Corresponding second areas are determined for all the three second devices by using the foregoing "determining the first area based on the transmission distance of the reference signal between the first device and the second device and the relative displacement between the first device and the second device", and the corresponding second areas are determined as an area 1, an area 2, and an area 3. In this case, a common intersection point of the area 1, the area 2, and the area 3 may be determined as the location of the first device according to a geometric relationship.

Certainly, the foregoing manner 4 may be further combined with any one of the manner 1 to the manner 3. That is, after the location of the first device is determined in the manner 4, the location of the first device is corrected by using any one of the manner 1 to the manner 3, to further improve positioning accuracy of the first device.

FIG. 15 is a schematic diagram of the UE1 and the UE2 in the coordinate system in the scenario shown in FIG. 14. In FIG. 15, after the location (x, y) of the first device is obtained in the foregoing manner 1 to manner 4, because the UE2 is separately on ($-x_0$, $-y_0$, 0) and ($x_0$, $y_0$, 0) at a moment T1 and a moment T2+t2, the UE1 may further determine a location of the UE1 relative to the UE2 or a location of the UE2 relative to the UE1 at a corresponding moment. For example, at the moment T1, the location of the UE1 relative to the UE2 is ($x + x_0$, $y + y_0$, 0), the location of the UE2 relative to the UE1 is ($-x_0 -x$, $-y_0 -y$, 0), and a distance between the two devices is

$$\sqrt{(x + x_0)^2 + (y + y_0)^2}$$

. At the moment T2+t2, the location of the UE1 relative to the UE2 is ($x - x_0$, $y - y_0$, 0), the location of the UE2 relative to the UE1 is ($x_0 - x$, $y_0 - y$, 0), and a distance between the two devices is

$$\sqrt{(x - x_0)^2 + (y - y_0)^2}$$

.

It should be noted that, in the foregoing process 1 to process 3, the displacement vector of the first device, the displacement vector of the second device, and the angle of arrival are all based on a same coordinate system. In some cases, if the displacement vector of the first device, the displacement vector of the second device, and the angle of arrival are based on different coordinate systems, the first device may convert, according to a coordinate system conversion formula, the coordinate systems on which the displacement vector of the first device, the displacement vector of the second device, and the angle of arrival are based into a same coordinate system. A conversion manner of the coordinate system conversion formula and how the first device obtains the coordinate system conversion formula are not limited in this application.

In S1301 to S1303, when determining the location of the first device, the first device may perform positioning resolving based on the first receive-transmit time difference, the second receive-transmit time difference, and the displacement vector of the second device. A transmission distance of the reference signal between the first device and the second device may be determined based on the first receive-transmit time difference and the second receive-transmit time difference, and a relative displacement between the first device and the second device may be determined based on the displacement vector of the second device. In other words, the first device may perform positioning resolving based on the transmission distance of the reference signal between the first device and the second device and the relative displacement between the two devices. In this way, a parameter that affects positioning precision, that is, the relative displacement between the devices participating in positioning, may be added to positioning resolving, so that the first device can be accurately positioned regardless of whether the device (including the first device and the second device) participating in positioning is in a moving state.

It should be noted that, in a process of performing S1301 to S1303, the first device and the second device receive/transmit reference signals between each other, to measure a receive-transmit time difference (Rx-Tx time difference), to separately determine the first receive-transmit time difference and the second receive-transmit time difference. For example, in S1301, the second device receives the first reference signal from the first device, sends the second reference signal to the first device, and then determines the time difference between the receiving time of the first reference signal and the sending time of the second reference signal as the first receive-transmit time difference. In S1303, the first device receives the third reference signal from the second device, sends the fourth reference signal to the second device, and then determines the time difference between the receiving time of the third reference signal and the sending time of the fourth reference signal as the second receive-transmit time difference. In this embodiment of this application, a sequence in which the first device and the second device receive/transmit the reference signals between each other is not limited. For example, as shown in FIG. 14, the second device may first send the second reference signal (the RS1 in FIG. 14) to the first device, and then the first device sends the fourth reference signal (the RS2 in FIG. 14) to the second device. Alternatively, the first device may first send the fourth reference signal to the second device, and then the second device sends the second reference signal to the first device. This is not limited in this application. Certainly, for ease of understanding, unless otherwise specified, in this embodiment of this application, an example in which the second device first sends the second reference signal to the first device, and then the first device sends the fourth reference signal to the second device is used to describe a positioning process of the first device.

In some possible embodiments, the first reference signal may be the fourth reference signal, and the second reference signal may be the third reference signal. Alternatively, in other words, the third reference signal may be a reference signal sent by the second device to the first device, for example, the second reference signal, and the fourth reference signal may be a reference signal received by the second device from the first device, for example, the first reference signal. For ease of understanding, unless otherwise specified, in this embodiment of this application, the first reference signal is the fourth reference signal, and the second reference signal is the third reference signal.

In some possible embodiments, for the first reference signal to the fourth reference signal, the first reference signal and the fourth reference signal may be reference signals in different periods, and the second reference signal and the third reference signal may be reference signals in different periods.

With reference to the communication system shown in FIG. 5 to FIG. 11, it may be understood that in FIG. 13, the first device may be a terminal device, the second device may be a terminal device or an access network device, and the third device may be a location management device (for example, an LMF network element).

In a specific application, according to a type of the second device and whether the first receive-transmit time difference and the displacement vector of the second device are forwarded by using the third device, the positioning method shown in FIG. 13 may be classified into the following several possible implementations:

Manner 5: When the second device is the terminal device and the first receive-transmit time difference and the displacement vector of the second device are not forwarded by using the third device, the first device receives the first receive-transmit time difference and the displacement vector of the second device from the second device, and performs positioning resolving on the location of the first device.

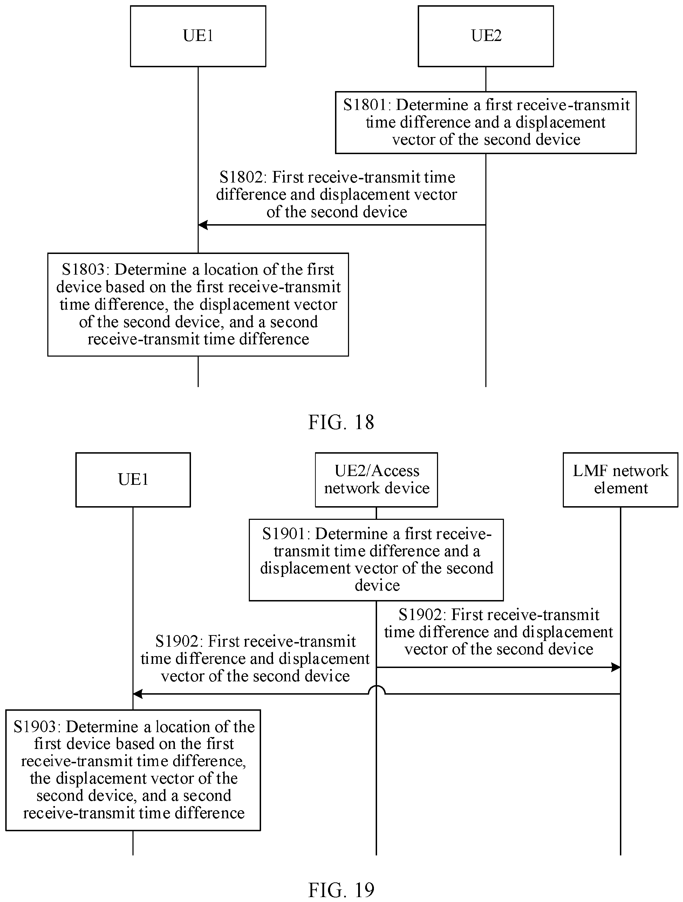

For example, FIG. 18 is a schematic flowchart of another positioning method according to an embodiment of this application. The positioning method may be performed by a first device and a second device. The first device is a terminal device (denoted as UE1 in FIG. 18), and the second device is a terminal device (denoted as UE2 in FIG. 18). The positioning method shown in FIG. 18 may include S1801 to S1803. The following separately describes the steps.

S1801: The UE2 determines a first receive-transmit time difference and a displacement vector of the second device.

It may be understood that, for an implementation and effect of S1801, refer to corresponding content in S1301. Details are not described herein again.

S1802: The UE2 sends the first receive-transmit time difference and the displacement vector of the second device to the UE1. Correspondingly, the UE1 receives the first receive-transmit time difference and the displacement vector of the second device from the UE2.

It may be understood that, for an implementation and effect of S1802, refer to corresponding content in S1302A. Details are not described herein again.

S1803: The UE1 determines a location of the first device based on the first receive-transmit time difference, the displacement vector of the second device, and a second receive-transmit time difference.

It may be understood that, for an implementation and effect of S1803, refer to corresponding content in S1303. Details are not described herein again.

Moving statuses of the UE1 and the UE2 are not limited, and may be a moving state or a static state. A location of the UE1 can be accurately positioned by using the positioning method provided in this embodiment of this application.

For implementations and effects of S1801 to S1803, refer to corresponding content in S1301 to S1303. Details are not described herein again.

It should be understood that, in the manner 5, the positioning resolving is performed by the first device. The manner 5 may be applied to a V2X scenario, and can help accurately locate two terminal devices that are relatively moving in the V2X scenario.

Manner 6: When the second device is the terminal device or the access network device and the first receive-transmit time difference and the displacement vector of the second device are forwarded by using the third device, the first device receives the first receive-transmit time difference and the displacement vector of the third device from the second device, and performs positioning resolving on the location of the first device.

For example, FIG. 19 is a schematic flowchart of another positioning method according to an embodiment of this application. The positioning method may be performed by a first device, a second device, and a third device. The first device is a terminal device (denoted as UE1 in FIG. 19), the second device is a terminal device or an access network device (denoted as UE2/access network device in FIG. 19), and the third device is an LMF network element (denoted as an LMF network element in FIG. 19). The positioning method shown in FIG. 19 may include S1901 to S1903. The following separately describes the steps.

S1901: The UE2 or the access network device determines a first receive-transmit time difference and a displacement vector of the second device.

It may be understood that, for an implementation and effect of S1901, refer to corresponding content in S1301. Details are not described herein again.

S1902: The UE2 or the access network device sends the first receive-transmit time difference and the displacement vector of the second device to the LMF network element. Correspondingly, the LMF network element receives the first receive-transmit time difference and the displacement vector of the second device from the UE2 or the access network device. The LMF network element sends the first receive-transmit time difference and the displacement vector of the second device to the UE1. Correspondingly, the UE1 receives the first receive-transmit time difference and the displacement vector of the second device from the LMF network element.

It may be understood that, for an implementation and effect of S1902, refer to corresponding content in S1302B. Details are not described herein again.

S1903: The UE1 determines a location of the first device based on the first receive-transmit time difference, the displacement vector of the second device, and a second receive-transmit time difference.

It may be understood that, for an implementation and effect of S1903, refer to corresponding content in S1303. Details are not described herein again.

For implementations and effects of S1901 to S1903, refer to corresponding content in S1301 to S1303. Details are not described herein again.

It should be understood that, in the manner 6, positioning resolving is performed by the first device. The access network device in the manner 6 may be a base station, a TRP, a road side unit (road side unit, RSU), or the like, and there may be a plurality of access network devices. In the manner 6, a location of the UE2/access network device may be static, and the UE1 may be moving or static. This is not limited herein. When determining the location of the first device, the first device may fuse the location of the first device with a GPS, display the location of the first device on a map in real time by using a navigation program, and display information such as acceleration, so that user experience can be improved.

In the manner 6, when the UE2/access network device is static, the location of the first device may be resolved in the manner 4.

Manner 7: When the second device is a satellite and the first receive-transmit time difference and the displacement vector of the second device are forwarded by using the third device, the first device receives the first receive-transmit time difference and the displacement vector of the second device from the third device, and performs positioning resolving on the location of the first device.

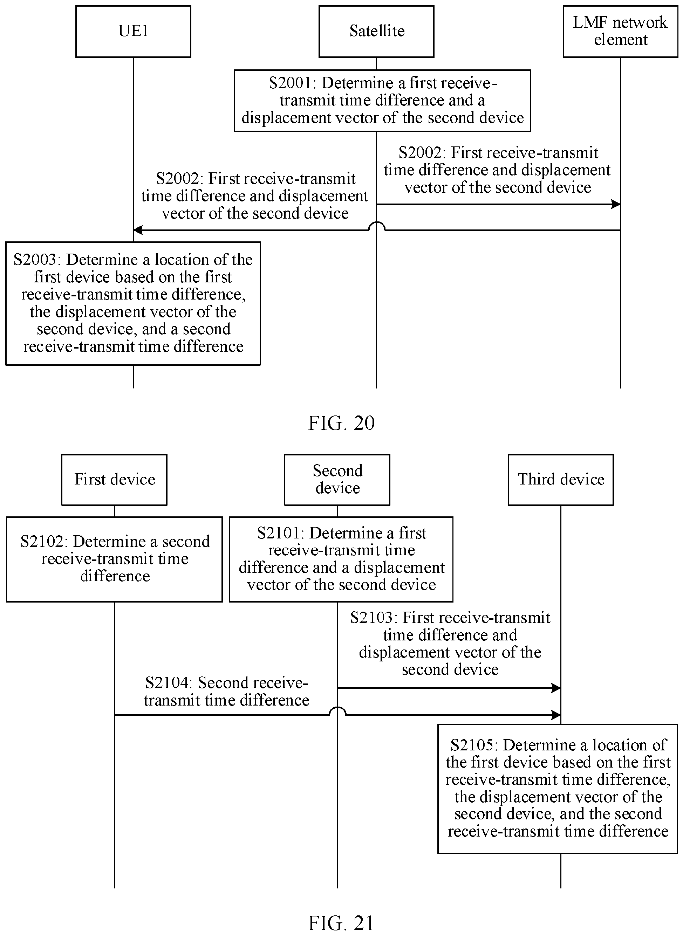

For example, FIG. 20 is a schematic flowchart of another positioning method according to an embodiment of this application. The positioning method may be performed by a first device, a second device, and a third device. The first device is a terminal device (denoted as UE1 in FIG. 20), the second device is a satellite (denoted as a satellite in FIG. 20), and the third device is an LMF network element (denoted as an LMF network element in FIG. 20). The positioning method shown in FIG. 20 may include S2001 to S2003. The following separately describes the steps.

S2001: The satellite determines a first receive-transmit time difference and a displacement vector of the second device.

It may be understood that, for an implementation and effect of S2001, refer to corresponding content in S1301. Details are not described herein again.

S2002: The satellite sends the first receive-transmit time difference and the displacement vector of the second device to the LMF network element. Correspondingly, the LMF network element receives the first receive-transmit time difference and the displacement vector of the second device from the satellite. The LMF network element sends the first receive-transmit time difference and the displacement vector of the second device to the UE1. Correspondingly, the UE1 receives the first receive-transmit time difference and the displacement vector of the second device from the LMF network element.

It may be understood that, for an implementation and effect of S2002, refer to corresponding content in S1302B. Details are not described herein again.

S2003: The UE1 determines a location of the first device based on the first receive-transmit time difference, the displacement vector of the second device, and a second receive-transmit time difference.

It may be understood that, for an implementation and effect of S2003, refer to corresponding content in S1303. Details are not described herein again.

For implementations and effects of S2001 to S2003, refer to corresponding content in S1301 to S1303. Details are not described herein again.

It should be understood that, in the manner 7, positioning resolving is performed by the first device. The manner 7 may be used by the satellite, an unmanned aerial vehicle, or an airplane to position a ground terminal. In other words, the first device may be the terminal device, and the second device may be the satellite, the unmanned aerial vehicle, the airplane, or the like (the satellite is used as an example in FIG. 20). A plurality of satellites feed back, to a network, for example, a base station, a core network LMF, or a V2X server, first receive-transmit time differences and displacement vectors that are of the second device and that are measured by the plurality of satellites. The network forwards the first receive-transmit time difference and the displacement vector of the second device of the satellite to the first device for calculating the location of the first device.

In the second type, the third device performs positioning resolving on the location of the first device.

FIG. 21 is a schematic flowchart of another positioning method according to an embodiment of this application. In the positioning method, the third device performs positioning resolving on the location of the first device. The positioning method may include S2101 to S2105. The following sequentially describes the steps.

S2101: A second device determines a first receive-transmit time difference and a displacement vector of the second device.

It may be understood that, for an implementation and effect of S2101, refer to corresponding content in S1301. Details are not described herein again.

S2102: The first device determines a second receive-transmit time difference.

It may be understood that, for an implementation and effect of S2102, refer to content of "the first device determines the second receive-transmit time difference" in the method embodiment shown in FIG. 13. Details are not described herein again.

S2103: The second device sends the first receive-transmit time difference and the displacement vector of the second device to the third device. Correspondingly, the third device receives the first receive-transmit time difference and the displacement vector of the second device from the second device.

S2104: The first device sends the second receive-transmit time difference to the third device. Correspondingly, the third device receives the second receive-transmit time difference from the first device.

S2105. The third device determines a location of the first device based on the first receive-transmit time difference, the displacement vector of the second device, and the second receive-transmit time difference.

It may be understood that, for an implementation and effect of S2105, refer to corresponding content in S1303. An execution body may be replaced, and details are not described herein again.

For implementations and effects of S2101 to S2105, refer to corresponding content in S1301 to S1303. Details are not described herein again. For a principle and effect of determining the location of the first device by the third device based on the first receive-transmit time difference, the displacement vector of the second device, and the second receive-transmit time difference, refer to the principle and effect of determining the location of the first device by the first device based on the first receive-transmit time difference, the displacement vector of the second device, and the second receive-transmit time difference in S1303. Details are not described herein again.

With reference to the communication system shown in FIG. 5 to FIG. 11, it may be understood that in FIG. 21, the first device may be a terminal device, the second device may be a terminal device or an access network device, and the third device may be a location management device (for example, an LMF network element).

In a specific application, according to a type of the second device, the positioning method shown in FIG. 21 may be classified into the following several possible implementations:

Manner 8: When the second device is the terminal device, the third device performs positioning resolving on the location of the first device based on the first receive-transmit time difference, the displacement vector of the second device, and the second receive-transmit time difference.

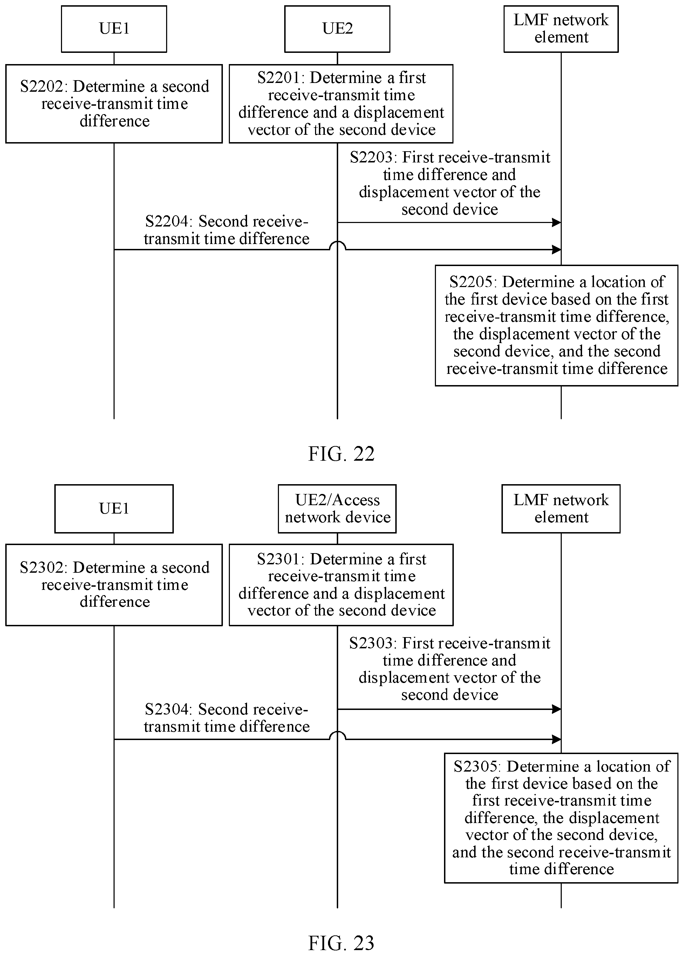

For example, FIG. 22 is a schematic flowchart of another positioning method according to an embodiment of this application. The positioning method may be performed by a first device, a second device, and a third device. The first device is a terminal device (denoted as UE1 in FIG. 22), the second device is a terminal device (denoted as UE2 in FIG. 22), and the third device is an LMF network element (denoted as an LMF network element in FIG. 22). The positioning method shown in FIG. 22 may include S2201 to S2205. The following separately describes the steps.

S2201: The UE2 determines a first receive-transmit time difference and a displacement vector of the second device.

It may be understood that, for an implementation and effect of S2201, refer to corresponding content in S2101. Details are not described herein again.

S2202: The UE1 determines a second receive-transmit time difference.

It may be understood that, for an implementation and effect of S2202, refer to corresponding content in S2102. Details are not described herein again.

S2203: The UE2 sends the first receive-transmit time difference and the displacement vector of the second device to the LMF network element. Correspondingly, the LMF network element receives the first receive-transmit time difference and the displacement vector of the second device from the UE2.

S2204: The UE1 sends the first receive-transmit time difference and the displacement vector of the second device to the LMF network element. Correspondingly, the LMF network element receives the first receive-transmit time difference and the displacement vector of the second device from the UE1.

S2205: The LMF network element determines a location of the first device based on the first receive-transmit time difference, the displacement vector of the second device, and a second receive-transmit time difference.

It may be understood that, for an implementation and effect of S2205, refer to corresponding content in S2105. Details are not described herein again.

For implementations and effects of S2201 to S2205, refer to corresponding content in S1301 to S1303. Details are not described herein again.

In the manner 8, after respectively determining the first receive-transmit time difference, the displacement vector of the second device, and the second receive-transmit time difference, the two UEs may respectively feed back the first receive-transmit time difference, the displacement vector of the second device, and the second receive-transmit time difference to a network (for example, a base station, an LMF network element, or a V2X server, and FIG. 22 shows an example in which the network is the LMF network element) for calculating the location between the two UEs by the network.

Manner 9: When the second device is the terminal device or the access network device, the third device performs positioning resolving on the location of the first device based on the first receive-transmit time difference, the displacement vector of the second device, and the second receive-transmit time difference.

For example, FIG. 23 is a schematic flowchart of another positioning method according to an embodiment of this application. The positioning method may be performed by a first device, a second device, and a third device. The first device is a terminal device (denoted as UE1 in FIG. 23), the second device is a terminal device or an access network device (denoted as UE2/access network device in FIG. 23), and the third device is an LMF network element (denoted as an LMF network element in FIG. 23). The positioning method shown in FIG. 23 may include S2301 to S2305. The following separately describes the steps.

S2301: The UE2 or the access network device determines a first receive-transmit time difference and a displacement vector of the second device.

It may be understood that, for an implementation and effect of S2301, refer to corresponding content in S2101. Details are not described herein again.

S2302: The UE1 determines a second receive-transmit time difference.

It may be understood that, for an implementation and effect of S2302, refer to corresponding content in S2102. Details are not described herein again.

S2303: The UE2 or the access network device sends the first receive-transmit time difference and the displacement vector of the second device to the LMF network element. Correspondingly, the LMF network element receives the first receive-transmit time difference and the displacement vector of the second device from the UE2 or the access network device.

S2304: The UE1 sends the first receive-transmit time difference and the displacement vector of the second device to the LMF network element. Correspondingly, the LMF network element receives the first receive-transmit time difference and the displacement vector of the second device from the UE1.

S2305: The LMF network element determines a location of the first device based on the first receive-transmit time difference, the displacement vector of the second device, and a second receive-transmit time difference.

It may be understood that, for an implementation and effect of S2305, refer to corresponding content in S2105. Details are not described herein again.

For implementations and effects of S2301 to S2305, refer to corresponding content in S1301 to S1303. Details are not described herein again.

In the manner 9, the access network device may be a base station, a TRP, an RSU, a road side unit, or the like, and there may be a plurality of access network devices. In the manner 9, a location of the UE2/access network device may be static, and the UE1 may be moving or static. This is not limited herein. Both the UE1 and the UE2/the access network device feed back the measured first receive-transmit time difference and displacement vector of the second device or second receive-transmit time difference to a network (for example, a base station, an LMF network element, or a V2X server, and FIG. 23 shows an example in which the network is the LMF network element) for calculating a location of the UE1 by the network.

In the manner 9, when the UE2/access network device is static, the location of the first device may be resolved in the manner 4.

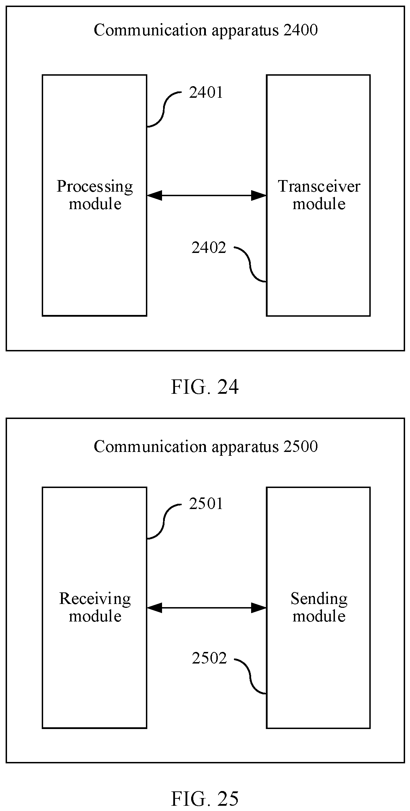

The positioning method provided in embodiments of this application is described in detail above with reference to FIG. 13 to FIG. 23. With reference to FIG. 24 and FIG. 25, the following describes in detail a communication apparatus configured to perform the positioning method provided in embodiments of this application.

For example, FIG. 24 is a schematic diagram of a structure of a communication apparatus according to an embodiment of this application. As shown in FIG. 24, the communication apparatus 2400 includes a processing module 2401 and a transceiver module 2402. For ease of descriptions, FIG. 24 shows only main components of the communication apparatus.

In some embodiments, the communication apparatus 2400 may be applied to the communication system shown in FIG. 5 to FIG. 11, and perform functions of the first device in the positioning method shown in FIG. 13 and FIG. 18 to FIG. 20.

The transceiver module 2402 is configured to receive a first receive-transmit time difference and a displacement vector of a second device. The processing module 2401 is configured to determine a location of the first device based on the first receive-transmit time difference, the displacement vector of the second device, and a second receive-transmit time difference. The first receive-transmit time difference is a time difference between receiving time of a first reference signal and sending time of a second reference signal, the first reference signal is a reference signal of a first device received by the second device, the second reference signal is a reference signal sent by the second device, and the displacement vector of the second device is a displacement of the second device in a time period corresponding to the first receive-transmit time difference. The second receive-transmit time difference is a time difference between receiving time of a third reference signal and sending time of a fourth reference signal, the third reference signal is a reference signal of the second device received by the first device, and the fourth reference signal is a reference signal sent by the first device.

The transceiver module 2402 is further configured to receive the first receive-transmit time difference and the displacement vector of the second device from the second device. Alternatively, the transceiver module 2402 is further configured to receive the first receive-transmit time difference and the displacement vector of the second device from a third device

The first receive-transmit time difference and the displacement vector of the second device may be carried in one piece of information, or may be carried in two pieces of information. This is not limited herein.

In some possible designs, the processing module 2401 is further configured to determine the location of the first device based on the first receive-transmit time difference, the displacement vector of the second device, the second receive-transmit time difference, and a displacement vector of the first device.

In some possible designs, the location of the first device is in a first area. A shape of the first area is an ellipsoid or an ellipse, two focal points of the first area are head and tail endpoints of a first vector, a length of a major axis of the first area is a distance corresponding to a sum of the second receive-transmit time difference and the first receive-transmit time difference, and the first vector is a sum of the displacement vector of the first device and the displacement vector of the second device.

In two-dimensional space, the shape of the first area may be the ellipse, or may be an ellipse circumference. In three-dimensional space, the shape of the first area may be the ellipsoid, or may be an ellipsoid curved surface. In addition, the ellipsoid is a generalization of the ellipse in three-dimensional space. In some possible designs, a concept of the ellipsoid may include an ellipsoid in three-dimensional space and an ellipse in two-dimensional space. In some cases, the first area may be a part of the ellipsoid or the ellipse. For example, an area whose shape is an ellipsoid or an ellipse may be first determined, and then an improper part in the area is removed by using a radio signal transmission feature (for example, a signal coverage direction), and a remaining part is used as the first area.

In some possible designs, the first vector is the sum of the displacement vector of the first device and the displacement vector of the second device. Assuming that head and tail endpoint coordinates of the first vector are respectively (x0, y0) and (-x0, -y0), the location of the first device is in the first area, and the first area may be determined according to the following formula (1):

$$\frac{x'^2}{a^2} + \frac{y'^2}{b^2} = 1 \quad (1)$$

$a = \frac{1}{2}L, \quad c = \sqrt{x_0^2 + y_0^2}$, and $b = \sqrt{a^2 - c^2}$. L is a distance corresponding to the sum of the second receive-transmit time difference and the first receive-transmit time difference, a represents a semi-major axis of the first area, and b represents a semi-minor axis of the first area. In addition, a relationship between x' and y' in the formula (1) and x and y (x and y are variables and dependent variables in the expression of the first area) may be determined according to the following formula (2):

$$\begin{cases} x' = x \cos \varphi + y \sin \varphi \\ y' = -x \sin \varphi + y \cos \varphi \\ \varphi = \arctan \frac{y_0}{x_0} \end{cases} \quad (2)$$

In some other possible designs, the first vector is the sum of the displacement vector of the first device and the displacement vector of the second device. Assuming that head and tail endpoint coordinates of the first vector are respectively (x0, y0) and (-x0, -y0), the location of the first device is in the first area, and the first area may be determined according to the following formula (3):

$$\frac{(xx_0+yy_0)^2}{(x_0^2+y_0^2)a^2} + \frac{(-xy_0+yx_0)^2}{(x_0^2+y_0^2)b^2} = 1 \quad (3)$$

$a = \frac{1}{2}L, \quad c = \sqrt{x_0^2 + y_0^2}$, and $b = \sqrt{a^2 - c^2}$. L is a distance corresponding to the sum of the second receive-transmit time difference and the first receive-transmit time difference, a represents a semi-major axis of the first area, and b represents a semi-minor axis of the first area. x and y are variables and dependent variables in the expression of the first area.

Optionally, if there are N second devices, and N is an integer greater than 1, each second device corresponds to one second area, and the location of the first device is at an intersection point of the N second areas. A shape of an $i^{th}$ second area corresponding to an $i^{th}$ second device in the N second devices is an ellipsoid or an ellipse, two focal points of the $i^{th}$ second area are head and tail endpoints of a second vector, a length of a major axis of the $i^{th}$ second area is a distance corresponding to a sum of the second receive-transmit time difference and a first receive-transmit time difference of the $i^{th}$ second device, and the second vector is a sum of the displacement vector of the first device and a displacement vector of the i$^{th}$ second device, where i is a positive integer, and i≤N.

Optionally, the location of the first device is determined based on the first area and an angle of arrival of the first reference signal; and/or the location of the first device is determined based on the first area and an angle of arrival of the third reference signal.

The angle of arrival of the third reference signal is denoted as AoA1. Optionally, the location (x, y) of the first device may be determined by combining the formula (1), the formula (2), and a formula (4) or by combining the formula (3) and the formula (4). The formula (4) is as follows:

$$\frac{-y_0-y}{-x_0-x} = \tan \text{AoA1} \quad (4)$$

The angle of arrival of the first reference signal is denoted as AoA2. Optionally, the location (x, y) of the first device may be determined by combining the formula (1), the formula (2), and a formula (5) or by combining the formula (3) and the formula (5). The formula (5) is as follows:

$$\frac{y-y_0}{x-x_0} = \tan \text{AoA2} \quad (5)$$

The angle of arrival of the third reference signal is denoted as AoA1, and the angle of arrival of the first reference signal is denoted as AoA2. Optionally, the location (x, y) of the first device may be determined by combining the formula (1), the formula (2), and a formula (6) or by combining the formula (3) and the formula (6). The formula (6) is as follows:

$$\frac{y}{x} = \tan \frac{\text{AoA2}+\text{AoA1}+\pi}{2} \quad (6)$$

Optionally, the location of the first device is determined based on the angle of arrival of the first reference signal and the angle of arrival of the third reference signal.

In some possible designs, the first receive-transmit time difference is a value obtained by performing a modulo operation of the difference between the receiving time of the first reference signal and the sending time of the second reference signal mod a first value. The second receive-transmit time difference is a value obtained by performing a modulo operation of the receiving time of the third reference signal and the sending time of the fourth reference signal mod the first value.

The first value is a value configured by a network device for the terminal device, or a value reported by the terminal device to the network device, or a value agreed on in advance (for example, agreed on in a protocol). This is not limited in this application.

In some other embodiments, the communication apparatus 2400 may be applied to the communication system shown in FIG. 5 to FIG. 11, and perform functions of the third device in the positioning method shown in FIG. 21 to FIG. 23.

The transceiver module 2402 is configured to receive a second receive-transmit time difference of a first device. The transceiver module 2402 is further configured to receive a first receive-transmit time difference of a second device and a displacement vector of the second device. The processing module 2401 is configured to determine a location of the first device based on the first receive-transmit time difference, the displacement vector of the second device, and a second receive-transmit time difference. The first receive-transmit time difference is a time difference between receiving time of a first reference signal and sending time of a second reference signal, the first reference signal is a reference signal of a first device received by the second device, the second reference signal is a reference signal sent by the second device, and the displacement vector of the second device is a displacement of the second device in a time period corresponding to the first receive-transmit time difference. The second receive-transmit time difference is a time difference between receiving time of a third reference signal and sending time of a fourth reference signal, the third reference signal is a reference signal of the second device received by the first device, and the fourth reference signal is a reference signal sent by the first device.

In some possible designs, the processing module 2401 is further configured to determine the location of the first device based on the first receive-transmit time difference, the displacement vector of the second device, the second receive-transmit time difference, and a displacement vector of the first device.

In some possible designs, the location of the first device is in a first area. A shape of the first area is an ellipsoid or an ellipse, two focal points of the first area are head and tail endpoints of a first vector, a length of a major axis of the first area is a distance corresponding to a sum of the second receive-transmit time difference and the first receive-transmit time difference, and the first vector is a sum of the displacement vector of the first device and the displacement vector of the second device.

In some possible designs, the first vector is the sum of the displacement vector of the first device and the displacement vector of the second device. Assuming that head and tail endpoint coordinates of the first vector are respectively (x0, y0) and (-x0, -y0), the location of the first device is in the first area, and the first area may be determined according to the following formula (1):

$$\frac{x'^2}{a^2} + \frac{y'^2}{b^2} = 1 \quad (1)$$

$a = \frac{1}{2}L, \quad c = \sqrt{x_0^2 + y_0^2}$, and $b = \sqrt{a^2 - c^2}$. L is a distance corresponding to the sum of the second receive-transmit time difference and the first receive-transmit time difference, a represents a semi-major axis of the first area, and b represents a semi-minor axis of the first area. In addition, a relationship between x' and y' in the formula (1) and x and y (x and y are variables and dependent variables in the expression of the first area) may be determined according to the following formula (2):

$$\begin{cases} x' = x\cos\varphi + y\sin\varphi \\ y' = -x\sin\varphi + y\cos\varphi \\ \varphi = arctan\frac{y_0}{x_0} \end{cases} \quad (2)$$

In some other possible designs, the first vector is the sum of the displacement vector of the first device and the displacement vector of the second device. Assuming that head and tail endpoint coordinates of the first vector are respectively (x0, y0) and (-x0, -y0), the location of the first device is in the first area, and the first area may be determined according to the following formula (3):

$$\frac{(xx_0+yy_0)^2}{(x_0^2+y_0^2)a^2} + \frac{(-xy_0+yx_0)^2}{(x_0^2+y_0^2)b^2} = 1 \quad (3)$$

$a = \frac{1}{2}L, \quad c = \sqrt{x_0^2 + y_0^2}$, and $b = \sqrt{a^2 - c^2}$. L is a distance corresponding to the sum of the second receive-transmit time difference and the first receive-transmit time difference, a represents a semi-major axis of the first area, and b represents a semi-minor axis of the first area. x and y are variables and dependent variables in the expression of the first area.

Optionally, if there are N second devices, and N is an integer greater than 1, each second device corresponds to one second area, and the location of the first device is at an intersection point of the N second areas. A shape of an $i^{th}$ second area corresponding to an $i^{th}$ second device in the N second devices is an ellipsoid or an ellipse, two focal points of the $i^{th}$ second area are head and tail endpoints of a second vector, a length of a major axis of the $i^{th}$ second area is a distance corresponding to a sum of the second receive-transmit time difference and a first receive-transmit time difference of the $i^{th}$ second device, and the second vector is a sum of the displacement vector of the first device and a displacement vector of the $i^{th}$ second device, where i is a positive integer, and i≤N.

Optionally, the location of the first device is determined based on the first area and an angle of arrival of the first reference signal; and/or the location of the first device is determined based on the first area and an angle of arrival of the third reference signal.

Optionally, the location of the first device is determined based on the angle of arrival of the first reference signal and the angle of arrival of the third reference signal.

The angle of arrival of the third reference signal is denoted as AoA1. Optionally, the location (x, y) of the first device may be determined by combining the formula (1), the formula (2), and a formula (4) or by combining the formula (3) and the formula (4). The formula (4) is as follows:

$$\frac{-y_0-y}{-x_0-x} = \tan AoA1 \quad (4)$$

The angle of arrival of the first reference signal is denoted as AoA2. Optionally, the location (x, y) of the first device may be determined by combining the formula (1), the formula (2), and a formula (5) or by combining the formula (3) and the formula (5). The formula (5) is as follows:

$$\frac{y-y_0}{x-x_0} = \tan AoA2 \quad (5)$$

The angle of arrival of the third reference signal is denoted as AoA1, and the angle of arrival of the first reference signal is denoted as AoA2. Optionally, the location (x, y) of the first device may be determined by combining the formula (1), the formula (2), and a formula (6) or by combining the formula (3) and the formula (6). The formula (6) is as follows:

$$\frac{y}{x} = \tan\frac{AoA2+AoA1+\pi}{2} \quad (6)$$

In some possible designs, the first receive-transmit time difference is a value obtained by performing a modulo operation of the difference between the receiving time of the first reference signal and the sending time of the second reference signal mod a first value. The second receive-transmit time difference is a value obtained by performing a modulo operation of the receiving time of the third reference signal and the sending time of the fourth reference signal mod the first value.

The first value is a value configured by a network device for the terminal device, or a value reported by the terminal device to the network device, or a value agreed on in advance (for example, agreed on in a protocol). This is not limited in this application.

In some other embodiments, the communication apparatus 2400 may be applied to the communication system shown in FIG. 5 to FIG. 11, and perform functions of the first device in the positioning method shown in FIG. 21 to FIG. 23.

The processing module 2401 is configured to determine a second receive-transmit time difference. The transceiver module 2402 is configured to send the second receive-transmit time difference. The second receive-transmit time difference is a time difference between receiving time of a third reference signal and sending time of a fourth reference signal, the third reference signal is a reference signal of a second device received by a first device, and the fourth reference signal is a reference signal sent by the first device.

The transceiver module 2402 may be configured to send the second receive-transmit time difference to a third device. The third device may be, for example, a location management device (for example, an LMF network element).

In some possible designs, the processing module 2401 is further configured to determine a displacement vector of the first device. The transceiver module 2402 is further configured to send the displacement vector of the first device. The displacement vector of the first device is a displacement of the first device in a time period corresponding to the second receive-transmit time difference. The transceiver module 2402 is further configured to send the displacement vector of the first device to a third device. The third device may be, for example, a location management device (for example, an LMF network element).

The second receive-transmit time difference and the displacement vector of the first device may be carried in one piece of information, or may be carried in two pieces of information. This is not limited herein.

In some other embodiments, the communication apparatus 2400 may be applied to the communication system shown in FIG. 5 to FIG. 11, and perform functions of the second device in the positioning method shown in FIG. 13, FIG. 18 to FIG. 20, or FIG. 21 to FIG. 23.

The processing module 2401 is configured to determine a first receive-transmit time difference and a displacement vector of a second device. The transceiver module 2402 is configured to send the first receive-transmit time difference and the displacement vector of the second device. The first receive-transmit time difference is a time difference between receiving time of a first reference signal and sending time of a second reference signal, the first reference signal is a reference signal of a first device received by the second device, the second reference signal is a reference signal sent by the second device, and the displacement vector of the second device is a displacement of the second device in a time period corresponding to the first receive-transmit time difference.

When the transceiver module 2402 may be configured to send the first receive-transmit time difference and the displacement vector of the second device to the first device, or may be configured to send the first receive-transmit time difference and the displacement vector of the second device to a third device. The third device may be, for example, a location management device (for example, an LMF network element). This is not limited in this application.

Optionally, the transceiver module 2402 may include a receiving module and a sending module (not shown in FIG. 24). The sending module is configured to implement a sending function of the communication apparatus 2400, and the receiving module is configured to implement a receiving function of the communication apparatus 2400. The receiving module may also be referred to as a receiver, and the sending module may also be referred to as a transmitter.

Optionally, the communication apparatus 2400 may further include a storage module (not shown in FIG. 24), and the storage module stores a program or instructions. When the processing module 2401 executes the program or the instructions, the communication apparatus 2400 may perform functions of the first device, the second device, or the third device in the positioning method shown in any one of FIG. 13 and FIG. 18 to FIG. 23.

It should be understood that the processing module 2401 in the communication apparatus 2400 may be implemented by a processor or a processor-related circuit component, and may be a processor or a processing unit. The transceiver module 2402 may be implemented by a transceiver or a transceiver-related circuit component, and may be a transceiver or a transceiver unit.

It should be noted that the communication apparatus 2400 may be a first device, a second device, or a third device, or may be a chip (system) or another part or component disposed in the first device, the second device, or the third device, or may be an apparatus including the first device, the second device, or the third device. This is not limited in this application. The first device is configured to perform the positioning method in any one of the possible implementations of FIG. 13 and FIG. 18 to FIG. 23, the second device is configured to perform the positioning method in any one of the possible implementations of FIG. 13 and FIG. 18 to FIG. 23, and the third device is configured to perform the positioning method in any one of the possible implementations of FIG. 13 and FIG. 19 to FIG. 23.

In addition, for a technical effect of the communication apparatus 2400, refer to the technical effect of the positioning method shown in any one of FIG. 13 and FIG. 18 to FIG. 23. Details are not described herein again.

If the communication apparatus 2400 provided in the embodiments of this application is a chip, the transceiver module 2402 in the communication apparatus 2400 may separately correspond to input and output of the chip. For example, the receiving module in the transceiver module 2402 corresponds to an input interface of the chip, and the sending module in the transceiver module 2402 corresponds to an output interface of the chip. This is not limited in this application.

For example, FIG. 25 is a schematic diagram of another structure of a communication apparatus according to an embodiment of this application. As shown in FIG. 25, the communication apparatus 2500 includes a receiving module 2501 and a sending module 2502. For ease of descriptions, FIG. 25 shows only main components of the communication apparatus.

In some other embodiments, the communication apparatus 2500 may be applied to the communication system shown in FIG. 5 to FIG. 11, and perform functions of the third device in the positioning method shown in FIG. 13 and FIG. 18 to FIG. 20.

The receiving module 2501 is configured to receive a first receive-transmit time difference of a second device and a displacement vector of the second device. The sending module 2502 is configured to send the first receive-transmit time difference and the displacement vector of the second device to a first device. The first receive-transmit time difference is a time difference between receiving time of a first reference signal and sending time of a second reference signal, the first reference signal is a reference signal of a first device received by the second device, the second reference signal is a reference signal sent by the second device, and the displacement vector of the second device is a displacement of the second device in a time period corresponding to the first receive-transmit time difference.

Optionally, the receiving module 2501 and the sending module 2502 in the communication apparatus 2500 may be implemented by one module, for example, a transceiver module or a transceiver. In other words, the transceiver module may be configured to implement a receiving function and a sending function of the communication apparatus 2500. The receiving module 2501 may also be referred to as a receiver, and the sending module 2502 may also be referred to as a transmitter.

Optionally, the communication apparatus 2500 may further include a processing module and a storage module. The storage module stores a program or instructions. When the processing module executes the program or the instructions, the communication apparatus is enabled to perform the positioning method in any one of the possible implementations in FIG. 13,

FIG. 19, and FIG. 20.

An embodiment of this application further provides a chip system, including a processor. The processor is coupled to a memory, and the memory is configured to store a program or instructions. When the program or the instructions is/are executed by the processor, the chip system implements the method in any one of the foregoing method embodiments.

Optionally, there may be one or more processors in the chip system. The processor may be implemented by using hardware, or may be implemented by using software. When the processor is implemented by using the hardware, the processor may be a logic circuit, an integrated circuit, or the like. When the processor is implemented by using the software, the processor may be a general-purpose processor, and is implemented by reading software code stored in the memory.

Optionally, there may also be one or more memories in the chip system. The memory may be integrated with the processor, or may be disposed separately from the processor. This is not limited in this application. For example, the memory may be a non-transitory processor, for example, a read-only memory ROM. The memory and the processor may be integrated into a same chip, or may be separately disposed on different chips. A type of the memory and a manner of disposing the memory and the processor are not specifically limited in this application.

For example, the chip system may be a field programmable gate array (field programmable gate array, FPGA), an ASIC, a system on chip (system on chip, SoC), a CPU, a network processor (network processor, NP), a digital signal processing circuit (digital signal processor, DSP), a micro controller (micro controller unit, MCU), a programmable controller (programmable logic device, PLD), or another integrated chip.

An embodiment of this application provides a communication system. The communication system includes a first device and a second device. The first device and the second device may be combined to perform the method embodiments shown in FIG. 13 and FIG. 18 to FIG. 23. For a specific performing process, refer to the foregoing method embodiments. Details are not described herein again. Optionally, the communication system may further include a third device. The first device, the second device, and the third device may be combined to perform the method embodiments shown in FIG. 13 and FIG. 19 to FIG. 23. For a specific performing process, refer to the foregoing method embodiments. Details are not described herein again.

This application further provides a computer-readable storage medium. The computer-readable storage medium stores a computer program. When the computer-readable storage medium is executed by a computer, a function of any one of the foregoing method embodiments is implemented.

This application further provides a computer program product. When the computer program product is executed by a computer, functions of any one of the foregoing method embodiments are implemented.

It should be understood that, in embodiments of this application, the processor may be a CPU, or may be another general-purpose processor, a DSP, an ASIC, an FPGA or another programmable logic device, a discrete gate or transistor logic device, a discrete hardware component, or the like. The general-purpose processor may be a microprocessor, or the processor may be any conventional processor or the like.

It may be understood that the memory in embodiments of this application may be a volatile memory or a nonvolatile memory, or may include a volatile memory and a nonvolatile memory. The nonvolatile memory may be a ROM, a programmable read-only memory (programmable ROM, PROM), an erasable programmable read-only memory (erasable PROM, EPROM), an EEPROM, or a flash memory. The volatile memory may be a RAM, and serves as an external cache. Through example but not limitative descriptions, many forms of RAMs may be used, for example, a static random access memory (static RAM, SRAM), a dynamic random access memory (DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchronous link dynamic random access memory (synchlink DRAM, SLDRAM), and a direct rambus random access memory (direct rambus RAM, DR RAM).

All or some of the foregoing embodiments may be implemented using software, hardware (for example, circuit), firmware, or any combination thereof. When software is used to implement embodiments, the foregoing embodiments may be implemented completely or partially in a form of a computer program product. The computer program product includes one or more computer instructions or computer programs. When the computer instructions or the computer programs are loaded and executed on a computer, the procedures or functions according to embodiments of this application are completely or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, infrared, radio, and microwave, or the like) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), or a semiconductor medium. The semiconductor medium may be a solid-state drive.

In the specification, claims, and accompanying drawings of this application, the terms "first", "second", "third", and the like are intended to distinguish between different objects but do not limit a particular order.

It should be understood that the term "and/or" in this specification describes only an association relationship between associated objects and represents that three relationships may exist. For example, A and/or B may represent the following three cases: only A exists, both A and B exist, and only B exists. A and B may be singular or plural. In addition, the character "/" in this specification usually indicates an "or" relationship between the associated objects, but may also indicate an "and/or" relationship. For details, refer to the context for understanding.

In this application, at least one means one or more, and a plurality of means two or more. At least one of the following items (pieces) or a similar expression thereof indicates any combination of these items, including a single item (piece) or any combination of a plurality of items (pieces). For example, at least one item (piece) of a, b, or c may indicate: a, b, c, a and b, a and c, b and c, or a, b, and c, where a, b, and c may be singular or plural.

It should be understood that sequence numbers of the foregoing processes do not mean execution sequences in various embodiments of this application. The execution sequences of the processes should be determined according to functions and internal logic of the processes, and should not be construed as any limitation on the implementation processes of embodiments of this application.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief descriptions, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, or a network device) to perform all or some of the steps of the methods described in embodiments of this application. The foregoing storage medium includes any medium that can store program code, such as a USB flash drive, a removable hard disk, a ROM, a RAM, a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1. A positioning method, applied to a first device, wherein the method comprises:

   receiving a first receive-transmit time difference and a displacement vector of a second device, wherein the first receive-transmit time difference is a time difference between receiving time of a first reference signal and sending time of a second reference signal, the first reference signal is a reference signal of the first device received by the second device, the second reference signal is a reference signal sent by the second device, and the displacement vector of the second device is a displacement of the second device in a time period corresponding to the first receive-transmit time difference; and
   determining a location of the first device based on the first receive-transmit time difference, the displacement vector of the second device, and a second receive-transmit time difference, wherein the second receive-transmit time difference is a time difference between receiving time of a third reference signal and sending time of a fourth reference signal, the third reference signal is a reference signal of the second device received by the first device, and the fourth reference signal is a reference signal sent by the first device.

2. The method according to claim 1, wherein the determining a location of the first device based on the first receive-transmit time difference, the displacement vector of the second device, and a second receive-transmit time difference comprises:
   determining the location of the first device based on the first receive-transmit time difference, the displacement vector of the second device, the second receive-transmit time difference, and a displacement vector of the first device, wherein the displacement vector of the first device is a displacement of the first device in a time period corresponding to the second receive-transmit time difference.

3. The method according to claim 1 or 2, wherein the location of the first device is in a first area; and
   a shape of the first area is an ellipsoid or an ellipse, two focal points of the first area are head and tail endpoints of a first vector, a length of a major axis of the first area is a distance corresponding to a sum of the second receive-transmit time difference and the first receive-transmit time difference, and the first vector is a sum of the displacement vector of the first device and the displacement vector of the second device.

4. The method according to claim 3, wherein if there are N second devices, and N is an integer greater than 1, each second device corresponds to one second area, and the location of the first device is at an intersection point of the N second areas; and
   a shape of an $i^{th}$ second area corresponding to an $i^{th}$ second device in the N second devices is an ellipsoid or an ellipse, two focal points of the $i^{th}$ second area are head and tail endpoints of a second vector, a length of a major axis of the $i^{th}$ second area is a distance corresponding to a sum of the second receive-transmit time difference and a first receive-transmit time difference of the $i^{th}$ second device, and the second vector is a sum of the displacement vector of the first device and a displacement vector of the $i^{th}$ second device, wherein i is a positive integer, and i≤N.

5. The method according to claim 3 or 4, wherein the location of the first device is determined based on the first area and an angle of arrival of the first reference signal; and/or
the location of the first device is determined based on the first area and an angle of arrival of the third reference signal.

6. The method according to any one of claims 1 to 5, wherein the first receive-transmit time difference is a value obtained by performing a modulo operation of the difference between the receiving time of the first reference signal and the sending time of the second reference signal mod a first value; and the second receive-transmit time difference is a value obtained by performing a modulo operation of the receiving time of the third reference signal and the sending time of the fourth reference signal mod the first value.

7. A positioning method, applied to a second device, wherein the method comprises:

determining a first receive-transmit time difference and a displacement vector of the second device, wherein the first receive-transmit time difference is a time difference between receiving time of a first reference signal and sending time of a second reference signal, the first reference signal is a reference signal of a first device received by the second device, the fourth reference signal is a reference signal sent by the second device, and the displacement vector of the second device is a displacement of the second device in a time period corresponding to the first receive-transmit time difference; and
sending the first receive-transmit time difference and the displacement vector of the second device.

8. A positioning method, applied to a third device, wherein the method comprises:

receiving a second receive-transmit time difference of a first device, wherein the second receive-transmit time difference is a time difference between receiving time of a third reference signal and sending time of a fourth reference signal, the third reference signal is a reference signal of a second device received by the first device, and the fourth reference signal is a reference signal sent by the first device;
receiving a first receive-transmit time difference of the second device and a displacement vector of the second device, wherein the first receive-transmit time difference is a time difference between receiving time of a first reference signal and sending time of a second reference signal, the first reference signal is a reference signal of the first device received by the second device, the fourth reference signal is a reference signal sent by the second device, and the displacement vector of the second device is a displacement of the second device in a time period corresponding to the first receive-transmit time difference; and
determining a location of the first device based on the first receive-transmit time difference, the displacement vector of the second device, and the second receive-transmit time difference.

9. The method according to claim 8, wherein the determining a location of the first device based on the first receive-transmit time difference, the displacement vector of the second device, and the second receive-transmit time difference comprises:
determining the location of the first device based on the first receive-transmit time difference, the displacement vector of the second device, the second receive-transmit time difference, and a displacement vector of the first device, wherein the displacement vector of the first device is a displacement of the first device in a time period corresponding to the second receive-transmit time difference.

10. The method according to claim 8 or 9, wherein the location of the first device is in a first area; and a shape of the first area is an ellipsoid or an ellipse, two focal points of the first area are head and tail endpoints of a first vector, a length of a major axis of the first area is a distance corresponding to a sum of the second receive-transmit time difference and the first receive-transmit time difference, and the first vector is a sum of the displacement vector of the first device and the displacement vector of the second device.

11. The method according to claim 10, wherein if there are N second devices, and N is an integer greater than 1, each second device corresponds to one second area, and the location of the first device is at an intersection point of the N second areas; and a shape of an $i^{th}$ second area corresponding to an $i^{th}$ second device in the N second devices is an ellipsoid or an ellipse, two focal points of the $i^{th}$ second area are head and tail endpoints of a second vector, a length of a major axis of the $i^{th}$ second area is a distance corresponding to a sum of the second receive-transmit time difference and a first receive-transmit time difference of the $i^{th}$ second device, and the second vector is a sum of the displacement vector of the first device and a displacement vector of the $i^{th}$ second device, wherein i is a positive integer, and i≤N.

12. The method according to claim 10 or 11, wherein the location of the first device is determined based on the first area and an angle of arrival of the first reference signal; and/or

the location of the first device is determined based on the first area and an angle of arrival of the third reference signal.

13. The method according to any one of claims 8 to 12, wherein the first receive-transmit time difference is a value obtained by performing a modulo operation of the difference between the receiving time of the first reference signal and the sending time of the second reference signal mod a first value; and the second receive-transmit time difference is a value obtained by performing a modulo operation of the receiving time of the third reference signal and the sending time of the fourth reference signal mod the first value.

14. A positioning method, applied to a third device, wherein the method comprises:

receiving a first receive-transmit time difference of a second device and a displacement vector of the second device, wherein the first receive-transmit time difference is a time difference between receiving time of a first reference signal and sending time of a second reference signal, the first reference signal is a reference signal of a first device received by the second device, the fourth reference signal is a reference signal sent by the second device, and the displacement vector of the second device is a displacement of the second device in a time period corresponding to the first receive-transmit time difference; and sending the first receive-transmit time difference and the displacement vector of the second device to the first device.

15. A communication apparatus, wherein the communication apparatus comprises a processing module and a transceiver module;

the transceiver module is configured to receive a first receive-transmit time difference and a displacement vector of a second device, wherein the first receive-transmit time difference is a time difference between receiving time of a first reference signal and sending time of a second reference signal, the first reference signal is a reference signal of a first device received by the second device, the second reference signal is a reference signal sent by the second device, and the displacement vector of the second device is a displacement of the second device in a time period corresponding to the first receive-transmit time difference; and the processing module is configured to determine a location of the first device based on the first receive-transmit time difference, the displacement vector of the second device, and a second receive-transmit time difference, wherein the second receive-transmit time difference is a time difference between receiving time of a third reference signal and sending time of a fourth reference signal, the third reference signal is a reference signal of the second device received by the first device, and the fourth reference signal is a reference signal sent by the first device.

16. The communication apparatus according to claim 15, wherein the processing module is further configured to determine the location of the first device based on the first receive-transmit time difference, the displacement vector of the second device, the second receive-transmit time difference, and a displacement vector of the first device, and the displacement vector of the first device is a displacement of the first device in a time period corresponding to the second receive-transmit time difference.

17. The communication apparatus according to claim 15 or 16, wherein the location of the first device is in a first area; and a shape of the first area is an ellipsoid or an ellipse, two focal points of the first area are head and tail endpoints of a first vector, a length of a major axis of the first area is a distance corresponding to a sum of the second receive-transmit time difference and the first receive-transmit time difference, and the first vector is a sum of the displacement vector of the first device and the displacement vector of the second device.

18. The communication apparatus according to claim 17, wherein if there are N second devices, and N is an integer greater than 1, each second device corresponds to one second area, and the location of the first device is at an intersection point of the N second areas; and a shape of an $i^{th}$ second area corresponding to an $i^{th}$ second device in the N second devices is an ellipsoid or an ellipse, two focal points of the $i^{th}$ second area are head and tail endpoints of a second vector, a length of a major axis of the $i^{th}$ second area is a distance corresponding to a sum of the second receive-transmit time difference and a first receive-transmit time difference of the $i^{th}$ second device, and the second vector is a sum of the displacement vector of the first device and a displacement vector of the $i^{th}$ second device, wherein i is a positive integer, and i≤N.

19. The communication apparatus according to claim 17 or 18, wherein the location of the first device is determined based on the first area and an angle of arrival of the first reference signal; and/or the location of the first device is determined based on the first area and an angle of arrival of the third reference signal.

20. The communication apparatus according to any one of claims 15 to 19, wherein the first receive-transmit time difference is a value obtained by performing a modulo operation of the difference between the receiving time of the first reference signal and the sending time of the second reference signal mod a first value; and

the second receive-transmit time difference is a value obtained by performing a modulo operation of the receiving time of the third reference signal and the sending time of the fourth reference signal mod the first value.

21. A communication apparatus, wherein the communication apparatus comprises a processing module and a transceiver module;

the processing module is configured to determine a first receive-transmit time difference and a displacement vector of a second device, wherein the first receive-transmit time difference is a time difference between receiving time of a first reference signal and sending time of a second reference signal, the first reference signal is a reference signal of a first device received by the second device, the fourth reference signal is a reference signal sent by the second device, and the displacement vector of the second device is a displacement of the second device in a time period corresponding to the first receive-transmit time difference; and

the transceiver module is configured to send the first receive-transmit time difference and the displacement vector of the second device.

22. A communication apparatus, wherein the communication apparatus comprises a processing module and a transceiver module;

the transceiver module is configured to receive a second receive-transmit time difference of a first device, wherein the second receive-transmit time difference is a time difference between receiving time of a third reference signal and sending time of a fourth reference signal, the third reference signal is a reference signal of a second device received by the first device, and the fourth reference signal is a reference signal sent by the first device;

the transceiver module is further configured to receive a first receive-transmit time difference of the second device and a displacement vector of the second device, wherein the first receive-transmit time difference is a time difference between receiving time of a first reference signal and sending time of a second reference signal, the first reference signal is a reference signal of the first device received by the second device, the fourth reference signal is a reference signal sent by the second device, and the displacement vector of the second device is a displacement of the second device in a time period corresponding to the first receive-transmit time difference; and

the processing module is configured to determine a location of the first device based on the first receive-transmit time difference, the displacement vector of the second device, and the second receive-transmit time difference.

23. The communication apparatus according to claim 22, wherein the processing module is further configured to determine the location of the first device based on the first receive-transmit time difference, the displacement vector of the second device, the second receive-transmit time difference, and a displacement vector of the first device, and the displacement vector of the first device is a displacement of the first device in a time period corresponding to the second receive-transmit time difference.

24. The communication apparatus according to claim 22 or 23, wherein the location of the first device is in a first area; and

a shape of the first area is an ellipsoid or an ellipse, two focal points of the first area are head and tail endpoints of a first vector, a length of a major axis of the first area is a distance corresponding to a sum of the second receive-transmit time difference and the first receive-transmit time difference, and the first vector is a sum of the displacement vector of the first device and the displacement vector of the second device.

25. The communication apparatus according to claim 24, wherein if there are N second devices, and N is an integer greater than 1, each second device corresponds to one second area, and the location of the first device is at an intersection point of the N second areas; and

a shape of an $i^{th}$ second area corresponding to an $i^{th}$ second device in the N second devices is an ellipsoid or an ellipse, two focal points of the $i^{th}$ second area are head and tail endpoints of a second vector, a length of a major axis of the $i^{th}$ second area is a distance corresponding to a sum of the second receive-transmit time difference and a first receive-transmit time difference of the $i^{th}$ second device, and the second vector is a sum of the displacement vector of the first device and a displacement vector of the $i^{th}$ second device, wherein i is a positive integer, and i≤N.

26. The communication apparatus according to claim 24 or 25, wherein the location of the first device is determined based on the first area and an angle of arrival of the first reference signal; and/or the location of the first device is determined based on the first area and an angle of arrival of the third reference signal.

27. The communication apparatus according to any one of claims 22 to 26, wherein the first receive-transmit time difference is a value obtained by performing a modulo operation of the difference between the receiving time of the first reference signal and the sending time of the second reference signal mod a first value; and the second receive-transmit time difference is a value obtained by performing a modulo operation of the receiving time of the third reference signal and the sending time of the fourth reference signal mod the first value.

28. A communication apparatus, wherein the communication apparatus comprises a receiving module and a sending module;

the receiving module is configured to receive a first receive-transmit time difference of a second device and a displacement vector of the second device, wherein the first receive-transmit time difference is a time difference between receiving time of a first reference signal and sending time of a second reference signal, the first reference signal is a reference signal of a first device received by the second device, the fourth reference signal is a reference signal sent by the second device, and the displacement vector of the second device is a displacement of the second device in a time period corresponding to the first receive-transmit time difference; and the sending module is configured to send the first receive-transmit time difference and the displacement vector of the second device to the first device.

29. A communication system, comprising a first device and a second device;

the first device is configured to receive a first receive-transmit time difference and a displacement vector of the second device, wherein the first receive-transmit time difference is a time difference between receiving time of a first reference signal and sending time of a second reference signal, the first reference signal is a reference signal of the first device received by the second device, the second reference signal is a reference signal sent by the second device, and the displacement vector of the second device is a displacement of the second device in a time period corresponding to the first receive-transmit time difference; and the first device is further configured to determine a location of the first device based on the first receive-transmit time difference, the displacement vector of the second device, and a second receive-transmit time difference, wherein the second receive-transmit time difference is a time difference between receiving time of a third reference signal and sending time of a fourth reference signal, the third reference signal is a reference signal of the second device received by the first device, and the fourth reference signal is a reference signal sent by the first device.

30. The communication system according to claim 29, wherein the second device is configured to determine the first receive-transmit time difference and the displacement vector of the second device; and the second device is further configured to send the first receive-transmit time difference and the displacement vector of the second device.

31. The communication system according to claim 29 or 30, further comprising a third device;

the third device is configured to receive the first receive-transmit time difference of the second device and the displacement vector of the second device, wherein the first receive-transmit time difference is the time difference between the receiving time of the first reference signal and the sending time of the second reference signal, the first reference signal is the reference signal of the first device received by the second device, the fourth reference signal is the reference signal sent by the second device, and the displacement vector of the second device is the displacement of the second device in the time period corresponding to the first receive-transmit time difference; and the third device is further configured to send the first receive-transmit time difference and the displacement vector of the second device to the first device.

32. The communication system according to any one of claims 29 to 31, wherein the first device is further configured to determine the location of the first device based on the first receive-transmit time difference, the displacement vector of the second device, the second receive-transmit time difference, and a displacement vector of the first device, and the displacement vector of the first device is a displacement of the first device in a time period corresponding to the second receive-transmit time difference.

33. A communication system, comprising a first device, a second device, and a third device;

　　the third device is configured to receive a second receive-transmit time difference of the first device, wherein the second receive-transmit time difference is a time difference between receiving time of a third reference signal and sending time of a fourth reference signal, the third reference signal is a reference signal of the second device received by the first device, and the fourth reference signal is a reference signal sent by the first device;

　　the third device is further configured to receive a first receive-transmit time difference of the second device and a displacement vector of the second device, wherein the first receive-transmit time difference is a time difference between receiving time of a first reference signal and sending time of a second reference signal, the first reference signal is a reference signal of the first device received by the second device, the fourth reference signal is a reference signal sent by the second device, and the displacement vector of the second device is a displacement of the second device in a time period corresponding to the first receive-transmit time difference; and

　　the third device is further configured to determine a location of the first device based on the first receive-transmit time difference, the displacement vector of the second device, and the second receive-transmit time difference.

34. The communication system according to claim 33, wherein the second device is configured to determine the first receive-transmit time difference and the displacement vector of the second device; and the second device is further configured to send the first receive-transmit time difference and the displacement vector of the second device.

35. The communication system according to claim 33 or 34, wherein the first device is configured to determine the second receive-transmit time difference; and the first device is further configured to send the second receive-transmit time difference to the third device.

36. The communication system according to any one of claims 33 to 35, wherein the third device is further configured to determine the location of the first device based on the first receive-transmit time difference, the displacement vector of the second device, the second receive-transmit time difference, and a displacement vector of the first device, and the displacement vector of the first device is a displacement of the first device in a time period corresponding to the second receive-transmit time difference.

37. The communication system according to any one of claims 33 to 36, wherein the first device is further configured to determine the displacement vector of the first device, and the displacement vector of the first device is the displacement of the first device in the time period corresponding to the second receive-transmit time difference; and the first device is further configured to send the second receive-transmit time difference to the third device.

38. The communication system according to any one of claims 33 to 37, wherein the location of the first device is in a first area; and a shape of the first area is an ellipsoid or an ellipse, two focal points of the first area are head and tail endpoints of a first vector, a length of a major axis of the first area is a distance corresponding to a sum of the second receive-transmit time difference and the first receive-transmit time difference, and the first vector is a sum of the displacement vector of the first device and the displacement vector of the second device.

39. The communication system according to claim 38, wherein if there are N second devices, and N is an integer greater than 1, each second device corresponds to one second area, and the location of the first device is at an intersection point of the N second areas; and a shape of an $i^{th}$ second area corresponding to an $i^{th}$ second device in the N second devices is an ellipsoid or an ellipse, two focal points of the $i^{th}$ second area are head and tail endpoints of a second vector, a length of a major axis of the $i^{th}$ second area is a distance corresponding to a sum of the second receive-transmit time difference and a first receive-transmit time difference of the $i^{th}$ second device, and the second vector is a sum of the displacement vector of the first device and a displacement vector of the $i^{th}$ second device, wherein i is a positive integer, and i≤N.

40. The communication system according to claim 38 or 39, wherein the location of the first device is determined based on the first area and an angle of arrival of the first reference signal; and/or the location of the first device is determined based on the first area and an angle of arrival of the third reference signal.

41. The communication system according to any one of claims 33 to 40, wherein the first receive-transmit time difference is a value obtained by performing a modulo operation of the difference between the receiving time of the first reference signal and the sending time of the second reference signal mod a first value; and

the second receive-transmit time difference is a value obtained by performing a modulo operation of the receiving time of the third reference signal and the sending time of the fourth reference signal mod the first value.

42. A communication apparatus, comprising a processor and a memory, wherein when the processor executes a computer program or instructions in the memory, the method according to any one of claims 1 to 14 is enabled to be performed.

43. A computer-readable storage medium, comprising a computer program or instructions, wherein when the computer program or the instructions is/are run on a computer, the method according to any one of claims 1 to 14 is enabled to be performed.

44. A communication apparatus, comprising a processor, wherein the processor is configured to execute a computer program or instructions in a memory, so that the method according to any one of claims 1 to 14 is performed.

FIG. 1

FIG. 2

FIG. 3

FIG. 4

FIG. 5

FIG. 6

FIG. 7

FIG. 8

AMF/UPF  AMF/UPF

NG  NG  NG  NG

gNB

Xn

IAB-donor
(gNB)

NR Uu  F1

IAB-node

NR Uu  F1

IAB-node

(a)

MME/S-PGW  MME/S-PGW

S1  S1  S1  S1

S1-U

gNB

X2

MeNB

X2-C

IAB-donor
(gNB)

LTE
Uu  NR Uu  F1

LTE Uu

NR Uu  F1

IAB-node

IAB-node

(b)

FIG. 9

Satellite

Terminal
device

Network

Gateway

FIG. 10

Satellite 1          Satellite 2

Terminal
device

Network

Gateway

FIG. 11

1200

1201    1208    1203

Processor    Processor

CPU0    CPU0

CPU1    CPU1

1202

Memory

1204    1205    1206

Communication interface    Output device    Input device

FIG. 12

| First device | Second device | Third device |

S1301: Determine a first receive-transmit time difference and a displacement vector of the second device

S1302

S1302A: First receive-transmit time difference and displacement vector of the second device

S1302B: First receive-transmit time difference and displacement vector of the second device

S1302B: First receive-transmit time difference and displacement vector of the second device

S1303: Determine a location of the first device based on the first receive-transmit time difference, the displacement vector of the second device, and a second receive-transmit time difference

FIG. 13

□ UE1    ○ UE2

Displacement
situation of the UE2
relative to the UE1
→

FIG. 14

FIG. 15

FIG. 16

FIG. 17

| UE1 | UE2 |
|-----|-----|

S1801: Determine a first receive-transmit time difference and a displacement vector of the second device

S1802: First receive-transmit time difference and displacement vector of the second device

S1803: Determine a location of the first device based on the first receive-transmit time difference, the displacement vector of the second device, and a second receive-transmit time difference

FIG. 18

| UE1 | UE2/Access network device | LMF network element |
|-----|-----|-----|

S1901: Determine a first receive-transmit time difference and a displacement vector of the second device

S1902: First receive-transmit time difference and displacement vector of the second device

S1902: First receive-transmit time difference and displacement vector of the second device

S1903: Determine a location of the first device based on the first receive-transmit time difference, the displacement vector of the second device, and a second receive-transmit time difference

FIG. 19

| UE1 | Satellite | LMF network element |
|---|---|---|

S2001: Determine a first receive-transmit time difference and a displacement vector of the second device

S2002: First receive-transmit time difference and displacement vector of the second device

S2002: First receive-transmit time difference and displacement vector of the second device

S2003: Determine a location of the first device based on the first receive-transmit time difference, the displacement vector of the second device, and a second receive-transmit time difference

**FIG. 20**

| First device | Second device | Third device |
|---|---|---|

S2102: Determine a second receive-transmit time difference

S2101: Determine a first receive-transmit time difference and a displacement vector of the second device

S2103: First receive-transmit time difference and displacement vector of the second device

S2104: Second receive-transmit time difference

S2105: Determine a location of the first device based on the first receive-transmit time difference, the displacement vector of the second device, and the second receive-transmit time difference

**FIG. 21**

| UE1 | UE2 | LMF network element |
|---|---|---|

S2202: Determine a second receive-transmit time difference

S2201: Determine a first receive-transmit time difference and a displacement vector of the second device

S2203: First receive-transmit time difference and displacement vector of the second device →

S2204: Second receive-transmit time difference →

S2205: Determine a location of the first device based on the first receive-transmit time difference, the displacement vector of the second device, and the second receive-transmit time difference

FIG. 22

| UE1 | UE2/Access network device | LMF network element |
|---|---|---|

S2302: Determine a second receive-transmit time difference

S2301: Determine a first receive-transmit time difference and a displacement vector of the second device

S2303: First receive-transmit time difference and displacement vector of the second device →

S2304: Second receive-transmit time difference →

S2305: Determine a location of the first device based on the first receive-transmit time difference, the displacement vector of the second device, and the second receive-transmit time difference

FIG. 23

Communication apparatus 2400

Processing module

2401

Transceiver module

2402

FIG. 24

Communication apparatus 2500

Receiving module

2501

Sending module

2502

FIG. 25

## INTERNATIONAL SEARCH REPORT

| International application No. |
| --- |
| **PCT/CN2022/119719** |

**A.    CLASSIFICATION OF SUBJECT MATTER**

H04W 4/02(2018.01)i

According to International Patent Classification (IPC) or to both national classification and IPC

**B.    FIELDS SEARCHED**

Minimum documentation searched (classification system followed by classification symbols)

H04W; H04Q; H04L

Documentation searched other than minimum documentation to the extent that such documents are included in the fields searched

Electronic data base consulted during the international search (name of data base and, where practicable, search terms used)

CNPAT, CNKI, EPODOC, WPI, 3GPP: 矢量, 移动, lmf, tx, 位移, 往返时延, rx, 运动, 向量, 变化, 定位, difference, time, 收发时间差, 移位, 时间差, PRS, 定位参考信号, 多往返时延, vector, round-trip time, RTT, time difference, multi-RTT

**C.    DOCUMENTS CONSIDERED TO BE RELEVANT**

| Category* | Citation of document, with indication, where appropriate, of the relevant passages | Relevant to claim No. |
| --- | --- | --- |
| A | CN 113261331 A (QUALCOMM INC.) 13 August 2021 (2021-08-13) description, paragraphs [0086]-[0151] | 1-44 |
| A | CN 113347572 A (ZHONG CHUAN) 03 September 2021 (2021-09-03) entire document | 1-44 |
| A | CN 110692260 A (BEIJING DIDI INFINITY TECHNOLOGY AND DEVELOPMENT CO., LTD.) 14 January 2020 (2020-01-14) entire document | 1-44 |
| A | CN 104904287 A (HUAWEI TECHNOLOGIES CO., LTD.) 09 September 2015 (2015-09-09) entire document | 1-44 |
| A | US 2016095080 A1 (INTEL CORP.) 31 March 2016 (2016-03-31) entire document | 1-44 |
| A | WO 2021138127 A1 (QUALCOMM INC.) 08 July 2021 (2021-07-08) entire document | 1-44 |
| A | NOKIA et al. "Measurements for NR Positioning" *3GPP TSG RAN WG1 #98 R1- 1908348*, 30 August 2019 (2019-08-30), entire document | 1-44 |

☐ Further documents are listed in the continuation of Box C.      ☑ See patent family annex.

| | |
| --- | --- |
| *       Special categories of cited documents: | "T"    later document published after the international filing date or priority date and not in conflict with the application but cited to understand the principle or theory underlying the invention |
| "A"    document defining the general state of the art which is not considered to be of particular relevance | |
| "E"    earlier application or patent but published on or after the international filing date | "X"    document of particular relevance; the claimed invention cannot be considered novel or cannot be considered to involve an inventive step when the document is taken alone |
| "L"    document which may throw doubts on priority claim(s) or which is cited to establish the publication date of another citation or other special reason (as specified) | "Y"    document of particular relevance; the claimed invention cannot be considered to involve an inventive step when the document is combined with one or more other such documents, such combination being obvious to a person skilled in the art |
| "O"    document referring to an oral disclosure, use, exhibition or other means | |
| "P"    document published prior to the international filing date but later than the priority date claimed | "&"    document member of the same patent family |

| Date of the actual completion of the international search | Date of mailing of the international search report |
| --- | --- |
| **01 November 2022** | **28 November 2022** |

| Name and mailing address of the ISA/CN | Authorized officer |
| --- | --- |
| **China National Intellectual Property Administration (ISA/CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
**Information on patent family members**

International application No.

**PCT/CN2022/119719**

| Patent document cited in search report | | | Publication date (day/month/year) | Patent family member(s) | | | Publication date (day/month/year) |
|---|---|---|---|---|---|---|---|
| CN | 113261331 | A | 13 August 2021 | WO | 2020146829 | A1 | 16 July 2020 |
| | | | | US | 2020229125 | A1 | 16 July 2020 |
| | | | | KR | 20210116459 | A | 27 September 2021 |
| | | | | TW | 202034725 | A | 16 September 2020 |
| | | | | EP | 3909287 | A1 | 17 November 2021 |
| CN | 113347572 | A | 03 September 2021 | | None | | |
| CN | 110692260 | A | 14 January 2020 | TW | 201906464 | A | 01 February 2019 |
| | | | | WO | 2019000457 | A1 | 03 January 2019 |
| | | | | US | 2020132799 | A1 | 30 April 2020 |
| CN | 104904287 | A | 09 September 2015 | EP | 2952047 | A1 | 09 December 2015 |
| | | | | WO | 2014139446 | A1 | 18 September 2014 |
| | | | | US | 2014274149 | A1 | 18 September 2014 |
| | | | | IN | 201502586 | P3 | 03 June 2016 |
| US | 2016095080 | A1 | 31 March 2016 | CN | 106662634 | A | 10 May 2017 |
| | | | | CN | 114449653 | A | 06 May 2022 |
| | | | | EP | 3198897 | A1 | 02 August 2017 |
| | | | | JP | 2017527806 | A | 21 September 2017 |
| | | | | WO | 2016048509 | A1 | 31 March 2016 |
| | | | | HK | 1235863 | A0 | 09 March 2018 |
| WO | 2021138127 | A1 | 08 July 2021 | KR | 20220122626 | A | 02 September 2022 |
| | | | | TW | 202133638 | A | 01 September 2021 |
| | | | | IN | 202247031183 | A | 24 June 2022 |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202111144795X